# EUROPEAN PATENT SPECIFICATION

(11) **EP 3 987 501 B1**
(45) Date of publication and mention of the grant of the patent: **10.07.2024**
(21) Application number: 20827160.1
(22) Date of filing: 19.06.2020
(51) Int. Cl.: G08G 1/0968, H04W 4/40, H04W 4/44, G08G 1/16, H04W 4/02, H04W 4/06, H04W 4/46, G06Q 10/063, G06Q 10/08, G06Q 50/40, H04W 84/18

(54) **FOR ENABLING COLLECTIVE PERCEPTION IN VEHICULAR NETWORKS**
ZUR AKTIVIERUNG DER KOLLEKTIVEN WAHRNEHMUNG IN FAHRZEUGNETZWERKEN
ACTIVATION DE PERCEPTION COLLECTIVE DANS DES RÉSEAUX DE VÉHICULES

(30) Priority: 21.06.2019 US 201962865103 P; 01.04.2020 US 202063003839 P; 23.04.2020 US 202063014469 P
(43) Date of publication of application: 27.04.2022
(73) Proprietor: Intel Corporation, Santa Clara, CA 95054 (US)
(72) Inventor: JHA, Satish C., Portland, Oregon 97229 (US); SIVANESAN, Kathiravetpillai, Portland, Oregon 97229 (US); GOMES BALTAR, Leonardo, 80804 München (DE); ALVAREZ, Ignacio, Portland, Oregon 97229 (US); MERWADAY, Arvind, Portland, Oregon 97229 (US); SHARMA BANJADE, Vesh Raj, Portland, Oregon 97229 (US); MUECK, Markus Dominik, 82008 Unterhaching (DE); FOUAD, Yaser M., San Diego, California 92126 (US)
(74) Representative: Viering, Jentschura & Partner mbB Patent- und Rechtsanwälte
(86) International application number: PCT/US2020/038723
(87) International publication number: WO 2020/257642

(56) References cited:
- EP-A1- 4 147 215
- EP-B1- 2 780 871
- JP-A- 2008 294 740
- US-A1- 2008 040 023
- US-A1- 2018 051 998
- US-A1- 2019 129 014
- "Intelligent Transport Systems (ITS); Vehicular Communications; Basic Set of Applications; Analysis of the Collective Perception Service (CPS)", vol. WG ITS WG1 Application Requirements and Services, no. V0.0.15, 24 January 2019 (2019-01-24), pages 1 - 69, XP014335528, Retrieved from the Internet <URL:docbox.etsi.org/ITS/ITSWG1/70-Draft/WG183/ITS-00183v0015.docx> [retrieved on 20190124]
- INTEL CORPORATION (UK) LTD: "Enabling the Sharing of Layered Costmaps (Occupancy grid) in the Collective Perception Service (CPS)", vol. WG ITS WG1 Application Requirements and Services, 24 April 2020 (2020-04-24), pages 1 - 14, XP014367571, Retrieved from the Internet <URL:docbox.etsi.org/ITS/ITSWG1/05-CONTRIBUTIONS/2020/ITSWG1(20)000066r1_Enabling_the_Sharing_of_Layered_Costmaps__Occupancy_grid__in.docx> [retrieved on 20200424]

## Description

### RELATED APPLICATIONS

The present application claims priority to U.S. Provisional App. No. 62/865,103 filed on June 21, 2019, U.S. Provisional App. No. 63/003,839 filed on April 1, 2020, and U.S. Provisional App. No. 63/014,469 filed on April 23, 2020.

### TECHNICAL FIELD

Embodiments described herein generally relate to edge computing, network communication, and communication system implementations, and in particular, to connected and computer-assisted and/or autonomous driving vehicles, Internet of Vehicles (IoV), Intelligent Transportation System (ITS), and Internet of Things (IoT) technologies.

### BACKGROUND

Intelligent Transport Systems (ITS) comprise advanced applications and services related to different modes of transportation and traffic to enable an increase in traffic safety and efficiency, and to reduce emissions and fuel consumption. Various forms of wireless communications and/or Radio Access Technologies (RATs) may be used for ITS.

ITS includes Cooperative ITS such as the Collective Perception Service (CPS). CPS supports ITS applications in the road and traffic safety domain by facilitating information sharing among ITS stations. CPS reduces the ambient uncertainty of an ITS-S about its current environment, as other ITS-Ss contribute to context information. By reducing ambient uncertainty, it improves efficiency and safety of the ITS.

### BRIEF DESCRIPTION OF THE DRAWINGS

In the drawings, which are not necessarily drawn to scale, like numerals may describe similar components in different views. Like numerals having different letter suffixes may represent different instances of similar components. Some embodiments are illustrated by way of example, and not limitation, in the figures of the accompanying drawings in which:
Figures 1 and 2 illustrate example layered costmaps according to various embodiments.
Figures 3-7 illustrate example Collective Perception Message (CPM) structures according to various embodiments. Figures 8-9 illustrate example CPM procedures according to various embodiments.
Figure 10 shows an example station reference architecture according to various embodiments. Figure 11 shows an example CPS service functional architecture, according to various embodiments. Figure 12 shows an example object data extraction levels of the CP basic service, according to various embodiments. Figure 13 illustrates an example environment for incorporating and using the embodiments of the present disclosure. Figures 14 and 15 depict example components of various compute nodes in edge computing system(s).

### DETAILED DESCRIPTION

### I. COLLECTIVE PERCEPTION SERVICES (CPS) ASPECTS

The operation and control of vehicles is becoming more autonomous over time, and most vehicles will likely become fully autonomous in the future. Vehicles that include some form of autonomy or otherwise assist a human operator may be referred to as "computer-assisted or autonomous driving" vehicles. Computer-assisted or autonomous driving (C/AD) vehicles may include Artificial Intelligence (AI), machine learning (ML), and/or other like self-learning systems to enable autonomous operation. Typically, these systems perceive their environment (e.g., using sensor data) and perform various actions to maximize the likelihood of successful vehicle operation.

The Vehicle-to-Everything (V2X) applications (referred to simply as "V2X") include the following types of communications Vehicle-to-Vehicle (V2V), Vehicle-to-Infrastructure (V2I) and/or Infrastructure-to-Vehicle (I2V), Vehicle-to-Network (V2N) and/or network-to-vehicle (N2V), Vehicle-to-Pedestrian communications (V2P), and ITS station (ITS-S) to ITS-S communication (X2X). V2X applications can use co-operative awareness to provide more intelligent services for end-users. This means that entities, such as vehicle stations or vehicle user equipment (vUEs) including C/AD vehicles, roadside infrastructure or roadside units (RSUs), application servers, and pedestrian devices (e.g., smartphones, tablets, etc.), collect knowledge of their local environment (e.g., information received from other vehicles or sensor equipment in proximity) to process and share that knowledge in order to provide more intelligent services, such as cooperative perception, maneuver coordination, and the like, which are used for collision warning systems, autonomous driving, and/or the like. Although the embodiments herein are discussed in the context of automotive vehicles, the embodiments may also apply to other types of vehicles including, aircraft, watercraft, and/or the like.

One such V2X application include Intelligent Transport Systems (ITS), which are systems to support transportation of goods and humans with information and communication technologies in order to efficiently and safely use the transport infrastructure and transport means (e.g., automobiles, trains, aircraft, watercraft, etc.). Elements of ITS are standardized in various standardisation organisations, both on an international level and on regional levels.

Communications in ITS (ITSC) may utilize a variety of existing and new access technologies (or radio access technologies (RAT)) and ITS applications. Examples of these V2X RATs include Institute of Electrical and Electronics Engineers (IEEE) RATs and Third Generation Partnership (3GPP) RATs. The IEEE 802.11p RATs include, for example, the IEEE 802.11p protocol sometimes referred to as Wireless Acess in Vehicular Environments (WAVE), Dedicated Short Range Communication (DSRC), Intelligent Transport Systems in the 5 GHz frequency band (ITS-G5), and sometimes the IEEE 802.16 protocol referred to as Worldwide Interoperability for Microwave Access (WiMAX). The 3GPP RATs include, for example, cellular V2X (C-V2X) using Long Term Evolution (LTE) technologies (sometimes referred to as "LTE-V2X") and/or using Fifth Generation (5G) technologies (sometimes referred to as "5G-V2X"). Other RATs may be used for ITS and/or V2X applications such as RATs using UHF and VHF frequencies, Global System for Mobile Communications (GSM), and/or other wireless communication technologies.

ITS and/or V2X applications are used manage traffic flow, lane occupancy, toll collection, tracking freight, providing road condition alerts, providing dynamic/real-time maps (e.g., ITS Local Dynamic Map (LDM)), and the like. Many ITS applications rely on the concept of situation or co-operative awareness (CA). CA within road traffic means that road users and roadside infrastructure are informed about each other's position, dynamics and attributes. Road users include various users on or near a road that play a role in traffic safety and control, such as cars, trucks, motorcycles, bicycles or even pedestrians and roadside infrastructure equipment including road signs, traffic lights or barriers, gates, and the like. The awareness of each other is the basis for several road safety and traffic efficiency applications with many use cases as described in ETSI TR 102 638 V1.1.1 (2009-06) (hereinafter "[R00]"). CA is achieved by regular broadcasting of information among road users using one or more underlying access technologies or RATs to convey messages for CA.

The embodiments discussed herein generally relate to Collective Perception Service (CPS) to support applications in the domain of road and traffic safety. Collective Perception (CP) involves ITS-Ss sharing information about their current driving environment with one another. In contrast to CA, an ITS-S participating in CPS broadcasts information about its current (e.g., driving) environment rather than about itself. For this purpose, CPS involves different ITS-Ss actively exchanging locally perceived objects (e.g., other road participants, obstacles, and the like) detected by local perception sensors by means of one or more V2X RATs. CP decreases the ambient uncertainty of ITS-Ss by contributing information to their mutual Field-of-Views (FoVs). CPS also includes the syntax and semantics of Collective Perception Messages (CPMs), as well as the data and message handling functionalities to increase the awareness of the environment in a cooperative manner.

The embodiments discused herein enhances existing CPS by enabling sharing of perception information including multiple layers of a layered costmap, and/or raw sensor data of various sensors. The embodiments herein extend the existing CPS to enable layered costmap sharing, which may be useful for scenarios including the presence of a large number of obj ects or scenarios involving an occlusion of objects in the FoV of local sensors at the ITS-S. The CP of various costmap layers may enhance costmap quality at respective ITS-Ss. Disclosed embodiments also provide new costmap layers for the layered costmap approach to CPS. Some embodiments allow ITS-Ss to collectively improve or correct discrepancies in costmap values by collective coordination among ITS-Ss. All of these embodiments allow ITS-Ss to prepare a higher confidence costmap (as compared to existing costmap solutions) using the perception and analysis of one or more neighboring ITS-Ss.

The present disclosure also includes embodiments to reduce network/signaling overhead using more efficient mechanisms of exchanging CPMs. These embodiments include exchanging full CPMs over longer time periods, transmitting only partial/incremental CPMs in between full CPM transmissions, enabling unicast transmission of CPMs whenever possible such as for large amounts of data in a CPM, and handshake mechanisms before transmission of CPMs with a large amount of data making sure the large amount of data is useful for the receiver. Additionally, embodiments herein extend the existing CPS to enable group (or cluster) reporting of objects, which may provide further reductions in signaling overhead and further reductions in computational resource consumption. In these embodiments, objects beloning to a same class may be reported as a single entity/object when their locations within somee predefined or configured distance from one another and/or when these objects move in a same or similar direction. Other embodiments may be described and/or claimed.

### LA. LAYERED COSTMAP FOR CPS

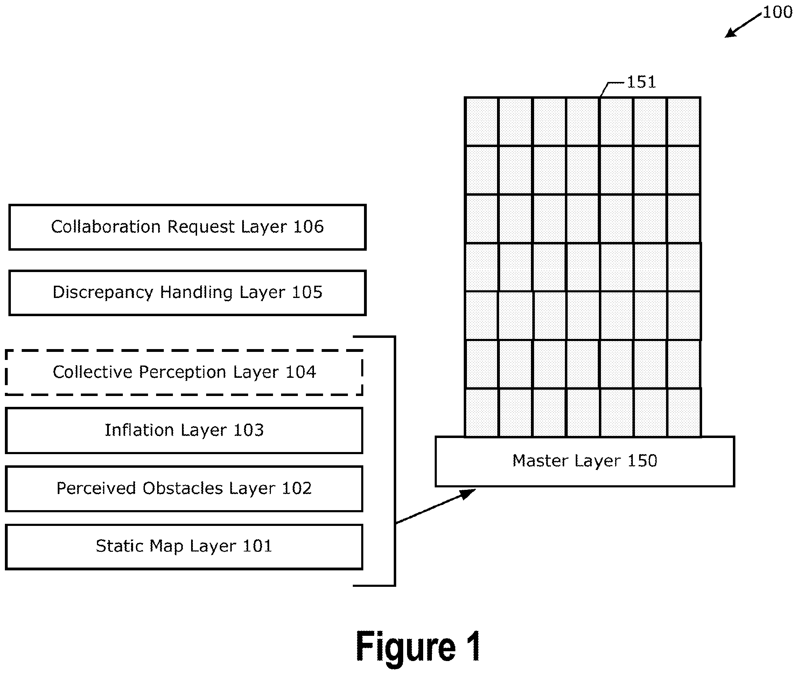

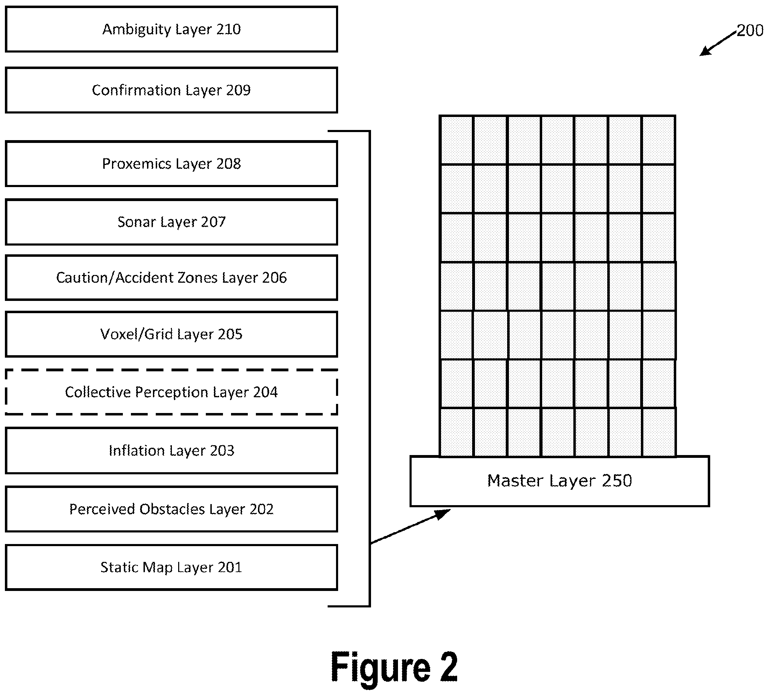

Figures 1 and 2 show example layered costmaps 100 and 200 for CP, according to various embodiments. A costmap (or "costmap") is a data structure that contains a two-dimensional (2D) grid of costs (or "cost values") that is/are used for path planning. The grid or cell values in the costmap are cost values associated with entering or traveling through respective grids or cells. Costmaps are used for navigating or otherwise traveling through dynamic environments populated with objects. In other words, the costmap 100 represents the planning search space around a C/AD vehicle, robot, drone, or other movable object.

For many use cases, such as C/AD vehicles and/or (semi-)autonomous robotics, the travel path not only takes into account the starting and ending destinations, but also depends on having additional information about the larger contexts. Information about the environment that the path planners use is stored in the costmap. Traditional costmaps (also referred to as "monolithic costmaps") store all of the data (costs) in a singular grid. A layered costmap (LCM), such as costmap 100, maintains an ordered list of layers, each of which tracks the data related to a specific functionality and/or sensor type. The data for each layer is then accumulated into a master costmap 150.

In some implementations, the state of each grid cell is one of free, occupied, or unknown. In these implementations, the cost value refers to a probability or likelihood that a given cell is free (unoccupied), occupied by an object, or unknown. In some implementations, the state of each grid cell may be one of safe, caution, or lethal to drive through the cell. In these implementations, the cost value refers to a probability or likelihood that a given cell is safe to drive through, lethal to drive through, or somewhere in between safe and lethal (i.e., caution). Additionally, the "costs" of the costmap can be a cost as perceived by the station at a current time and/or a cost predicted at a specific future time (e.g., at a future time when the station intends to move to a new lane under a lane change maneuver).

As mentioned previously, CPS involves ITS-Ss sharing perceived objects with other ITS-Ss. In the existing CPS solutions, each perceived object is reported as an individual object, which can be very inefficient in certain scenarios such as when there is a presence of a large number of objects, when there is are overlapping objects in a sensor FoV, and/or occlusion(s) in sensor FoV at an individual ITS-S. For example, reporting each individual perceived objects in case of large amounts of perceived objects creates huge communication overhead and also takes a longer time to report all of the perceived objects as each CPM can include limited number of perceived objects due to CPM size constraints. When a sensor FoV includes overlapped objects or occlusions, perception of all objects itself is challenging task.

Accordingly, CP layered costmaps (LCMs) 100 and 200 (or occupancy grids) are supported to assist with these challenging scenarios. The CP LCMs 100 and 200 are bandwidth and computationally efficient at least when compared to non-CP layered costmap and/or occupancy grid solutions. As discussed in more detail infra, these embodiments allow data containers of existing CPMs (e.g., Perceived Object Container and Free Space Addendum Container) to be replaced or complemented saving significant communication resources and significantly reducing signaling and processor overhead.

The "cost" or cost value in each cell of the costmaps 100 and/or 200 represents a cost of navigating through a that grid cell. In various embodiments, a *LayeredCostMapContainer* considers grid-based representation of a costmap where each cell carries a cost (or cost value) or a probability that specific types of obstacles, objects, and/or Vulnerable Road Users (VRU) is/are present in the cell. In some implementations, the state of each grid cell is one of free, occupied, or unknown. In these implementations, the cost value refers to a probability or likelihood that a given cell is free (unoccupied), occupied by an object, or unknown. In some implementations, the state of each grid cell may be one of safe, caution, or lethal to drive through the cell. In these implementations, the cost value refers to a probability or likelihood that a given cell is safe to drive through, lethal to drive through, or somewhere in between safe and lethal (i.e., caution). Additionally, the "costs" of the costmap can be a cost as perceived by the station at a current time and/or a cost predicted at a specific future time (e.g., at a future time when the station intends to move to a new lane under a lane change maneuver).

Referring now to Figure 1, which shows an example CP LCM 100 according to various embodiments. The CP LCM 100 maintains an ordered list of layers 101 to 106, each of which tracks data related to a specific functionality and/or sensor type. The data for some of the layers is then accumulated into the master costmap 150 (e.g., layers 101-104 in Figure 1). The CP LCM 100 also includes some layers that are not aggregated into a master layer 150 (e.g., layers 105 and 106 in Figure 1).

In the illustrated example, the LCM 100 initially has four layers 101-104 and the master costmap 150 ("master layer 150" in Figure 1). Each of the layers 101-104 maintain their own copies of the grid. In other implementations, the static map layer 101, obstacles layer 102, and CP layer 104 maintain their own copies of the grid while the inflation layer 103 does not. To update the costmap, an *updateBounds* method is called and performed on each layer 101-104, starting with the first layer in the ordered list (e.g., the static map layer 101) The *updateBounds* method polls each layer to determine how much of the costmap it needs to update. To determine the new bounds, the layers 101-103 update their own costmaps with new sensor data for local sensors implemented by an ITS-S, and the CP layer 104 obtains other CP LCMs 100 from other ITS-Ss. In some implementations, each layer uses a respective sensor data type, while in other embodiments, each layer may utilize multiple types of sensor data.

The result is a bounding box that contains all the areas that each layer 101-104 needs to update. The layers 101-104 are iterated over, in order, providing each layer with the bounding box that the previous layers need to update (initially an empty box). Each layer can expand the bounding box as necessary. This first pass results in a bounding box that determines how much of the master costmap needs to be updated.

Next, each layer 101-104 updates the master costmap 150, in turn, in the bounding box using an *updateValues* method, starting with the static map layer 101, followed by the obstacles layer 102, then the inflation layer, and then the CP layer 104. During this second pass, the *updateValues* method is called, during which each successive layer will update the values within the bounding box's area of the master costmap 150. In some implementations, the *updateValues* method operates directly on the master costmap 150 without storing a local copy. A "bounding box" is a 2D or three-dimensional (3D) box that surrounds a perceived object. A bounding box may enclose a grid or cell, multiple grids/cells, or portions of an individual grid/cell. The size of each bounding box may be based on the size of a percieved object that is enclosed by the bounding box. In various embodiments, each ITS-S prepares and updates more than one layer or types of costmaps. The layers are updated upwards from the static map layer 101 in the order shown by Figure 1. Different layers have different rates of change, and therefore, different layers are updated at different frequencies based on factors such as the speed of the vehicle, weather, environmental conditions, etc.

Additionally, the discrepancy handling layer 105 and the collaboration request layer 106 enable collaboration among neighbors to achieve better and reliable costmap layers. The discrepancy handling layer 105 determines and/or identifies discrepancies between the CP LCM 150 and other CP LCMs 150 received from neighbors. This may take place during the first and/or second passes discussed previously. The collaboration request layer 106 determines/identifies cells where on-board sensors cannot determine perception with a confidence level higher than a threshold, and requests the other layers to update their local version of the costmap and/or requests costmaps from neighboring ITS-Ss. This may take place during the first and/or second passes discussed previously. The confidence level represents a probability that a confidence interval contains a true (or relatively true) value of an unknown parameter of interest, and a confidence interval is a range of plausible values of an unkown parameter of interest. In embodiments, confidence levels may be applied to individual perceived objects. As an example, the sensor system of a V-ITS-S may provide sensor data for each detected object (and its attributes) along with a confidence level (e.g., 1-100%) of the detection/perception. Similarly, a cost of individual grids/cells of each layer may be associated with a confidence level.

In Figure 1, the LCM 150 includes a static map layer 101, a perceived obstacles layer 102, an inflation layer 103, and a collective perception layer 104. In this example, the static map layer 101, obstacles layer 102, and inflation layer 103 are mandatory layers. In other examples, the collective perception layer 104 could be mandatory. In either example, the other (non-mandatory) layers may be present depending on the capability of the ITS-S's hardware and software implementation. The master costmap 150 ("master layer 150" in Figure 1) is prepared from the other layers 101-104. The master layer 150 comprises an occupancy grid 151 with aggregated costs in each grid/cell (not shown by Figure 1).

The static map layer 101 is an occupancy grid that is predetermined *a priori* due to static objects on the road or along the road-side. The static map layer 101 includes cost values of various static and/or semi-static objects (e.g., roadside infrastructure, buildings, etc.), which is used for global planning. The static map can be generated with a simultaneous localization and mapping (SLAM) algorithm *a priori* or can be created from an architectural diagram. Since the static map is the bottom layer of the global LCM, the values in the static map may be copied into the master costmap directly. If the station or robot is running SLAM while using the generated map for navigation, the LCM approach allows the static map layer to update without losing information in the other layers. In monolithic costmaps, the entire costmap would be overwritten. The other layers of the LCM maintain costs due to dynamic objects, as well as safety and personal privacy requirements of these objects.

The perceived obstacles layer 102 includes an occupancy grid and cost values representing the obstacles (e.g., dynamic or static) on the road and road-side. The perceived obstacles layer 102 determines perceived objects that are obstacles to be considered during operation (e.g., during driving when the ITS-S is a vehicle ITS-S (V-ITS-S)). The perceived obstacles layer 102 collects data from high accuracy sensors such as lasers (e.g., LiDAR), Red Blue Green and Depth (RGB-D) cameras, and/or the like, and places the collected high accuracy sensor data in its own 2D grid. In some implementations, the space between the sensor and the sensor reading is marked as "free," and the sensor reading's location is marked as "occupied." The method used to combine the perceived obstacles layer's 102 values with those already in the costmap can vary depending on the desired level of trust for the sensor data and/or sensor type. In some implementations, the static map 101 data may be over-written with the collected sensor data, which may be beneficial for scenarios where the static map may be inaccurate. In other implementations, the obstacles layer can be configured to only add lethal or VRU-related obstacles to the master costmap 150.

The inflation layer 103 includes an occupancy grid and cost values representing a buffer zone around obstacles and permanent structures. The inflation layer 103 may provide a buffer zone around objects that may potentially move. The inflation layer 103 implements an inflation process to insert the buffer zone around lethal obstacles. Locations where the ITS-S would definitely be in collision are marked with a lethal cost, and the immediately surrounding areas have a small non-lethal cost. These values ensure that ITS-S does not collide with lethal obstacles, and attempts to avoid such objects. An *updateBounds* method increases the previous bounding box to ensure that new lethal obstacles will be inflated, and that old lethal obstacles outside the previous bounding box that could inflate into the bounding box are inflated as well.

The CP layer 104 includes an occupancy grid and cost values received from one or more neighbors, such as one or more neighboring or proximate ITS-Ss. These occupancy grids may be an accumulation of master costmaps 150 generated by other ITS-Ss. The CP layer 104 determines the costs of cells based on perceived objects indicated in CPMs received from neighbor stations. The CP layer 104 enables the ITS-S to update its costmap (e.g., master costmap 150) for the region where its own (on-board) sensors may not have a "good" view or any view.

The discrepancy handling layer 105 includes an occupancy grid and cost values showing the discrepancy between received cost values of other LCMs 100 and an ITS-S's own master layer 150. These discrepancies can be detected for any layer in the LCM 100. The discrepancy handling layer 105 enables indicating and resolving discrepancies in perception among neighbors. The discrepancy handling layer 105 can report discrepancies for selected grid cells for individual costmap layers. In some embodiments, a majority voting mechanism may be used for this purpose, where the cost value of each cell is agreed on by majority voting among participating ITS-Ss.

The collaboration request layer 106 includes an occupancy grid and cost values showing grids where an ego ITS-station could not determine the perception with a required confidence level. The collaboration request layer 106 enables the ego ITS-S to request neighbors to help enhancing the cost of some cells for which the Tx ITS-S does not have high confidence level to determine a value. The collaboration request layer 106 allows an ITS-S to request one or more neighbors (e.g., other ITS-Ss) to help to enhance the cost of some cells for which the station may not have high confidence levels to determine a cost value. One or more neighbors may include the perceived cost value (and other information like perceived object at these cells) in its CPM. If available, neighbors may respond by sending a unicast CPM in this case.

In some cases, vehicles in a proximity may observe different cost values for some cell(s) (e.g., due to sensing errors at one or more stations, different levels of angle of views of the sensors at vehicles to these cells, etc.). In such a scenario, CP can help in correcting any discrepancy in the costmap. The discrepancy handling layer 105 is to indicate discrepancy among cost values of neighbors. After receiving such indication of discrepancy in the discrepancy handling layer 105, nodes may reevaluate sensing and costmap calculations for these cells and share among neighbors. according to one or more of the following embodiments.

In a first embodiment cost discrepancies can be handled using a majority voting mechanism, where a cost value recieiving a majority vote is considered to be a "correct" or "agreed-to" cost. That is, the cost indicated by majority neighbors (or the average of nearby majority costs) is considered as a correct/agreed-to cost. Such an agreement is performed for each cell with discrepancy individually. All neighbors will update the correct/agreed cost. In these embodiments, the votes of neighbors can be skewed based on their trustworthiness and/or based on other criteria/parameters.

In a second embodiment cost discrepancies can be resolved based on an quality of sensing capabilities or sensor data, where a neighbor having a better FoV, angle of view (AoV), quality of data, etc., can be given more weight(s) to select correct/agreed cost for a cell. These embodiments may be combined or used individually.

Referring now to Figure 2, which shows an example CP LCM 200 according to various embodiments. The CP LCM 200 maintains an ordered list of layers 201 to 210, each of which tracks data related to a specific functionality and/or sensor type in a same or similar manner as the CP LCM 100 of Figure 1. The data for some of the layers is then accumulated into the master costmap 250 (e.g., layers 201-208 in Figure 2). The CP LCM 200 also includes some layers that are not aggregated into a master layer 250 (e.g., layers 209 and 210 in Figure 2).

In Figure 2, the static map layer 201, the perceived obstacles layer 202, the inflation layer 203, and the collective perception layer 204 may be the same or similar as the static map layer 101, the perceived obstacles layer 102, the inflation layer 103, and the collective perception layer 104 in Figure 1, respectively.

The Voxel/Grid Layer 205 includes an occupancy grid and cost values representing the obstacles (e.g., dynamic or static) on the road and road-side in three-dimensions (3D). This 3D voxel grid allows for more intelligent clearing of obstacles to reflect the multiple heights at which they can be seen (see e.g., Marder-Eppstein et al.,"The Office Marathon: Robust Navigation in an Indoor Office Environment", IEEE Int'l Conference on Robotics and Automation (ICRA), pp. 300-307 (03 May 2010)).

Caution Zones/Accident Prone Area Layer 206 includes an occupancy grid and cost values representing detected caution zones and/or accident prone areas or objects (or areas around objects). The Caution Zones/Accident Prone Area Layer 206 layer provides the ability to specify areas of the perceived environment with greater detail than using the free/occupied classifications discussed previously. This layer may be used to restrict V-ITS-Ss from traveling through areas, despite appearing navigable (e.g., being indicated as "free"), by marking this areas as "restricted" or the like. This layer also provides the ability to mark zones that are not necessarily forbidden, but not desirable for vehicles to travel through.

Sonar Layer 207 includes an occupancy grid and cost values representing detected objects and/or a perceived environment using sonar sensors and related circuitry. This layer may be used to detect transparent objects (e.g., glass structures) that may be undetectable using other sensors (e.g., LiDAR or the like). The sonar layer 207 can also be used to treat sonar sensor data differently than sensor data obtained at the perceived obstacles layer 202. In one example, the sonar layer 207 may implement a probabilistic sonar model and update the costmap using Bayesian logic. This approach may allow the semantic meanings of the probabilities to be maintained without having to directly combine them with the costs.

The proxemics layer 208 may be used to detect objects and/or spaces surrounding individual objects (e.g., VRUs or the like). The proxemics layer 208 may also collect data from high accuracy sensors such as lasers (e.g., LiDAR), RGB-D cameras, etc. In some implementations, the proxemics layer 208 may use lower accuracy cameras or other like sensors. The proxemics layer 208 may use the same or different sensor data or sensor types as the perceived obstacles layer 202. The proxemics layer 208 uses the location/position and velocity of detected objects (e.g., extracted from the sensor data representative of individual VRUs) to write values into the proxemics layer's 208 costmap, which are then added into the master costmap 250 along with the other layer's 201-207 costmap values. In some implementations, the proxemics layer 208 uses a mixture of Gaussians models and writes the Gaussian values for each object into the proxemics layer's 208 private costmap. In some implementations, the generated values may be scaled according to the amplitude, the variance, and/or some other suitable parameter(s).

The confirmation layer 209 determines and specifies any discrepancy between costmaps received from one or more neighbors with that indicated by the master layer 250 or otherwise perceived using local sensors. The ambiguity layer 210 specifies cells where on-board sensors cannot determine perception with a confidence level higher than a threshold value. The confirmation layer 209 and the ambiguity layer 210 in Figure 2 may be the same or similar as the discrepancy handling layer 105 and the collaboration request layer 106 in Figure 1, respectively, and as such, may incorporate the same or similar functionality as those layers.

### I.B. LAYERED COSTMAP SHARING TECHNIQUES FOR CPS

CA is based on periodic and event-driven broadcast of basic safety messages (BSM) between vehicles. BSMs are relatively short messages that may be communicated within relatively short intervals. The BSMs may be useful for identifying and notifying vehicle operators of situations that may require vehicle operator action, for example, collision warnings, emergency warnings, pre-crash warnings, traffic warnings, and the like.

Moreover, some vehicles, such as C/AD vehicles, employ in-vehicle (or on-board) sensors for detecting objects and/or advanced driver assistance systems (ADAS). The object detection sensors may be line-of-sight (LoS) sensors including, for example, LIDAR, image capture devices (e.g., cameras), radar, sonar, and the like. LoS sensors are often employed in vehicles for sensing a surrounding environment for navigation and path planning applications. ADAS employ LoS sensors, to detect objects immediately around a vehicle to about 200 meters. These vehicles may include one or more LoS sensors mounted in the vehicle or on various locations of the vehicle, wherein each LoS sensor may provide corresponding sensor data to a vehicle operator to assist the vehicle operator in operating the vehicle. However, these sensor systems are typically limited by the field of view (FoV) of each sensor, which is dependent on the orientation and positioning of such sensors on or in the vehicle. Additionally, the FoV of one or more sensors may be blocked by other objects during operation and/or may be negatively affected by adverse weather and environmental conditions. Extending the range, FoV, and/or other capabilities of on-board sensors in vehicles should improve the efficiency and safety when operating such vehicles.

The present disclosure provides various message types, message content, and message exchange procedures to enable efficient sharing of local sensor data including raw sensor data, perceived objects, and/or perceived layered costmaps (see e.g., Figures 1 and 2 discussed supra) among neighboring or proximate vehicles with lower/reduced network/signaling overhead than existing solutions. The embodiments herein provide technologies for C/AD vehicles to adopt collaborative/collective environment perception, and extends the range and accuracy of perception beyond a particular vehicle's local sensing capabilities. The embodiments herein may allow vehicles with legacy sensors (which may be less reliable, cheaper, and/or older models of such sensors) to achieve high quality environment perception; (ii) extend the perception range/coverage and quality in case of adverse road conditions and bad weather; (iii) perceive obstructed (occluded) road areas; and so on. The embodiments herein also allow sharing of perceived status information collected by vehicles equipped with different types of sensors to complete (or complement) each other and enhance the confidence level or quality of perception. CP also increases the perception confidence by sharing information of their mutual FoVs.

In the present disclosure, the terms "Collective Perception" and "Collaborative Perception" may be used interchangeably. In the embodiments discussed infra, a suitable data and/or object perception fusion algorithm may be used. This fusion algorithm may be an efficient mechanism whereby vehicles ITS-Ss can perform datalobject perception fusion based on local/on-board sensor data and perception data (e.g., received from neighboring vehicles under CP sharing by V2X RATs)

As alluded to previously, the current CPS standards provide syntax and semantics for CPMs and specify the data and message handling procedures to increase the awareness of the environment in a cooperative manner. CPMs are broadcast in the ITS network between ITS-Ss to share the presence of road users (e.g., VRUs) and other objects that have been detected and recognized by ITS-Ss. A CPM contains externally observable information about perceived objects. However, current CPS requires reporting each perceived object as a separate object or in an individual CPM. The current CPS also specifies selected redundancy mitigation techniques to reduce duplication of CPM content sent by different ITS-Ss by checking CPMs sent by other stations.

In the existing CPS standards, such as ETSI TS 103 324 V0.0.15 (2020-02) (hereinafter "[R01]"), each perceived object is reported as an individual object, which in certain scenarios can be inefficient in terms of signaling resource consumption, signaling congestion, and the like. Such scenarios may include, for example, when there is a presence of a large number of objects, one or more objects overlapping in a sensor's FoV, and/or occlusion(s) of objects in a sensor's FoV. For example, reporting each individual perceived object where there are a large amount of perceived objects creates a large amount communication overhead and also takes longer time to report all perceived objects as each CPM can include limited number of perceived objects due to CPM size constraints. In case of overlapped objects or occlusions in sensor FOV, perception of all objects itself is challenging task.

There is currently ongoing work in ETSI to enable CPS for ITS, which provides basic functionalities to share sensing capabilities and perceived objects among proximate V-ITS-Ss (see e.g., [R01]). Current solutions provide broadcast based CPM sharing, which can be expensive in terms of network overhead and resource consumption. Current CPS solutions lack reporting mechanisms for a perceived environment in an efficient manner in terms of communication overhead, signaling and processor resources, spectrum crowding/congestion, and the like.

Accordingly, embodiments herein provide layered costmap based CPS (see e.g., Figures 1 and 2) to assist with CP, such as where there are a large number of objects, overlapping objects, and/or occlusions in sensor FoV. In such situations, a layered costmap or an occupancy grid based CPS may be bandwidth and computationally efficient at least when compared to non-layered costmap and/or occupancy grid CPS solutions.

The embodiments herein extend the existing CPS and CPMs to enable layered costmap sharing among ITS-Ss. The embodiments may be beneficial for scenarios involving the presence of a large number of objects, overlapping view of objects, and/or occlusions in sensor FoV. The embodiments herein involve message exchanges among nodes, such as CPM exchanges among various V-ITS-S, roadside ITS-S (R-ITS-S), and/or VRU devices/systems. Such embodiments may replace or complement Perceived Object Containers and Free Space Addendum Containers in existing CPMs saving significant communication resources and significantly reducing signaling and processing resource consumption/overhead. The embodiments herein can also be adopted in cellular standards such as ETSI and/or 3GPP. The embodiments herein enable collective perception among proximity (proximate) vehicles for efficient, safe and coordinated autonomous driving environment.

### I.B.1. EXAMPLE CPMSTRUCTURESAND FORMATS

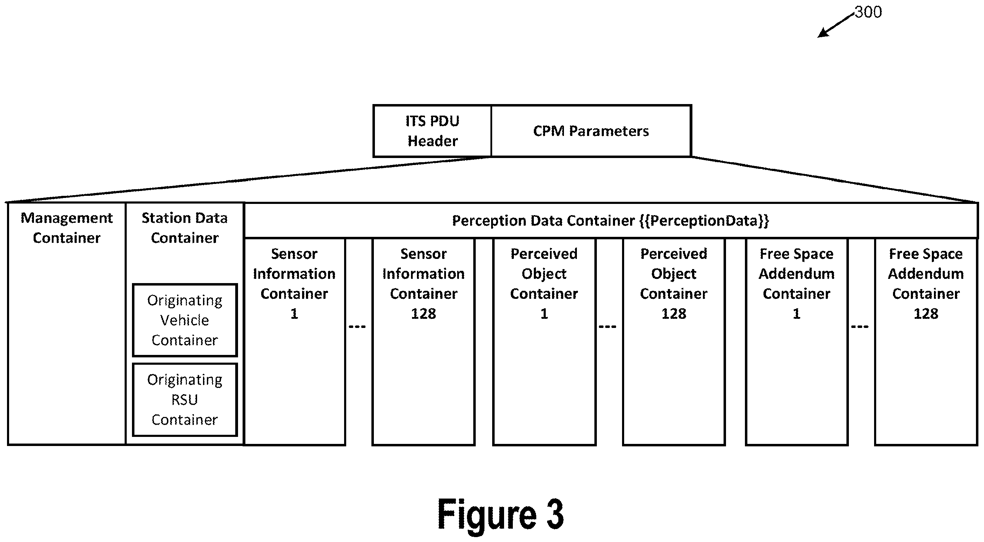

Referring now to Figure 3, which shows an example structure/format of a CPM 300. The CPM 300 allows ITS-Ss CP information data including sensor information, perceived objects, and the like. The CPM 300 comprises a common ITS Protocol Data Unit (PDU) header and CPM parameters. The ITS PDU header is a common header that includes information of the CPM protocol version (*protocolVersion*), message type identifier (*messageID*), and a station identifier (*stationID*) of the originating ITS-S (e.g., a transmitting/transmitter (Tx) ITS-S). The *protocolVersion* data element (DE) is used to select the appropriate protocol decoder at the receiving (Rx) ITS-S. The ITS PDU header is included as specified in ETSI TS 102 894-2 V1.3.1 (2018-08) (hereinafter "[R03]"). Detailed data presentation rules of the ITS PDU header in the context of a CPM are specified in ETSI TR 103 562 V2.1.1 (2019-12) (hereinafter "[R02]").

The CPM parameters comprises multiple containers. Current ETSI standards (e.g., [R01]) may define various containers as comprising a sequence of optional or mandatory data elements (DEs) and/or data frames (DFs). However, it should be understood that the requirements of any particular standard should not limit the embodiments discussed herein, and as such, any combination of containers, DFs, DEs, values, actions, and/or features are possible in various embodiments, including any combination of containers, DFs, DEs, values, actions, and/or features that are strictly required to be followed in order to conform to such standards or any combination of containers, DFs, DEs, values, actions, and/or features strongly recommended and/or used with or in the presence/absence of optional elements. The DEs and DFs included in the CPM format are based on the ETSI Common Data Dictionary (CDD) [R03] and/or makes use of certain elements defined in CEN ISO/TS 19091 (hereinafter "[R04]").

The management container provides basic information about the originating ITS-S, regardless of whether it is a vehicle (e.g., a V-ITS-S) or RSU type station (e.g., R-ITS-S). Regardless of which type of ITS-S disseminates a CPM, the Management Container provides information regarding a Station Type (*stationType*) of the originating ITS-S (see e.g., [R03]) and a Reference Position of the originating ITS-S. The Reference Position is used for referencing objects relative to a provided global position. For vehicles, the reference point refers to the ground position of the center of the front side of the bounding box of the vehicle. For RSUs, the reference point refers to an arbitrary position on a road segment or intersection. This point is used to determine the offset to other data points, as detailed in [R04]. The reference point to be provided is detailed in sections 5.4.1 and 5.4.2 of [R02]. The Management Container may also include an action ID, which is used for message fragmentation.

The total number of perceived objects is provided in the variable *numberOfPerceivedObjects.* Due to the message generation rule and the associated object inclusion scheme, the number of reported objects does not have to match up with the number of included objects of a received CPM. A receiving ITS-S does not assume that because the number of provided *PerceivedObjects* in the Perceived Object container has to include all objects that are known to the transmitter and selected for sharing via CPM. The receiver listens for further CPMs from the same transmitter for at least one second until all objects have been received.

The Station Data Container provides more specific information about the originating ITS-S in addition to the common information provided by the Management Container. This frame distinguishes two cases with respect to the disseminating ITS-S type. The originating station can be a vehicle or moving ITS-S (e.g., a V-ITS-S) with attributes listed in the Originating Vehicle Container or a stationary ITS such as an RSU (e.g., R-ITS-S) with parameters presented in the Originating RSU Container.

When the CPM is generated by a V-ITS-S, the Station Data Container contains the dynamic information of the originating ITS-S. The Originating Vehicle Container comprises information about the dynamics of the vehicle disseminating the CPM, and is included in every CPM transmitted by a vehicle originating station ITS-S. Such information is used to transform objects described in the Perceived Object Container of the same CPM into a target reference frame, such as a vehicle centered coordinate system as detailed in [R01], [R02], and ISO 8855 (11/2013) (hereinafter "[R06] ").

When the CPM is generated by an R-ITS-S, the Station Data Container contains the Originating RSU Container, which includes two parameters to reference information received by the map data (MAP) message [R04]. These references may be made to identification numbers provided by the MAP message [R04] disseminated by the same RSU. These references are used to match data provided by the CPM to the geometry of an intersection or road segment as provided by the MAP message. It is not required that a RSU has to transmit a MAP message for matching objects to road geometries. In this case, the Station Data Container may be omitted.

The Sensor Information Container allows the ITS-S to provide information about the sensory capabilities of an ITS-S. The sensor information container lists information for individual sensor(s) that are mounted in or on an ITS-S to perform measurements in order to eventually extract object information. Depending on the station type of the originating ITS-S, different container specifications are available to encode the properties of a sensor.

The Sensor Information Container type offers the possibility to provide descriptive information about the sensory properties of a disseminating ITS-S. Every described sensor is provided a pseudonym id which is in turn utilized in the Perceived Object Container to relate measured object information to a particular sensor. Additionally, each provided sensor information DF is accompanied by a sensor categorization to indicate the type of the perception system. This can be a specific sensor type such as a radar or lidar sensor up to a system providing fused object information from multiple sensors. As different sensor types may be attached to an ITS-S (e.g., radar, lidar, combined sensor fusion system and the like), this container provides different possibilities for describing the properties of a sensor-system. A *vehicleSensor* type description provides information about sensors mounted to vehicles. The properties of these perception systems are defined by providing the mounting position of a sensor with respect to a specific reference point on the vehicle. The range and horizontal as well as vertical opening angles may be provided to describe the sensor's frustum. In case a sensor has multiple detection areas, such as a combined long- and mid-range sensor, up to ten perception areas for a sensor can be encoded. The provided offset from a reference point on the vehicle serves as the origin of a sensor-specific local Cartesian coordinate system. The Sensor Information Containers are attached at a lower frequency than the other containers (see e.g., [R01], [R02]). Up to ten containers of this type may be added.

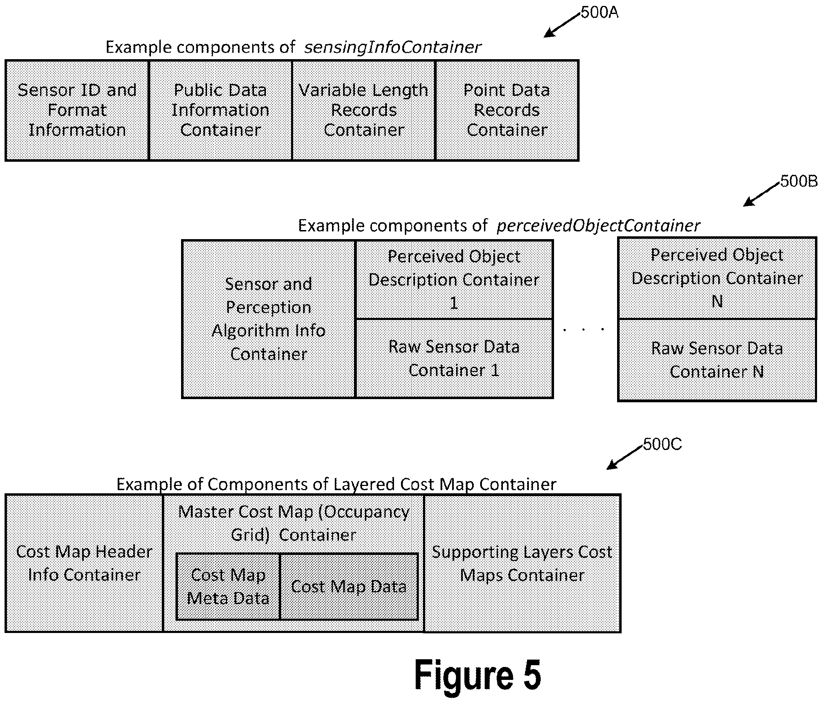

Figure 5 shows example of Sensor Information Container components 500A according to various embodiments. In this example, the Sensor Information Container (*sensingInfoContainer*) in the CPM 300 of Figure 3 may include one or more of the Sensing Information Container components 500A. The *sensingInfoContainer* provides shared (raw) data and description of the shared data. As shown by Figure 5, the *sensingInfoContainer* may include a Sensor ID and Format information (sub)container, a Public Data Information (sub)container, aVariable Length Records (sub)container, and/or a Point Data Records (sub)container.

Referring back to Figure 3, a Perceived Object Container may be added for every object that has been perceived by an ITS-S. The Perceived Object Container provides information about a detected object with respect to the disseminating ITS-S. Classifications and positions matched to road data can also be provided. This container type is added if objects have been detected according to the inclusion rules defined in [R06]. The information regarding the location and dynamic state of the perceived object are provided in a coordinate system as specified by [R06]. The Perceived Object Container of type *PerceptionData* can be added for every object that has been perceived by an ITS-S (e.g., up to a maximum of 128). The Perceived Object Container of type *PerceptionData* provides information about the detected object with respect to the disseminating ITS-S.

Every object has to be described by at least providing the distance and speed in the x/y plane of the respective coordinate system with respect to a station's reference point, for the case of a vehicle as disseminating ITS-S. The reference point of a measurement is also provided as part of the message. When an R-ITS-S is disseminating the CPM, the reference position refers to the reference position as defined in [R04] (e.g., an arbitrary point on the intersection). A time of measurement is provided for each object, which is the time difference for the provided measurement information with respect to the generation delta time (*GenerationDeltaTime*) stated in the management container (see e.g., section 6.3 of [R02]). Furthermore, an *objectID* is assigned to each detected object (see e.g., section 6.6 of [R02]). This ID is taken from a range of monotonously increasing numbers and is maintained per object, as long as an object is perceived and new sensor measurements are assigned to the object. The range of possible objectIDs is between 0 and 255. As soon as *objectID* 255 has been assigned to an object, the next object gets assigned ID 0 in a round-robin fashion.

A time of measurement is also provided for each object as the time difference for the provided measurement information with respect to the generation delta time stated in the management container. The time of measurement is relative to the *GenerationDeltaTime* encoded in the message (CPM) (e.g, in a *generationDeltaTime* DE) and a timestamp that corresponds to a time when the state space information about a detected object is made available. The *GenerationDeltaTime* corresponds to the latest point in time when the latest reference position is available on the transmitting side. Upon receiving the message, the Rx computes its own local *GenerationDeltaTime* based on its current absolute timestamp. The difference between the encoded *GenerationDeltaTime* in the received CPM and the local *GenerationDeltaTime* then represents the age of the CPM. The received encoded Time of Measurements (ToMs) is then added to the age of the CPM to compute the age of the encoded object. Positive ToMs indicates that the ToM needs to be added to the message age on the Rx side, as the state space of the object has been created before the Tx's *GenerationDeltaTime* and is therefore older. Negative ToMs indicate that the time of measurement needs to be subtracted from the age of the CPM, as the state space of the described object has been determined after the Tx's *GenerationDeltaTime* has been created. The ToM includes any processing time of a sensor or data fusion system. In case the fused object state information is transmitted, the ToM references the point in time to which the state space has been predicted.

Several other fields are also available to provide a more detailed description of a perceived object. For example, Distance, Speed and Acceleration values may be provided in three dimensions along with a yaw angle of the object. Furthermore, a 3D description of an object's geometric extension can be provided. Additionally, an R-ITS-S may be able to provide a map-matching result for a particular object with respect to the MAP information. Additionally, a field for the classification of each object may also be included, which may allow for multi-dimensional classification and confidences. Each class may be detailed by providing applicable subclasses for each object with subclass confidences.

Figure 5 shows example Perceived Objects Container components 500B according to various embodiments. In this example, the Perceived Object Container *(perceivedObjectContainer*) in the CPM 300 of Figure 3 may include the Perceived Objects Container components 500B. The *perceivedObjectContainer* provides a list of objects identified from on-board sensors (e.g., LiDAR, camera, and/or other sensor types). Perceived object(s) extracted from onboard/local sensor data (and sensor data received from neighbors) may also be included.

As shown by Figure 5, the *perceivedObjectContainer* includes a Sensor and Perception Algorithm Info (sub)container, and 1 to N (where N is a number) Perceived Object Description Containers that describe respective perceived objects. Here, the Perceived Object Description Container 1 carries a description of a first perceived object, and the Perceived Object Description Container N carries a description of an Nth perceived object. The Sensor and Perception Algorithm Info (sub)container indicates the type(s) of on-board/local sensors employed by an ITS-S and the perception algorithm(s) used by the ITS-S to perceive the objects 1-N and provide the respective descriptions in the respective 1-N Perceived Object Description Containers. Additionally, *perceivedObjectContainer* may include 1-N Raw Sensor Data Containers (where N is a number) that correspond to a Perceived Object Description Container. For example, the Raw Sensor Data Container 1 may carry the raw sensor data used to detect the perceived object described in the Perceived Object Description Container 1, and the Raw Sensor Data Container N may carry the raw sensor data used to detect the perceived object described in the Perceived Object Description Container N.

Referring back to Figure 3, the Free Space Addendum Container can be attached to express different confidence levels for certain areas within the *DetectionArea* of a particular sensor. This container only needs to be added if the confidence indication needs to be altered with respect to the isotropic confidence level indication provided in the *SensorInformationContainer.* As such, the Free Space Addendum Container can be interpreted even if a received CPM does not contain the *SensorInformationContainer.* This can be the case when a sensor cannot utilize its entire *DetectionArea* to reliably provide a free space indication, or in case the shadowing model detailed in clause 6.5 of [R02] does not apply for a particular object (e.g., in case of a radar sensor measuring two vehicles driving behind each other).

There are two possible applications of the free space addendum container. For example, an isotropic free space having a first confidence level (l₁) is provided in the *SensorInformationContainer.* The first confidence level (l₁) does not apply to the entire *DetectionArea* of the sensor (e.g., an FoV). Instead, part of the computed shadowed area behind an object has a different free space confidence of a second confidence level (l₂) (e.g., as a result of sensor fusion processes). The area having a second confidence level (l₂) is provided in a *FreeSpaceArea* DF as part of a *FreeSpaceAddendum* container (e.g., FreeSpaceAddendumContainer_1 where shadowingApplies: False). Additionally, the sensor system is only able to provide a free space confidence indication for a confined area within its *DetectionArea* (e.g., FoV). A third confidence level (l₃) is applied to an area beyond the *DetectionArea* (e.g., FoV), which is provided in an additional *FreeSpaceAddendum* container (e.g., FreeSpaceAddendumContainer_2 where shadowingApplies: True).

The *shadowingApplies* DE of the *FreeSpaceAddendum* container is used to indicate if the tracing approach to compute the shadowed area behind objects also applies for the areas described in the *FreeSpaceAddendum* container. When a Tx ITS-S also provides its own dimensions, the area occupied by the Tx ITS-S is considered as occupied. Information about the geometric dimensions of a Tx ITS-S may be provided in the CPM or additional transmitted messages such as the CAM.

The order of provided *FreeSpaceAddendum* containers for each sensor in a CPM overwrites the confidence level indication of an overlapping *FreeSpaceAddendum* container of the same sensor in an ascending fashion. For example, if a confidence level indication l₃ overlaps the confidence levels l₁ (e.g., from the *SensorInformationContainer*) and l₂ (e.g., from the first *FreeSpaceAddendum* container), and therefore, represents the dominating confidence level indication within the prescribed area.

A *FreeSpaceAddendumContainer* with confidence value of 0 may be located partially outside of the *detectionArea.* By providing a *FreeSpaceAddendum* container outside of the *detectionArea,* simpler shapes for the *FreeSpaceArea* may be leveraged to decrease the message size. The mandatory *freeSpaceConfidence* DE of the *FreeSpaceAddendum* container expresses the free space confidence that applies to the area provided in the *freeSpaceArea* DF. A list of *sensorIds* links to the corresponding *sensorInformationContainer* and may be provided to indicate which sensor provided the corresponding free space confidence indication.

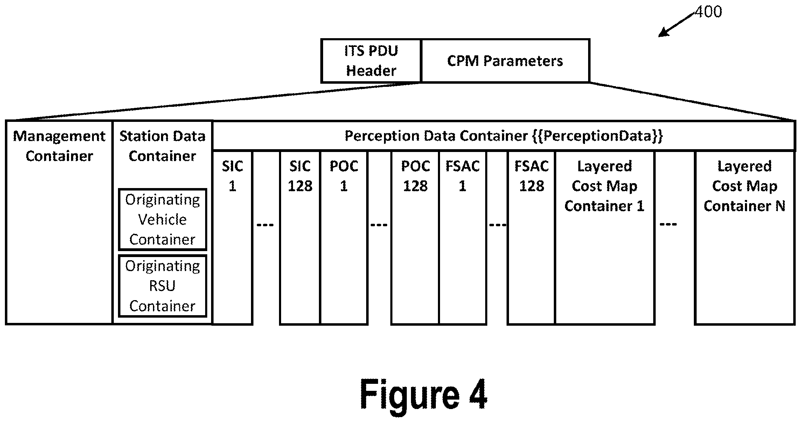

Figure 4 shows a modified CPM 400 according to various embodiments. The modified CPM 400 includes the Sensor Information Container(s) (SIC), Perceived Object Container(s) (POC), and the Free Space Addendum Container(s) (FSAC) as discussed previously with respect to Figure 3, as well as a new container Layered Cost Map Container (*LayeredCostMapContainer*) to share layered costmaps among neighbors (or proximate ITS-Ss).

The *LayeredCostMapContainer* of type *PerceptionData* represents an option to share overall dynamic environment perceived by the ITS-S as a cost-based occupancy grid. Layered cost map container may be more efficient in certain situations such as presence of large number of objects or overlapping view of objects or occlusion of objects in the FoV of sensors at the Tx ITS-S. In such situations, a layered costmap or an occupancy grid based collective perception may be bandwidth and computationally efficient. In some embodiments, the Layered Cost Map Container(s) may replace or complement Perceived Object Container(s) and/or the Free Space Addendum Container(s) discussed previously.

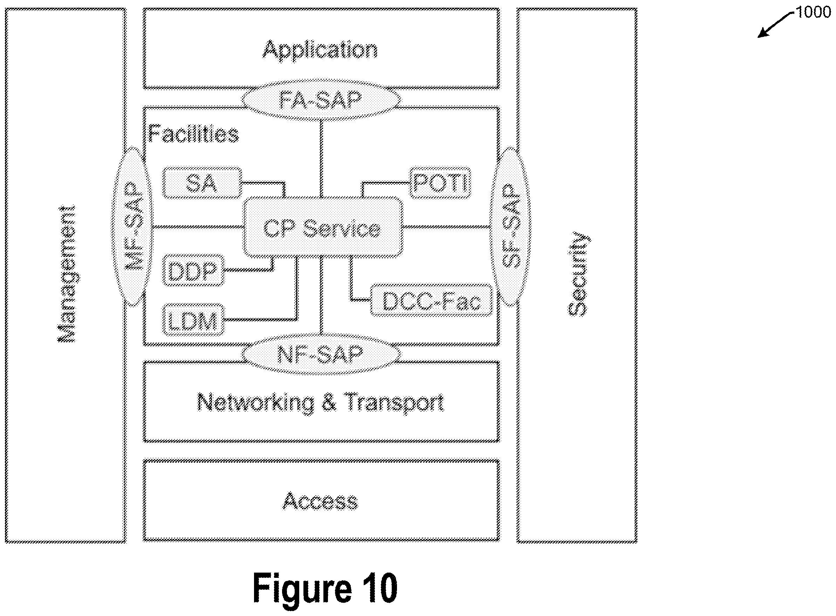

The Layered Cost Map Container Container (or *ReducedCostMapContainer*) includes information about a shared perceived master layer costmap (e.g., master layers 150 and 250 of Figures 1 and 2, respectively) and supporting layer cost maps information. As discussed previously, multiple costmap layers can be prepared at an ITS-S. The ITS-S can share multiple costmap layers, for example, 1 to N costmap layers in a CPM 400 (where N is a number, which may be based on one or more configuration parameters included or indicated by the Facility Layer). In various embodiments, the CPM 400 may be generated by a CPS module in an ITS-S. The CPS module may be a facilities layer entity as discussed in more detail infra (see e.g., Figures 10, 11, and 12). The CPS module may also control and/or coordinate the transmission of CPM(s). An example implementation of the CPM with new data frames (DFs) and data elements (DEs) for including the *LayeredCostMapContainer* are provided infra.

According to various embodiments, the *LayeredCostMapContainer* of type *PerceptionData* is added to one or more CPMs 400 to share overall dynamic environment (e.g., layered costmap 100 and 200 of Figures 1 and 2, respectively) perceived by a Tx ITS-S. The *LayeredCostMapContainer* is added to CPM(s) 400 enables compact and efficient sharing of perceived environment among proximity ITS-Ss under CPS. The Layered Cost Map Container is of type *PerceptionData.* The container considers grid-based representation of the cost map where each cell carries a cost (e.g., indicating safe, caution, or lethal to drive through the cell) or probability that specific types of obstacles, objects, Vulnerable Road Users (VRU) are present in the cell. The ITS-Ss may follow a global grid with the same size cell representations and/or hierarchical grid sizes of cell representations. In hierarchical cell size, cell sizes are integer multiples of each other's. Each ITS-S prepares a costmap for a rectangular size of specified dimensions in its FoV (and/or in the FoV of various sensors implemented by the ITS-S) where the area (e.g., rectangular area) is further divided into smaller (e.g., rectangular) cells. For example, the specified dimensions may be *n* cells by *m* cells where *n* and *m* are numbers. In various embodiments, this rectangular area is described by providing an *AreaRectangle* DF as part of the *LayeredCostMapContainer.* Dimensions of each cell are described by *GridCellSizeX* and *GridCellSizeY* DEs. In some embodiments, a square area may be used for the costmap area as well as for the cell. However, costmap area as well as the cell both can be of rectangular dimensions.

The cost of each cell is calculated by the Tx ITS-S based on its local (e.g., on-board or embedded) sensors or sensor data obtained from the local sensors, information shared by neighbours (e.g., perceived objects shared by neighbours through CPM exchange), and static map available to the Tx ITS-S. Some additional cost(s) can be added to enhance safety. For example, additional cost(s) can be added for the cells (which are free space) around a VRU to respect personal space and/or comfort of the VRU. For some objects requiring a buffer zone around them (e.g., abrupt road, garbage bin on road which can move by wind, tree branch which can fall, etc.), additional cost(s) can be added for the cells (which are free space) around these objects. The cost of each cell is described by one or more *CostMapGridValue* DFs in the *LayeredCostMapContainer.*

Each Tx ITS-S may have prepared more than one layers or types of costmaps as shown in Figures 1 and 2. As mentioned previously, the Master Layer is similar to a monolithic occupancy grid or costmap. The Master layer is prepared from other layers as shown in Figures 1 and/or 2. Static Cost Map layer maintains information about static or semi-static objects and roadside infrastructure. While other Layers of cost map maintains costs due to dynamic objects and safety requirements of these objects.

The Tx ITS-S shares the Master Cost Map Layer and may share one or more of the other layers depending on the bandwidth, access layer congestion information, and/or other constraints such as timing requirements and the like. Each Shared Cost Map Layer type is specified by *CostMapLayerType* DF. Collaboration Request Cost Map Layer enables the Tx ITS-S to request neighbors to help enhancing the cost of some cells for which the Tx ITS-S does not have high confidence level to determine a value. The Discrepancy Handling Cost Map Layer enables indicating and resolving discrepancy in perception among neighbors. Majority voting is one option where cost value of each cell is agreed on majority voting. In case of discrepancy in Cost Maps among neighbors, how to utilize neighbors cost map reporting is up to Tx ITS-S fusion algorithm implementation. In some cases when costmap sharing is enabled, the Tx ITS-S may prepare a different size costmap or a same size costmap as that for the Tx ITS-S' own use. Sharing costmaps may require changes in the dimension of costmap than that prepared for own use as neighbors are at different locations/lanes and/or heading in different directions.

Figure 5 shows example of the Layered Cost Map Container components 500C according to various embodiments. In this example, the LCM Containers in the CPM 400 of Figure 4 may include the LCM container components 500C. The LCM container components 500C includes a cost map header information in a Cost Map Header Info Container. The costmap header information may include, for example, a costMapRecordId (an ID or a sequence number (e.g., increasing interger number) assigned after each update of Occupancy Grid); a timeStampOccupancyGrid (indicating a time when master costmap was last updated), frameID (an ID of the frame this data is associated with), numberOfSupportingLayers (indicating a number of layers included other than the master costmap; set to "0" if there is only Master Cost Map), and/or the like.

The LCM container components 500C also includes a Master Cost Map Container including Cost Map Metadata and Cost Map Data in respective DEs/DFs, and may also include one or more other layers included in the Supporting Layers Cost Maps Container. The costmap metadata may include information about the costmap data, such as costMapLayerType (indicating the type of Cost Map layer), timeOfCostMapUpdate (indicating the time difference from the message's generation delta time to the time of the last update of the Cost map Layer), perGridCellCostMapValueConfigType (indicating various options to indicate format of cost map. These formats also vary in size (number of bits) required to specify cost map value per grid cell), perGridCellConfidenceLevelConfigType (indicating various options to select format of confidence level value. These formats also vary in size (number of bits) required to specify confidence level per grid cell), and/or the like. Any number of Variable Length Records (VLRs) may also be included. These VLRs may include projection information, metadata, waveform packet information, and user application data.

In various embodiments, the CPMs 300 and 400 may be defined using ASN.1 (see e.g., ITU-T recommendation X.680) scheme or some other suitable language. Additionally, Unaligned Packed Encoding Rules (UPER) may be used for the serialization of the payload. Details of the contents of these containers, and their DEs and DFs, are provided infra.

### I.B.2. CPM DISSEMINATION EMBODIMENTS

Point-to-point and/or point-to-multipoint communication, specified in ETSI EN 302 636-3 V 1.2.1 (2014-12) may be used for transmitting CPMs.

### I.B.2.A. CPM GENERATION FREQUENCY MANAGEMENT ASPECTS

A CPM generation event results in the generation of one CPM (e.g., CPM 300, 400, 600, or 700 of Figures 3, 4, 6, or 7, respectively). The generated CPM may be segmented according to section 6.1.5 in [R01] and/or as discussed herein. The minimum time elapsed between the start of consecutive CPM generation events should be equal to or larger than: T_GenCpm. T_GenCpm is limited to T_GenCpmMin ≤ T_GenCpm ≤ T_GenCpmMax, where T_GenCpmMin = 100 ms and T_GenCpmMax = 1000 ms.

In case of ITS-G5, *T_GenCpm* should be managed according to the channel usage requirements of Decentralized Congestion Control (DCC) as specified in ETSI TS 102 724 V1.1.1 (2012-10). The parameter *T_GenCpm* should be provided by the management entity in milliseconds. If the management entity provides this parameter with a value above *T_GenCpmMax, T_GenCpm* should be set to *T_GenCpmMax* and if the value is below *T_GenCpmMin* or if this parameter is not provided, the *T_GenCpm* should be set to *T_GenCpmMin.* The parameter *T_GenCpm* represents the currently valid upper limit for the time elapsed between consecutive CPM generation events. In case of 3GPP C-V2X PC5, *T_GenCpm* may be managed in accordance to the congestion control mechanism defined by the access layer in ETSI TS 103 574 V1.1.1 (2018-11).

A DCC algorithm may be used to limit access to the channel in congested scenarios. Thus the CPM generation rules may be impacted by access layer DCC. As a result, a CPM may be dropped by the access layer DCC. If this packet drop indication is fed back to the CPM generation function, this feedback can be used to re-consider adding the objects from the dropped packet to the pool of objects to be select for the next CP message generation event. The feedback mechanism can employ provisions from the cross-layer DCC functionality detailed in ETSI TS 103 175 V1.1.1 (2015-06).

### I.B.2.A.1. Perceived Object Container Inclusion Management

A CPM generated as part of a generation event may include information about perceived objects currently known to the transmitting ITS-S by adding a *PerceivedObject* DF to the *perceivedObjectContainer.*

An object from the object list of an ITS-S with sufficient confidence level and not subject to redundancy mitigation techniques (refer to clause 4.5 of [R02]) should be selected for transmission as a result of the current CPM generation event if the object complies to any of the following conditions: 1) If the assigned object class of highest confidence does not correspond to either the person or animal class: a) The object has first been detected by the perception system after the last CPM generation event. b) The Euclidian absolute distance between the current estimated position of the reference point of the object and the estimated position of the reference point of this object lastly included in a CPM exceeds 4m. c) The difference between the current estimated absolute speed of the reference point of the object and the estimated absolute speed of the reference point of this object lastly included in a CPM exceeds 0.5 m/s. d) The difference between the orientation of the vector of the current estimated absolute velocity of the reference point of the object and the estimated orientation of the vector of the absolute velocity of the reference point of this object lastly included in a CPM exceeds 4 degrees. e) The time elapsed since the last time the object was included in a CPM exceeds *T_GenCpmMax.* 2) If the assigned object class of highest confidence corresponds to either the person or animal class: a) A new object (of class person or animal) is detected after the last CPM generation event, b) If the object list contains at least one object of class person or animal which has not been included in a CPM in the past 500 ms, all objects of class person or animal should be included in the currently generated CPM. The generation rules for objects of class person or animal ensure that there are no individual inclusion cycles for previously included objects of these two classes to reduce message generation frequency.

To further reduce the number of generated messages, at each message generation event, the objects not belonging to either the person or animal class to be included in a CPM in the next generation event (e.g., after *T_GenCpm*) can already be included in the currently generated CPM. For this purpose, objects that are not selected for transmission in the currently generated CP message are predicted to the next CP message generation event (e.g., after *T_GenCpm*), for example assuming a constant velocity model. Following this prediction, all objects that would then need to be included in a CPM in the next generation event should also be selected for inclusion in the currently generated CPM.

### I.B.2.A.2. Sensor Information Container Inclusion Management

A CPM generated as part of a generation event should include a *SensorInformationContainer* whenever the time elapsed since the last time a CPM included a *SensorInformationContainer* is equal or greater than *T_AddSensorInformation*, where *T_AddSensorInformation* = 1000 ms.

### I.B.2.A.3. Free Space Addendum Container Inclusion Management

Confirmed free space in a CPM can be indicated as part of the *SensorInformationContainer.* Clause 6.7 of [R02] details how the combination of the free space indication (*FreeSpaceConfidence* DE in the *SensorInformationContainer*) and described objects can be combined to derive the free space by using a tracing and shadowing approach. The *FreeSpaceAddendumContainer* should be added whenever a free space area as would be computed on the receiver side using the simple tracing approach detailed in clauses 6.5 and 6.7 of [R02] or sections 7.5 and 7.7 of [R01] does not reflect the detected free space of the ITS-S generating the CPM. In case of static information, such as a permanently shadowed region, the *FreeSpaceAddendumContainer* should be added whenever the *SensorInformationContainer* is added to the currently generated CPM.

A CPM generated as part of a generation event may include additional information about monitored free space areas known to the transmitting ITS-S by adding a *FreeSpaceAddendum* DF to the *freeSpaceAddendumContainer.* A particular *FreeSpaceAddendum* should be added to the CPM if the simple tracing approach to compute free space areas on a receiving ITS-S does not match the representation of the detected free space on the transmitting ITS-S. Consecutive inclusion of a *FreeSpaceAddendum* in the CPM is contingent to:
1) In case the particular *FreeSpaceAddendum* DF employs the *AreaPolygon* DF: A *FreeSpaceAddendum* should be added to the current CPM if the Eucledian relative distance of any *OffsetPoint* of the polygon relative to the corresponding *OffsetPoint* of this polygon lastly included in a CPM exceeds a threshold amount/value (e.g., 4m or the like) or if the number of *OffsetPoints* to describe the polygon changes. The *AreaPolygon* DF describes a polygonal area constructed by connecting the provided offset points in the sequence provided. The last point should be connected with the first point to close the described area. The *AreaPolygon* DF should include the following information: *polypoint* (a sequence of offset points from the reference position of the ITS-S).
2) In case the particular *FreeSpaceAddendum* DF employs the *AreaCircular* DF, *AreaEllipse* DF or *AreaRectangle* DF:
   a) A *FreeSpaceAddendum* should be added to the current CPM if the difference between the current Euclidian distance of the *NodeCenterPoint* of the described free space area and the Euclidian distance of the *NodeCenterPoint* of the same described free space area and lastly included in a CPM exceeds a threshold amount/value (e.g., 4m or the like).
   b) A *FreeSpaceAddendum* should be added to the current CPM if the difference between the current *Radius* or *SemiRangeLength* of the described free space area and the *Radius* or *SemiRangeLength* of the same described free space area lastly included in a CPM exceeds a threshold amount/value (e.g., 4m or the like). The *Radius* DE includes a radius of the sensor area in the shape of a circle. The *SemiRangeLength* DE indicates the length of an axis of an ellipsoid or rectangle, and is used to describe the extension in a particular direction.
   c) A *FreeSpaceAddendum* should be added to the current CPM if the difference between the current *semiMajorRangeOrientation* of the described free space area and the *semiMajorRangeOrientation* of the same described free space area lastly included in a CPM exceeds a threshold amount/value (e.g., 4 degrees or the like). The *semiMajorRangeOrientation* DE indicates an orientation of an ellipse or rectangle major range of a sensor area ellipse/rectangle with regards to a northerly direction (e.g., WGS84 north or the like).

In any of the above, the *AreaCircular* DF describes a circular area centred about a reference point of the ITS-S or about the nodeCenterPoint (if provided). The *AreaCircular* DF may include the following information: *nodeCenterPoint* (an offset point about which the circle is centred with respect to the reference position of the ITS-S), and *radius* (indicating a radius of the circular area). The *AreaEllipse* DF describes an elliptical area. The ellipse is centred about the reference point of the ITS-S or about the nodeCenterPoint (if provided). The *AreaEllipse* DF may include the following information: *nodeCenterPoint* (an offset point about which the ellipse is centred with respect to the reference position of the ITS-S), *semiMajorRangeLength* (major radius of the ellipse; having a *SemiRangeLength* value), *semiMinorRangeLength* (minor radius of the ellipse; having a *SemiRangeLength* value), and *semiMajorRangeOrientation* (orientation of the *semiMajorRangeLength* of the ellipse in a suitable coordinate system (e.g., WGS84 or the like; having a *WGS84AngleValue* value)).

*AreaRectangle* DF describes a rectangular area centred about the reference point of the ITS-S or about the *nodeCenterPoint* (if provided). The *AreaRectangle* DF should include the following information: *nodeCenterPoint* (offset point about which the rectangle is centred with respect to the reference position of the ITS-S), *semiMajorRangeLength* (half length of the rectangle; having a *SemiRangeLength* value), *semiMinorRangeLength* (half width of the rectangle; having a *SemiRangeLength* value), and *semiMajorRangeOrientation* (orientation of the *semiMajorRangeLength* of the rectangle in the suitable coordinate system (e.g., WGS84 or the like; having a *WGS84AngleValue* value)).

### I.B.2.A.4. Layered Cost Map Container Inclusion Management

A CPM (e.g., CPM 300, 400, 600, or 700 of Figures 3, 4, 6, or 7, respectively) generated as part of a generation event may include the updated layered costmap (e.g., costmaps 100 and 200 of Figures 1 and 2, respectively) available at the Tx ITS-S by adding a *LayeredCostMapContainer* to the CPM. When a large number of objects have been perceived, an overlapping view of objects are perceived, and/or an occlusion of objects in the FOV of sensors at the Tx ITS-S is/are identified, the *LayeredCostMapContainer* is included in the CPM with one or more Cost Map Layers (see e.g., CPM 400 of Figure 4).

The Master Cost Map Layer (e.g., master layers 150 and 250 of Figures 1 and 2, respectively) is included along with zero or more other cost Map Layers such as the Static Cost Map Layer, Perceived Obstacle Cost Map Layer, Inflation Cost Map Layer, Proxemics Cost Map Layer, Caution/Accident Cost Map Layer, Voxel Cost Map Layer, Sonar Cost Map Layer, Discrepancy Handling Cost Map Layer, and/or Collaboration Request Cost Map Layer in the CPM (see e.g., Figures 1 and 2). For example, if there are perceived objects requiring buffer zone around them (e.g., abrupt road, garbage bin on road which can move by wind, tree branch which can fall), the Inflation Cost Map Layer is included along with the Master Cost Map Layer in the *LayeredCostMapContainer* DF in the CPM. If one or more VRU objects (e.g., pedestrian, bike rider, animal, etc.) have been detected, the Perceived Obstacle Cost Map Layer (e.g., layer 102 of Figure 1) is also included along with the Master Cost Map Layer (e.g., layer 150 of Figure 1).

One or more costmap layer(s) are selected for transmission as a result of the current CPM generation event under the following conditions.

Where more than one condition for including an additional layer is detected, then both of those additional layers are included in the CPM along with the master layer. For example, if there are perceived objects requiring buffer zone and one or more VRUs class of objects have been detected, then both the inflation layer and the perceived object layers are included with the master cost map layer. Other layer combinations may be included depending on the detected events/conditions.

If one or more new object(s) has(have) first been detected by the perception system after the last CPM generation event resulting in a change of the Perceived Obstacle Cost Map Layer (e.g., perceived obstacle layer 102 of Figure 1) and Master Cost Map Layer (e.g., master layer 150 of Figure 1), only the Master Cost Map Layer is included in the *LayeredCostMapContainer* DF in the current CPM.

If one or more new object(s) has(have) first been detected by the perception system after the last CPM generation event resulting in a change to the Perceived Obstacle Cost Map Layer (e.g., perceived obstacle layer 102 of Figure 1) and Master Cost Map Layer (e.g., master layer 150 of Figure 1), the Perceived Obstacle Cost Map Layer and the Master Cost Map Layer are included in the *LayeredCostMapContainer* DF in the current CPM.

If one or more new object(s) requiring buffer zone around it(them) has(have) been detected by the perception system after the last CPM generation event resulting in a change of the Inflation Cost Map Layer (e.g., inflation layer 103 of Figure 1) and the Master Cost Map Layer (e.g., master layer 150 of Figure 1), the Inflation Cost Map Layer and the Master Cost Map Layer are included in the *LayeredCostMapContainer* DF in the current CPM.

If the Perceived Obstacle Cost Map Layer (e.g., perceived obstacle layer 102 of Figure 1) or the Inflation layer (e.g., inflation layer 103 of Figure 1) have not been included in a CPM directly or via Master Cost Map Layer (e.g., master layer 150 of Figure 1) in the past X ms, where X is a number (e.g., 500 ms), the Perceived Obstacle Cost Map Layer or the Inflation layer are included directly or indirectly via Master Cost Map Layer in the *LayeredCostMapContainer* DF in the current CPM.

If the Tx ITS-S identifies that costmap values for the cells corresponding to more than [x]% (where x is a number) of its current cost map grids differ from values reported by neighbors by more than a threshold and such discrepancy has not been reported by neighbors since the Tx ITS-S's last CPM transmission, the Tx ITS-S may send its Discrepancy Handling Cost Map Layer (e.g., discrepancy handling layer 105 of Figure 1) in the current CPM.

If the Tx ITS-S identifies that cost map values of its current cells corresponding to detected VRU by the perception system differ from neighbors reported values by more than a threshold, and such discrepancy has not been reported by neighbors since Tx ITS-S's last CPM transmission, the Tx ITS-S sends its Discrepancy Handling Cost Map Layer in the current CPM.

If the locally accessible (e.g., on-board) sensors at the Tx ITS-S did not determine perception with a confidence level higher than a threshold confidence value for more than [y]% (where y is a number) of its current cost map grids and the Tx ITS-S has not included a Collaboration Request Cost map Layer (e.g., collaboration request layer 106 of Figure 1) in its last (e.g., previous) CPM transmission, the Tx ITS-S may send Collaboration Request Cost map Layer in the current CPM.

If after the Tx ITS-S's last CPM transmission the Tx ITS-S receives Collaboration Request Costmap Layer from a neighbor asked for help in determining cost values of some cells in a specific Costmap Layer, the Tx ITS-S has values for some or all requested cells and confidence levels of these cost values are higher than any other response from other neighbors for this collaboration request. The ITS-S includes that specific Cost Map Layer in the current CPM.

If a neighbor has asked for help in determining cost values of some cells in a specific Costmap Layer by sending `Collaboration Request Cost map Layer' after the Tx ITS-S's last CPM transmission, the Tx ITS-S has values for some or all requested cells and confidence levels of these cost values are higher than any other response from other neighbors for this collaboration request. The ITS-S includes that specific Cost Map Layer in the current CPM

Consecutive inclusion of one or more Layered Cost maps in the *LayeredCostMapContainer* in the CPM may be based on one or more of the following conditions:
(1) A *LayeredCostMapContainer* DF is added to the current CPM if the difference between the current Euclidian distance of the *NodeCenterPoint* of the Rectangular Cost Map Grid Area to be reported and the Euclidian distance of the *NodeCenterPoint* of the same reported Rectangular Cost Map Grid Area and lastly included in a CPM exceeds a threshold amount/value (e.g., 4 meters (m) or the like). The *NodeCenterPoint* DE is an x and y offset of position relative to the provided reference position in a horizontal plane containing a coordinate system where y corresponds to the North direction and x with the East direction.
(2) *A LayeredCostMapContainer* DF is added to the current CPM if the difference between the current *SemiRangeLength* (e.g., Half *Length*) of the Rectangular Cost Map Grid Area to be reported and the *SemiRangeLength* of the same reported Rectangular Cost Map Grid Area lastly included in a CPM exceeds a threshold amount/value (e.g., 4m or the like). A *LayeredCostMapContainer* DF is added to the current CPM if the difference between the current *semiMinorRangeLength* (e.g., Half Width) of the Rectangular Cost Map Grid Area to be reported and the *semiMinorRangeLength* of the same reported Rectangular Cost Map Grid Area lastly included in a CPM exceeds a threshold amount/value (e.g., 4m or the like).
(3) A *LayeredCostMapContainer* DF is added to the current CPM if the difference between the current *semiMajorRangeOrientation* of the Rectangular Cost Map Grid Area to be reported and the *semiMajorRangeOrientation* of the same reported Rectangular Cost Map Grid Area lastly included in a CPM exceeds a threshold amount/value (e.g., 4 degrees or the like).

### I.B.2.B. CP Message Segmentation Aspects

The size of a generated CPM should not exceed a CPM Maximum Transmission Unit (MTU_CPM), which the CPS supports via the NF-SAP. For example, the MTU_CPM depends on the MTU of the access layer technology (MTU_AL) over which the CPM is transported. The MTU_CPM should be less than or equal to MTU_AL reduced by the header size of the facilities layer protocol (HD_CPM) and the header size of the networking and transport layer protocol (HD_NT) with MTU CPM ≤ MTU AL - HD CPM - HD_NT.

In case the size of the CPM including all perceived object and Costmap Layer candidates selected for transmission exceeds the CPM Maximum Transmission Unit (MTU_CPM), message segmentation may occur as discussed herein and/or as discussed in [R01] and/or [R02]. Each message segment should be interpreted without the need to receive all segments. In the current provision [R01], selected perceived object candidates are included in a CPM segment in a descending order of the product of an object's confidence (if available) and speed. In case the object confidence is unavailable, only the object speed shall be used for sorting in a descending fashion.

The MTU_AL per access layer technology is defined in [R07] and ETSI TS 103 613 V1.1.1 (2018-11), and their references. The header of the networking and transport layer protocol consists of the BTP header and the GeoNetworking header. The size of BTP header is defined in ETSI EN 302 636-5-1 V2.2.1 (2019-05) and the size of GeoNetworking protocol header per intended packet transport type is defined in ETSI EN 302 636-4-1 V1.4.1 (2020-01).

Message segmentation may occur when the size of the ASN.1 UPER encoded CPM including all perceived object candidates selected for transmission exceeds MTU_CPM. Each message segment can be interpreted without the need to receive all segments. In various embodiments, the Master Cost Map Layer (e.g., master layer 150 or 250 of Figures 1 and 2, respectively) is selected to be included in the first segment. Selected perceived object candidates should be included in a CPM segment in a descending order of the product of an object's confidence (if available) and speed. In case the object confidence is unavailable (101), only the object speed should be used for sorting in a descending fashion. A segment should be populated with selected objects as long as the resulting ASN. 1 UPER encoded message size of the segment to be generated does not exceed MTU_CPM. Remaining Cost Map Layers are included once all selected objects are included in the segments. Remaining Cost Map Layers are either included in the last segment with selected object or one or more new segments are generated. Cost Map Layers inclusion order in the Segments are in the following descending priority order: Master Cost Map Layer, Perceived Obstacles Cost Map Layer, Inflation Cost Map Layer, Proxemics Cost Map Layer, Caution/Accident Cost Map Layer, Voxel Cost Map Layer, Discrepancy Cost Map Layer, Collaborative Request Cost Map Layer, Collective Perception Cost Map Layer, Sonar Cost Map Layer, and Static Cost Map Layer. Segments are generated in this fashion until all selected perceived objects and/or Cost Map Layers are included in a CPM segment. Each segment is transmitted at the next transmission opportunity.

It should be noted that the Tx ITS-S may need to select larger Cost Map cell size to reduce size of a Cost Map Layer in order to fit in a single CPM Segment. It is necessary to keep each CPM Segment self-interpretable without the need to receive all or other segments.

In case the *SensorInformationContainer* also needs to be transmitted, it should be added to a CPM segment if the resulting ASN.1 UPER encoded CPM segment size does not exceed MTU_CPM. In some embodiments, this procedure may result in the generation of a CPM segment only including the *SensorInformationContainer.* Message segmentation should be indicated by populating the *perceivedObjectContainerSegmentInfo* DF. All message segments should indicate the same *generationDeltaTime* DE.

In one embodiment, when Cost Map Sharing is enabled, any combination of the following provisions for including perceived objects and cost map layer candidates in CPM Segments may be used: Master Cost Map Layer shall be selected to be included in the first Segment. Then perceived object candidates are included based on the existing provision(s), in a descending order of the product of an object's confidence (if available) and speed. Remaining Cost Map Layers are included once all selected objects are included in the segments.

In this embodiment, the remaining Cost Map Layers are either included in the last segment with perceived object if size allows; otherwise, one or more new segments are generated to include all the remaining cost map layers. Additionally or alternatively, the Costmap Layers' inclusion order in the CPM segments are in the following descending priority order: Master Costmap Layer, Perceived Obstacles Costmap Layer, Inflation Cost Map Layer, Discrepancy Costmap Layer, Collaborative Request Costmap Layer, Collective Perception Costmap Layer and Static Costmap Layer. In another embodiment, if CPM segmentation is required to include all perceived object and cost map layer candidates, then any combination of the following actions is/are taken:

In one embodiment, only the Master Costmap Layer is included in the CPM without segmentation, and erceived object and remaining costmap layer candidates are excluded from transmission. In this embodiment, the Tx ITS-S may need to select larger costmap cell size to reduce size of a Master Costmap Layer in order to fit it in the CPM. In another embodiment, all Costmap Layer candidates are included in the CPM with minimum number of CPM segments. In this embodiment, perceived object candidates are excluded from transmission.

In another embodiment, a cost map layer may be entirely included in a segment (e.g., a cost map layer cannot be divided in two CPM segments) so that each segment can be self-interpretable. In embodiments, two or more Cost map layers can be included in the same segment if size permits. In these embodiments, the Tx ITS-S may need to select larger Cost Map cell size to reduce size of a Cost Map Layer in order to fit in a single CPM Segment. It may be necessary to keep each CPM segment self-interpretable without the need to receive all or other segments. Any of the aforementioned embodiments may be combined in various combinations.

### I.B.2.C. CPM Time Aspects

*CPM generation time.* Besides the CPM generation frequency, the time required for the CPM generation and the timeliness of the data taken for the message construction are decisive for the applicability of data in the receiving ITS-Ss. Each CPM is timestamped in order to ensure proper interpretation of received CPMs. An acceptable time synchronization between the different ITS-Ss is expected. The time required for a CPM generation shall be less than 50 ms. The time required for a CPM generation refers to the time difference between time at which a CPM generation is triggered and the time at which the CPM is delivered to the Networking & Transport layer (see e.g., Figure 10).

*CPM timestamp.* The timestamp provided in a CPM disseminated by a V-ITS-S corresponds to the time at which the reference position of the originating ITS-S provided in the *CpmManagementContainer* DF was determined. The format and range of the timestamp is defined in clause B.3 of ETSI EN 302 637-2 V1.4.1 (2019-04) (hereinafter "[R09]"). The timestamp provided in a CPM disseminated by a R-ITS-S corresponds to the time of generating the CPM. The difference between CPM generation time and timestamp shall be less than 32,767 ms. This requirement is set to avoid timestamp wrap-around complications. The ITS time precision and may be provided by a PoTi facility layer element (see e.g., Figure 10).

### I.B.2.D. Quality and Confidence Indication of Provided Data

*Object Inclusion and Confidence:* Objects to be included in the CP message should be shared with other ITS-Ss with the objective of increasing traffic safety. Shared objects are therefore used by safety applications on receiving ITS-S. Objects relevant for traffic safety are either static, e.g., do not move but are located on the driving lanes, or dynamic, e.g., move or have the ability to move. The objective of transmitted objects as part of the CP Message is not to share and to compare traffic-regulation information such as traffic signs and traffic light information. Instead, data about objects which cannot be available to other ITS-Ss as their presence is only temporary (e.g., traffic participants or temporary obstacles) need to be given priority. Objects need to be located on the driving lanes or adjacent to lanes (e.g., pedestrian walks). Map matching algorithms on the disseminating ITS-Ss may be used for determining whether an object is located on a lane. The methodology to compute object confidence will be unanimous between transmitting ITS-S to ensure that upon reception of a CPM, the confidence indication can be clearly interpreted. In sensor fusion systems, confidence computation is usually proprietary to the implementation and therefore contradicts the requirements when sharing sensor data. Therefore, suitable confidence metrics should be identified (e.g., in ISO/AUTOSAR), to provide a harmonized description.

*Freespace Confidence:* Receivers (Rx ITS-Ss) are able to combine the reported detection area of the *SensorInformationContainer* and the reported objects to derive free space between the objects, as detailed in clauses 6.5 and 6.7 of [R02]. To advertise that the transmitting ITS-S is able to provide measurements about actual confirmed empty space that a receiving moving ITS-S may drive into, the *freeSpaceConfidence* DE of a particular *SensorInformation* may be used. A semantic segmentation process is a key step in identifying objects and free space within the field of view of a sensor (see e.g., Schumann et al.:,"Semantic segmentation on radar point clouds," 2018 21st International Conference on Information Fusion (FUSION) (10 Jul 2018), and Wang et al.: "PointSeg: Real-Time Semantic Segmentation Based on 3D LiDAR Point Cloud", arXiv:1807.06288v8 (25 Sep 2018)). Depending on the employed sensor measurement and object fusion principles, detected objects can be described with bounding boxes of fixed size. By combining the knowledge about the transmitting ITS-S's sensory capabilities, e.g., its detection area, with received detected objects, free space can be can be computed by a receiving ITS-S. When objects and free space are classified, applicable confidence levels should be determined by using an applicable methodology (e.g., AI/ML techniques). The confidence level of a free space can be defined as the ratio of the number of detected evidences of free space with respect to the total number of detection attempts within a specified time period such as *T_GenCpmMax.* The specific technique for sematic segmentation, multi sensor data fusion, and confidence level calculations for object/free space are out of scope for the present document and any feasible technique should be used. Additionally, the *Redundancy Mitigation Techniques* as discussed in [R01] and [R02] may be used.

### I.B.3. CPS COSTMAP UPDATES

Embodiments include mechanisms for exchanging CPMs among neighboring/proximate nodes (e.g., V-ITS-Ss, R-ITS-Ss, etc.) with lower communication overhead than existing solutions. From a communication protocol perspective, channel utilization should be minimized, and therefore, shorter message size and lower transmission frequencies are usually preferable. The embodiments discussed herein reduce message transmission frequency and message size reduction.

### I.B.3.A. PERIODIC BROADCAST OF CPMS

One embodiment includes periodic broadcast of CPMs. In this embodiment, a periodic CPM is generated (or pushed for transmission to the Network and Transport layer and/or the access layer (see e.g., Figure [R01])) with a periodicity T_{CPM}, where T_{CPM} is selected between two Minimum and Maximum periodicity parameters (e.g., T_{CPM_Min} = 100ms, and T_{CPM_Max} = 1s) provided by CPM management Entity. T_{CPM} can be determined based on network congestion levels/measurements (or channel congestion levels/measurements), quality (confidence) levels/measurements of perceived object(s), safety relevant of perceived objects (e.g., detection of pedestrian, moving things/organism needs more frequent transmission), geolocation (e.g., more frequent on Intersection, wild-animal prone area), node density in neighbor table, resource selection scheme at communication-Layer (L2), and/or other like parameters.

For example, if network/channel is highly congested, T_{CPM} can be selected equal to or close to T_{CPM_Max}. Network congestion can be measured according to the currently used communication protocol, which may be fed back to a CPM module to select T_{CPM}. For example, in 3GPP V2V Mode-4 communication, each node measure congestion level (channel busy ratio) before each transmission in a distributed way. Such measured congestion level can be forwarded to CPM module by proposing an interface between communication protocol and CPM module. Network/Channel congestion can also be estimated by a node (at V2X module) by keeping history of success rate in the network of a known periodic message (e.g., hello/CAM/BSM message) over a sliding window. A node may usually know the periodicity of such message from neighbors. Reception Success rate of such message from neighbors can give level of network congestion.

In another embodiment, T_{CPM} can be selected based on Geo-Area of vehicle location, such as near a busy intersection or in a wild-animal prone area, a shorter T_{CPM} can be selected to detect any potential safety critical situation faster. In some embodiments, T_{CPM} can be selected based on more than one factor mentioned above.

### I.B.3.B. BROADCAST OF INCREMENTAL/DIFFERENTIAL CPMs VERSUS FULL SIZE PERIODIC CPMs

In many scenarios, it may create significant communication overhead if all nodes keep transmitting periodic full size CPMs, in particular, if a CPM size is larger and T_{CPM} smaller. For example, at a busy intersection neighbor density is very high and perception environment may also be changing faster (due to multiple pedestrian walks, multiple lanes intersecting each other, left/right turns, etc.), requiring potentially larger CPM size and smaller T_{CPM}. However, due to high node density transmitting larger CPM with smaller periodicity can be expensive in terms of communication overhead. In various embodiments, full size CPMs are transmitted with a longer periodicity in such cases. In various embodiments, only differential/partial/incremental CPMs (of smaller size) are transmitted in between two full size CPM.

*Incremental versus full size periodic CPM.* A full size CPM is a CPM including a full list of perceived objects, In embodiments, a full size CPM can be transmitted with longer periodicity, whereas incremental (e.g., new objects and/or high safety risk objects only) can be pushed to transmit in between two consecutive full lists. The periodicity of incremental/partial CPM transmission can be sub-integer multiple of periodicity of Full size CPM. Periodicity of Full Size CPM can be selected equal to or close to T_{CPM_Max}. Incremental transmission can be skipped if such a transmission is not needed.

Incremental CPMs can include information from some or all of the following: a new object is detected after Full size CPM transmission; a change in absolute position of an object greater than a pre-specified threshold is detected and the object was previously perceived as static during Full size CPM transmission; and/or a change in speed/heading of an object greater than a pre-specified threshold is detected after Full size CPM transmission and the object was previously perceived as dynamic.

Content of incremental CPMs can also be determined based on object lists contained in CPMs from neighbors. Objects present in CPMs from most of the neighbors with the same or similar attributes (e.g., same position, dimensions, heading as perceived by local sensors) can be skipped in incremental CPMs. On the other hand, if attributes of a perceived object differ with each other in among various neighbors, re-perception of such object can be applied and included in upcoming incremental CPMs.

Having varying size of incremental/differential CPM may impact L2 communication protocol such as 3GPP C-V2X Mode 4. In particular, semi-persistent resource reservation as message size changes. The same size incremental CPM may be considered where size changes semi-statically after a few periods. Size of Full CPMs can also be kept constant for a few periods to allow radio access layer to reserve the same or similar amount of resources for upcoming periods.

### I.B.3.C. EVENT TRIGGERED CPM BROADCAST

In embodiments, Event-Triggered CPMs (ET_CPMs) may be transmitted in response to detection of an event, such as detection of safety critical scenario or object. The ET_CPMs at least include event-realted data, such as safety critical perceived object(s). In some embodiments, ET_CPMs is/are transmitted in addition to periodic CPMs. In these embodiments, the safety critical ET_CPMs may be transmitted immediately after detection of the safety critical event.

Safety critical events may include, for example, detection of objects next to a lane with the ability to move (e.g., dustbin, skateboard, lost cargo, etc.), high risk/relevance VRUs (e.g., road workers, police agents, emergency personnel, fire brigade, etc.), animal suddenly jumping/entering road, kids coming near road, etc. can be considered as events triggering immediate transmission of ET_CPM.

Sometimes neighbors' perceptions may conflict with each other and a resolution of confusion may be needed or an adversary node is intentionally reporting false perception. In this case, a majority voting may be triggered and neighbors may be asked to redo perception of specific scenario/objects and share the perception results. An ET_CPM is transmitted in this case.

### I.B.3.D. UNICAST OR MULTICAST CPM TRANSMISSIONS

After a node (e.g., ITS-S A) receives a broadcast message from a neighboring node (e.g., ITS-S B), ITS-S A may be interested in specific details of a perceived object (e.g., raw data associated with a perceived object included in ITS-S B's CPM). In various embodiments, ITS-S A can send a request to get such details, and ITS-S B sends the requested details as a dedicated unicast CPM.

In another use case, a node (e.g., ITS-S A) whose view is obstructed by an object in front of it (e.g., a large vehicle such as a truck or bus) may request specific perception data (e.g., sensor data) from a neighboring node B or another neighboring node C for a longer period of time. In one example, the node C may be the obstructing large vehicle in front of the ITS-S A. ITS-S B or ITS-S C can then send a CPM with requested data as a unicast transmission. If more than one ITS-S requests such data from ITS-S B and/or ITS-S C, ITS-S B and/or ITS-S C may send CPM(s) as group cast (multicast) transmission.

Unicast/Groupcast transmission of CPMs allows other neighbors to transmit data at the same time which is beneficial specifically for neighbors with half-duplex radios, for example.

### I.B.3.E. CPM TRANSMISSIONS WITH REDUCED REDUNDANT CP DATA

Proximate or neighboring ITS-Ss (e.g., two or more ITS-Ss in proximity and/or within some defined distance from one another) may have overlapped view(s) and/or same or similar sensing capabilities with same or similar quality (e.g., multiple ITS-Ss may perceive same objects with a relatively high quality). In such a case, if each neighbor transmits periodic CPMs with multiple or all perceived objects, it may create unnecessary communication overhead as they carry redundant information. According to various embodiments, neighbors coordinate withone another to reduce CPM size by avoiding transmission of the same perceived content with similar quality.

In embodiments, CPM transmission(s) may be used to reduce redundant transmissions of perceived objects in proximity. In these embodiments, individual neighbors (or each neighbor) transmit a full size CPM with all perceived objects and at all level(s) of confidence for these objects. Then in the next periodicity, a perceived object is included only in a CPM by one of the neighbors who has reported a highest level of confidence in the previously transmitted CPM.

If more than one neighbor has reported a same level of confidence (e.g., a highest value), the neighbor who transmits a CPM first includes the perceived object. Since CPM generation and transmission scheduling at layer 2 (L2) may have delay, it is possible that a node generating CPM later may be able to transmit CPM earlier. In this case, more than one node with a highest confidence level may include a common perceived object. In this situation, the node that is able to transmit the common object in this round will transmit it in the next period as well.

Since reception coverage of various neighbors will be different, it is possible that some node in the proximity may not get all the perceived objects due to above mentioned mechanism of decreasing or eliminating redundant transmissions of perceived objects in proximity. To address this issue, individual nodes (or each node) transmit full size CPM(s) periodically with longer periodicity. In between two full size CPM transmissions, neighbors can apply the mechanism to decrease or eliminate redundant transmissions of perceived objects in proximity.

As an example, when a node A now perceives an object X with a higher confidence level than the current highest confidence level provided by node B, then node A with the new highest confidence level transmits the object X information in its next CPM with the new confidence level value. Node B, after receiving the CPM from node A, stops transmitting object X in the CPM from next transmission. In another embodiment, node A waits for next full CPM transmission, after which node B stops transmitting object X. A similar approach can be applied to reduce redundant transmissions of other perceived content of CPM in proximity.

### I.B.3.F. NEGOTIATION BETWEEN DATA PRODUCER AND DATA CONSUMER (RECIPIENT) FOR COMMUNICATION NETWORK LOAD OPTIMIZATION

Sharing perception sometime may involve huge data amount (e.g., sharing of raw data as unicast transmission as described in section **I.B.3.D** ("Unicast or Groupcast Transmission of CPM"). In such a case, a handshake with shorter messages between requester and data provider should be performed to make sure that data with provider fulfills requester's data quality/type requirements. A Procedure is needed to negotiate type, quality, and age of data between requester and provider before exchanging larger sensor data.

For example, in some cases, a node A (e.g., after receiving a list of perceived objects from a neighbor B) may be interested in raw sensing data from node B. Raw sensor data can be very large, so Node A and Node B should handshake and negotiate whether the raw data at node B is actually useful, such as a right type of data, a threshold quality, and/or not outdated, before such a large data transfer. The handshake further allows for channel estimation between the nodes thereby allowing for high data rate transmissions with higher MCS. In general, a higher MCS Unicast can significantly reduce the communication resource when compared to the broadcast.

The following steps can be taken under a procedure to negotiate type, age, and quality of data between requester and provider of data before exchanging big data.

First, a node A sends a request message (e.g., *CPM-Request-Msg-Unicast*) to node B with description of data (e.g., sensor data Y) that is of interest to node A. Node A may know about requested data availability from received broadcast CPM message from node B. Requested data can be specific details of a perceived object in node B's CPM (such as raw data associated with a perceived object included in B's CPM).

If requested data Y is smaller than a threshold (e.g., *Handshake-Trigger-Threshold-Size*), node B sends the requested data as unicast using the message format according to the embodiments discussed herein. Otherwise (e.g., if requested data Y is bigger than a threshold (*Handshake-Trigger-Threshold-Size*))*,* node B first sends a handshake message (*CPM-Handshake-Requested-Data Attribute*). *CPM-Handshake-Requested-Data-Attribute* carries data attributes such as data size, data quality, age of information, computational-storage capability requirement to process data, expected outcome from the data such as perceived object, and/or the like.

Node A may send cancel request (CPM-Data-Request-Cancel or CPM-Handshake-Requested-Data-Attribute-Reject), if Node A does not want the data after getting data attributes. Node B then does not send data to Node A. Otherwise node A sends data attribute accept message (*CPM-Handshake-Requested-Data-Attribute-Accept*). Node B then sends data to node A.

### I.B.3.G. TRIGGERING COST MAP UPDATES

As alluded to previously, the costmap update frequency and their triggers may be impacted due to the layers of the costmap having different rates of change. In various embodiments, CP aware events may be defined to trigger costmap updates. Examples of such CP aware events are as follows:
*Event 1:* If one or more newly perceived objects are received from neighbors in a CPM, where the perceived objects locations are within the considered dimension of a costmap, and if there is no ambiguity based on local sensing or multiple neighbors do not contradict each other regarding the perceived object, the `Collective Perception Layer' (e.g., collective perception layer 104 of Figure 1) is updated immediately. If the perceived object results in ambiguity, the ambiguity is first resolved to decide whether the perceived object from neighbor is correct (agreed among neighbors), then only the `Collective Perception Layer' costmap is updated. Update of master layer due to Event 1 can be done immediately or it can follow the regular update of the Master Layer (e.g., master layer 150 in Figure 1).
*Event 2:* If a neighbor sends the Discrepancy Handling Layer (e.g., discrepancyhandling layer 105 of Figure 1) to indicate discrepancy among the cost values of neighbors for some cells and if these cells are within dimensions of the costmap of a node A1, after resolution of discrepancy, node A1 updates the costmap layers (e.g., Master Layer 150 and/or other impacted layers) based on the correct/agreed cost value of these cells.
*Event 3*: If a node A2 sends an `Collaboration Request Layer' (e.g., collaboration request layer 106 of Figure 1) requesting neighbors to help enhancing the cost of some cells for which node A2 may not have high confidence level to determine a value, and receives response from neighbor(s), node A2 immediately updates the Master Layer with received cost values. A majority voting similar to Event 1 may be applied if more than one neighbor responds with different cost values.
*Event 4:* Receipt of a costmap from a neighbor with a layer that is not currently tracked by the ITS-S due to lack of sensor capability triggers an immediate update if the confidence level is above a certain threshold.

A significant change in one or more layers (e.g., the Master Layer, Inflation Layer, etc., of Figures 1 or 2) of the costmap at a node may trigger the generation and transmission of a CPM (e.g., an ET_CPM). Otherwise, the updated costmap can be included in the next scheduled CPM (e.g., Periodic CPM).

### I.B.3.H. COMBINING LAYERED COSTMAPS FROM MULTIPLE NODES

ITS-Ss (e.g., V-ITS-Ss, R-ITS-Ss, infrastructure ITS-Ss, personal/VRU ITS-Ss, etc.) are expected to have GNSS circuitry and are expected to be capable of deriving or otherwise determining their GNSS reference coordinates. In various embodiments, each ITS-S creates costmaps based on the GNSS reference coordinates. In these embodiments, an Rx ITS-S translates reference points/coordinates of received costmaps to its own reference point/coordinates, and combines or stiches the costmaps accordingly.

In another embodiment, the various ITS-Ss use a grid based reference system (e.g., United States National Grid (USNG) reference system or the like) to create the layered costmaps. USNG provides a nationally consistent "language of location", optimized for local applications, in a compact, user friendly format (10 digits for 1 m square, 8 digits for 10 m square, etc.). In other countries similar national grid reference systems could be used. Due to the hierarchical grid based representation the receiving nodes combine the costmaps with less computation effort. In these embodiments, the ITS-Ss may select the size of the grid based on the congestion in the network, bandwidth availability, sensor capability, and/or confidence levels.

When combining a smaller grid size costmap with a larger grid size costmap if one the smaller grid is occupied in the larger grid, that larger grid may be marked as occupied. For example, if a 1m grid costmap is combined with 2m grid costmap, there are four 1m grids in one 2m grid. In this example, if one of the 1m grid is occupied the entire 2m grid is marked as occupied.

Additionally, the ITS-Ss can augment limited costmaps (e.g., costmaps with limited layers due to sensor capability with ones received from neighbors). The grid size selected is the one of the augmented costmaps.

### I.B.4. EXAMPLE CPM IMPLEMENTATIONS INCLUDING COSTMAP CONTAINERS

Example implementations of CPMs including the Layered Costmap Container are provided by tables 1-3. Contents of various containers and description of data fields (DFs) and data elements (DEs) are also provided by tables 1-3. In these implementations, DEs and/or DFs are included in the *CPMManagementInformationContainer* to enable incremental CPM transmission; containers for CP layered costmaps; containers for sharing raw data from various sensors; and subcontainers inside perceived object container(s) to include associated sensor data along with the perceived object(s). Examples of the DEs and DFs according to various embodiments are shown the following example ASN. 1 representation of CPM based on the message format defined in SAE-J2735, Dedicated Short Range Communications (DSRC) Message Set Dictionary (Jan 2016) (hereinafter "[R05] ").

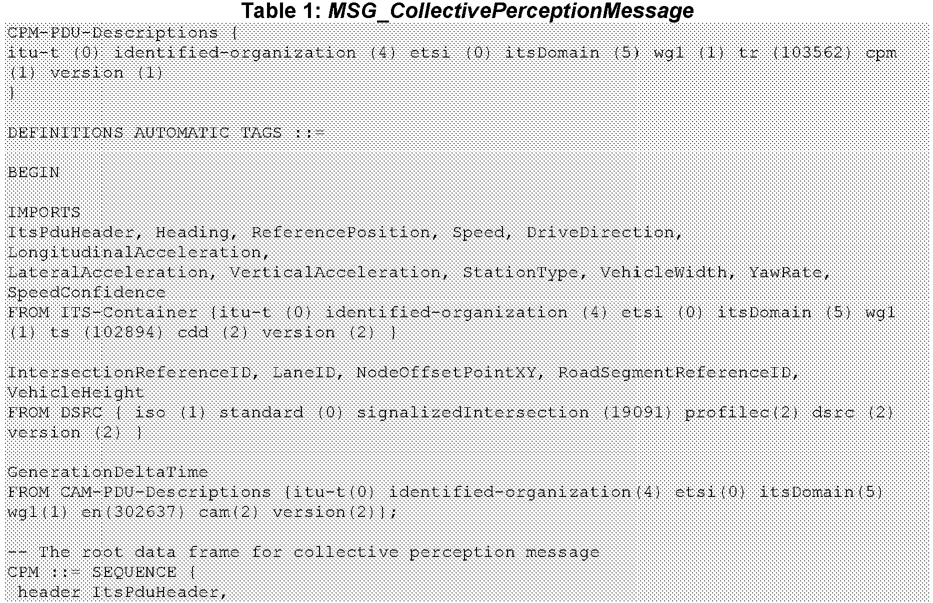

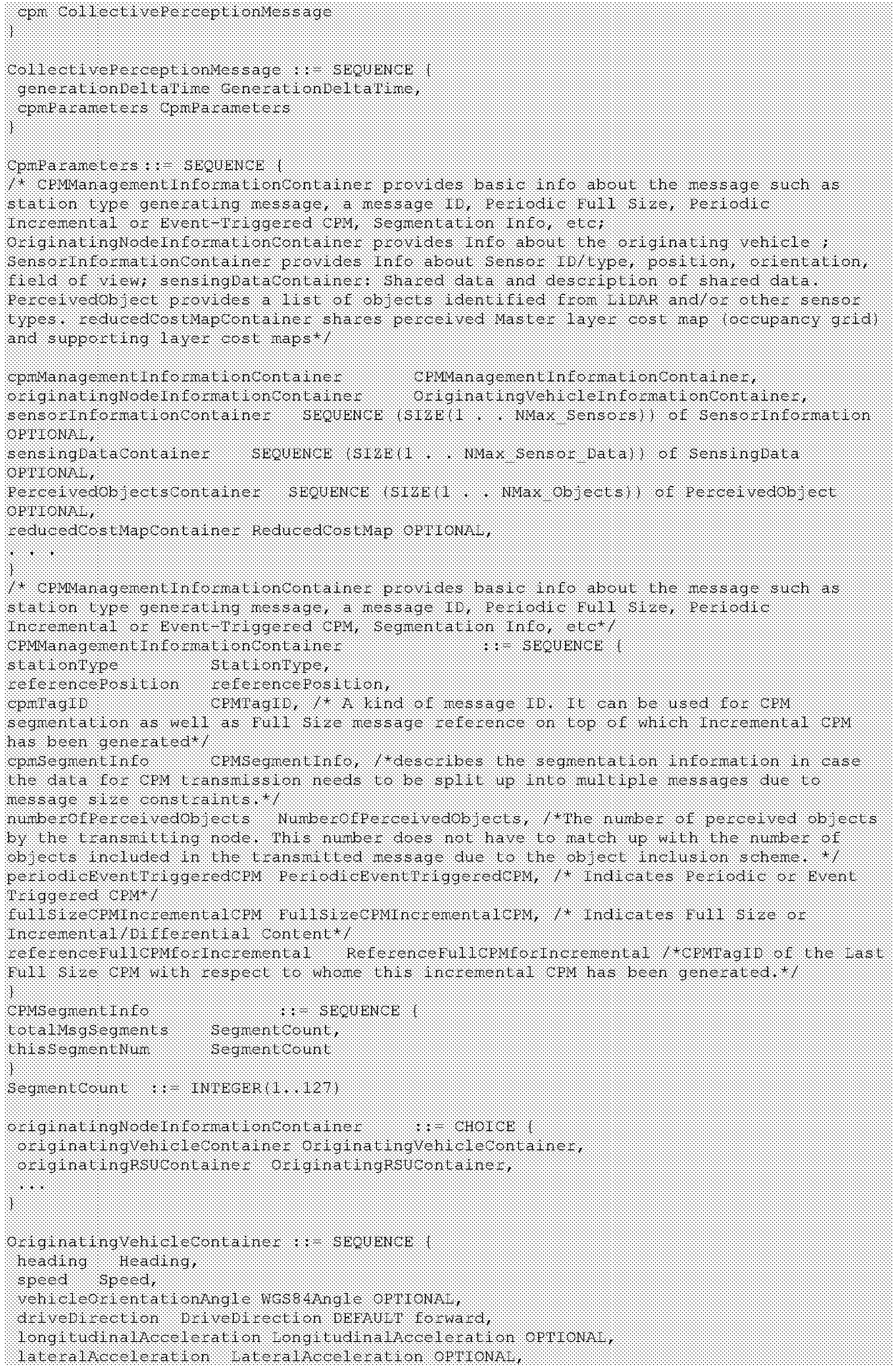

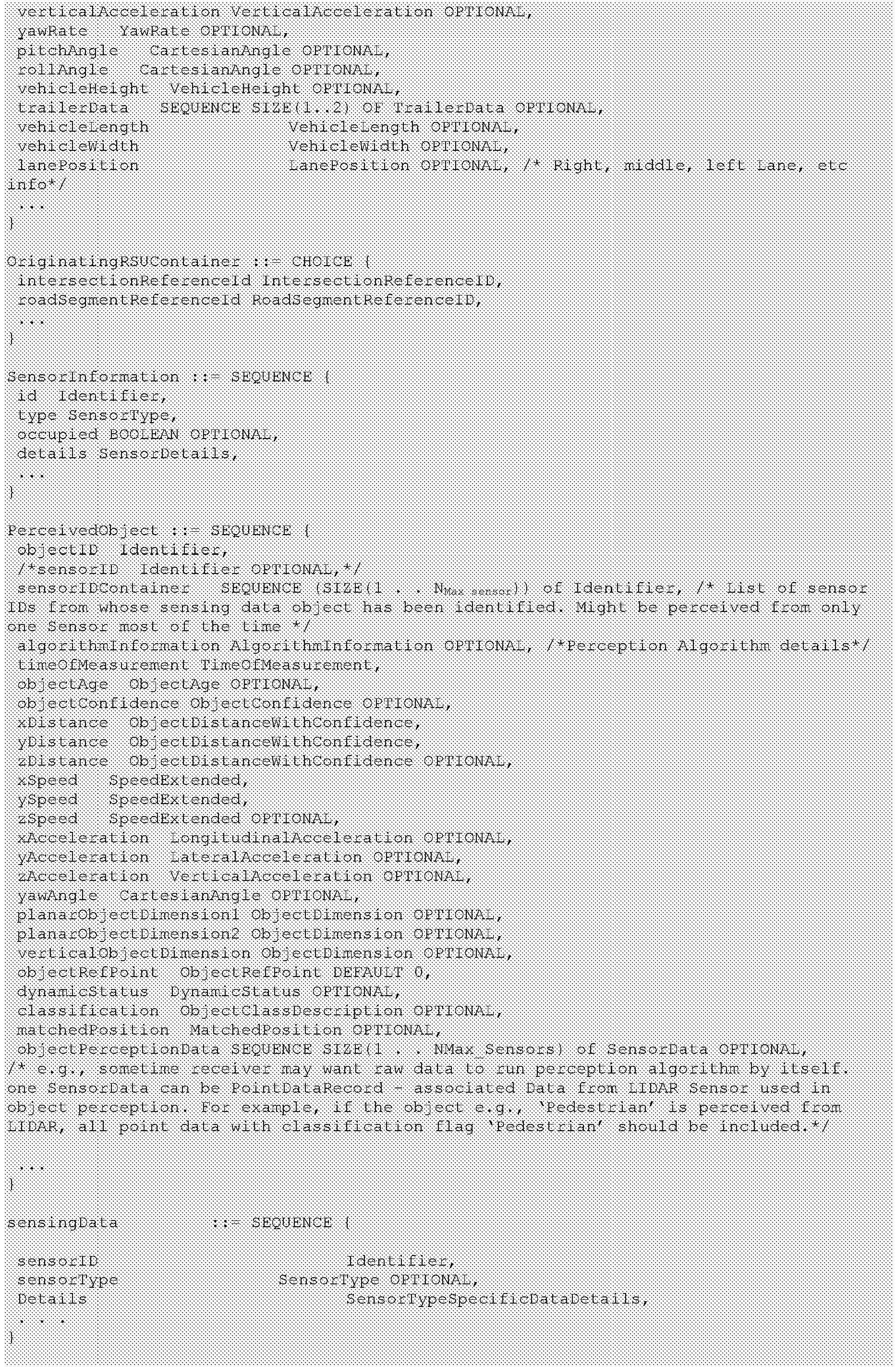

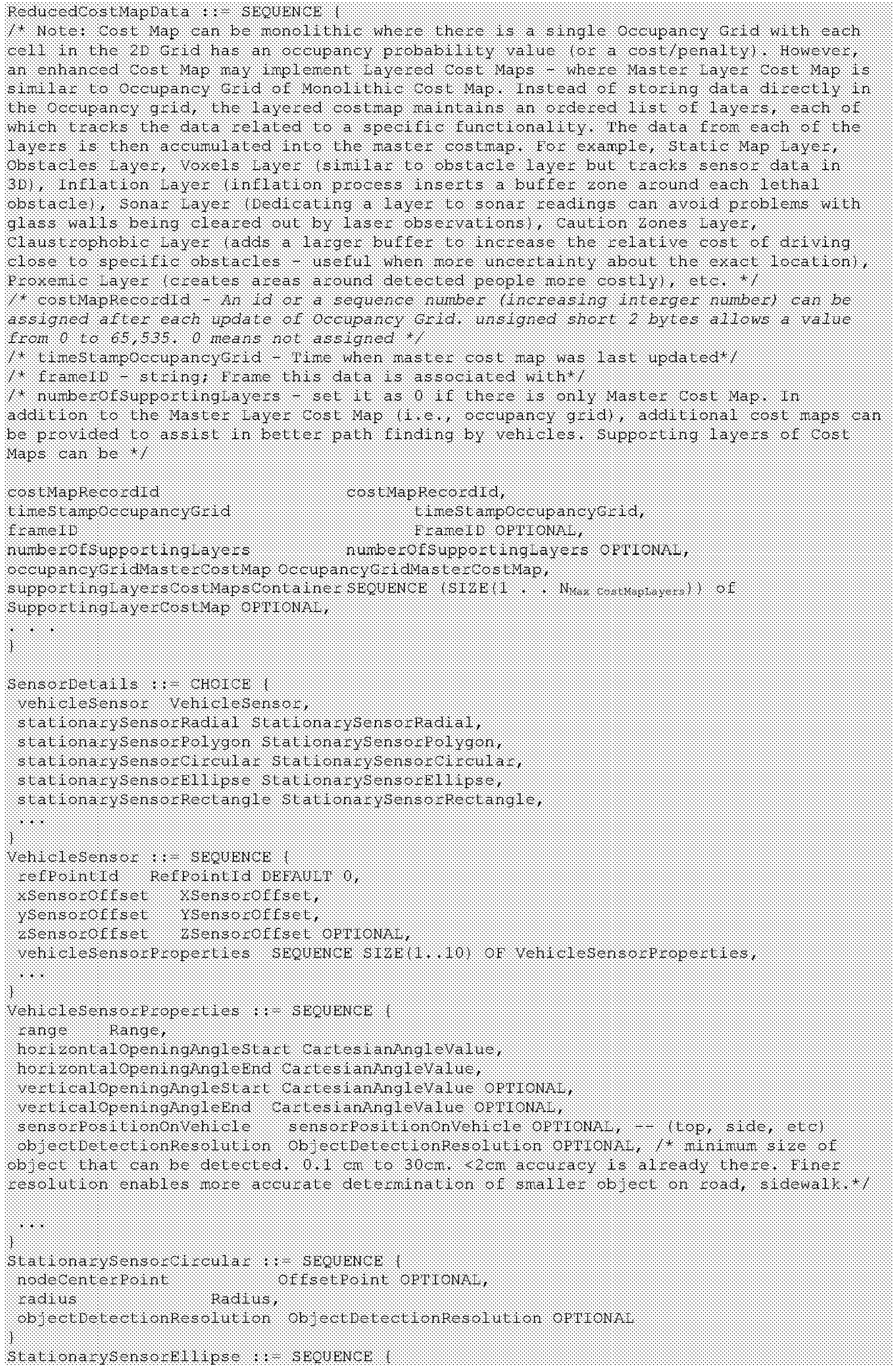

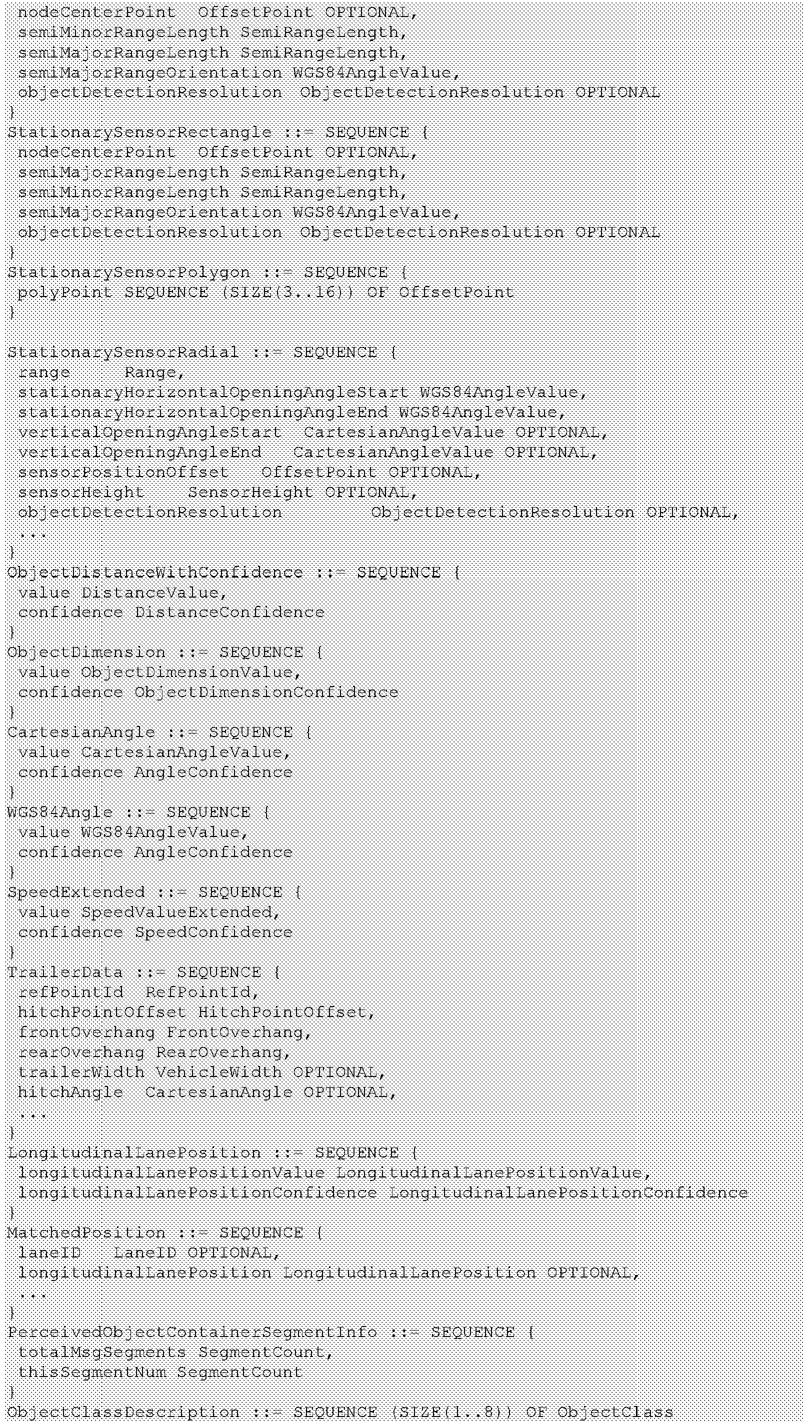

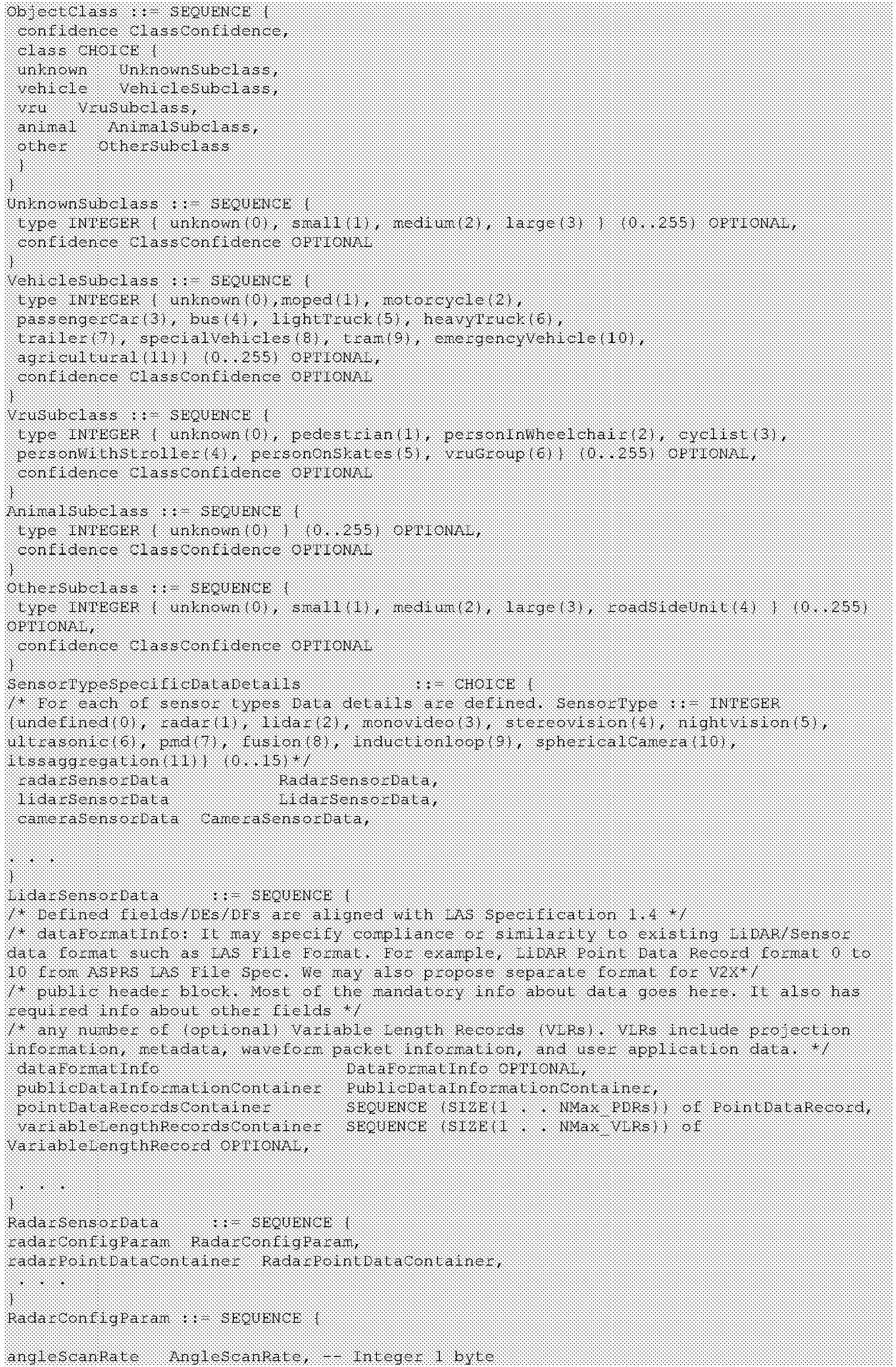

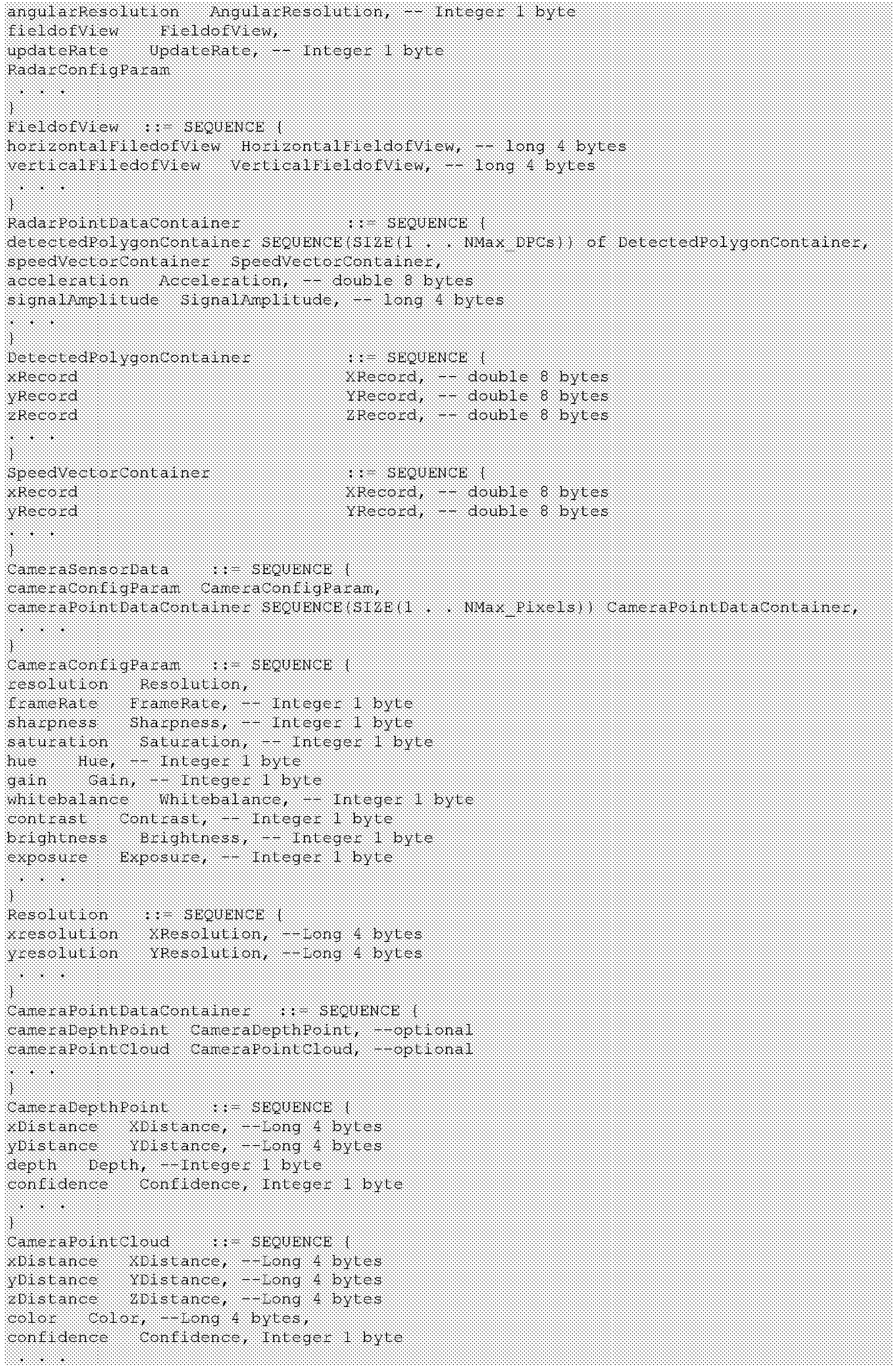

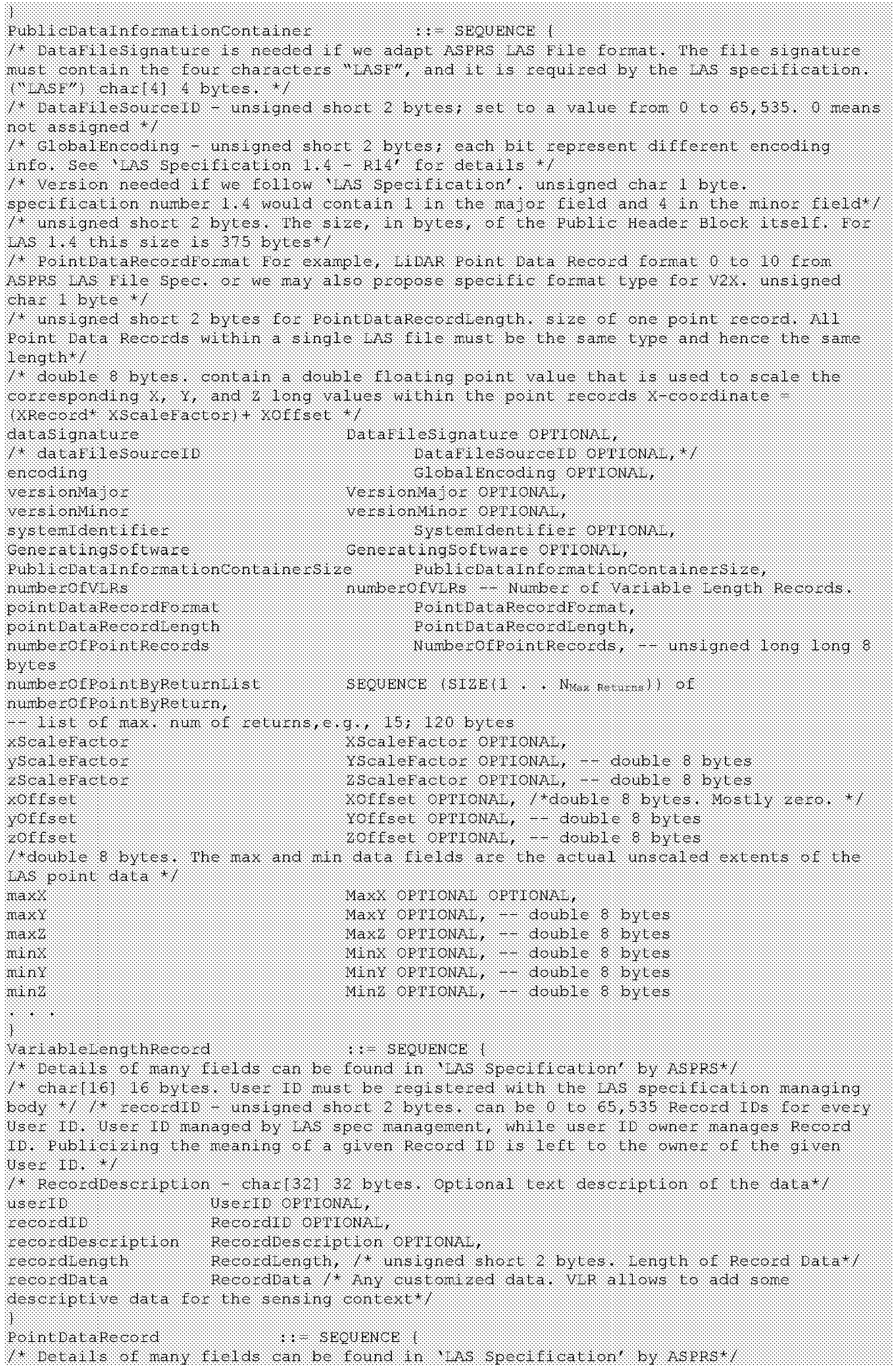

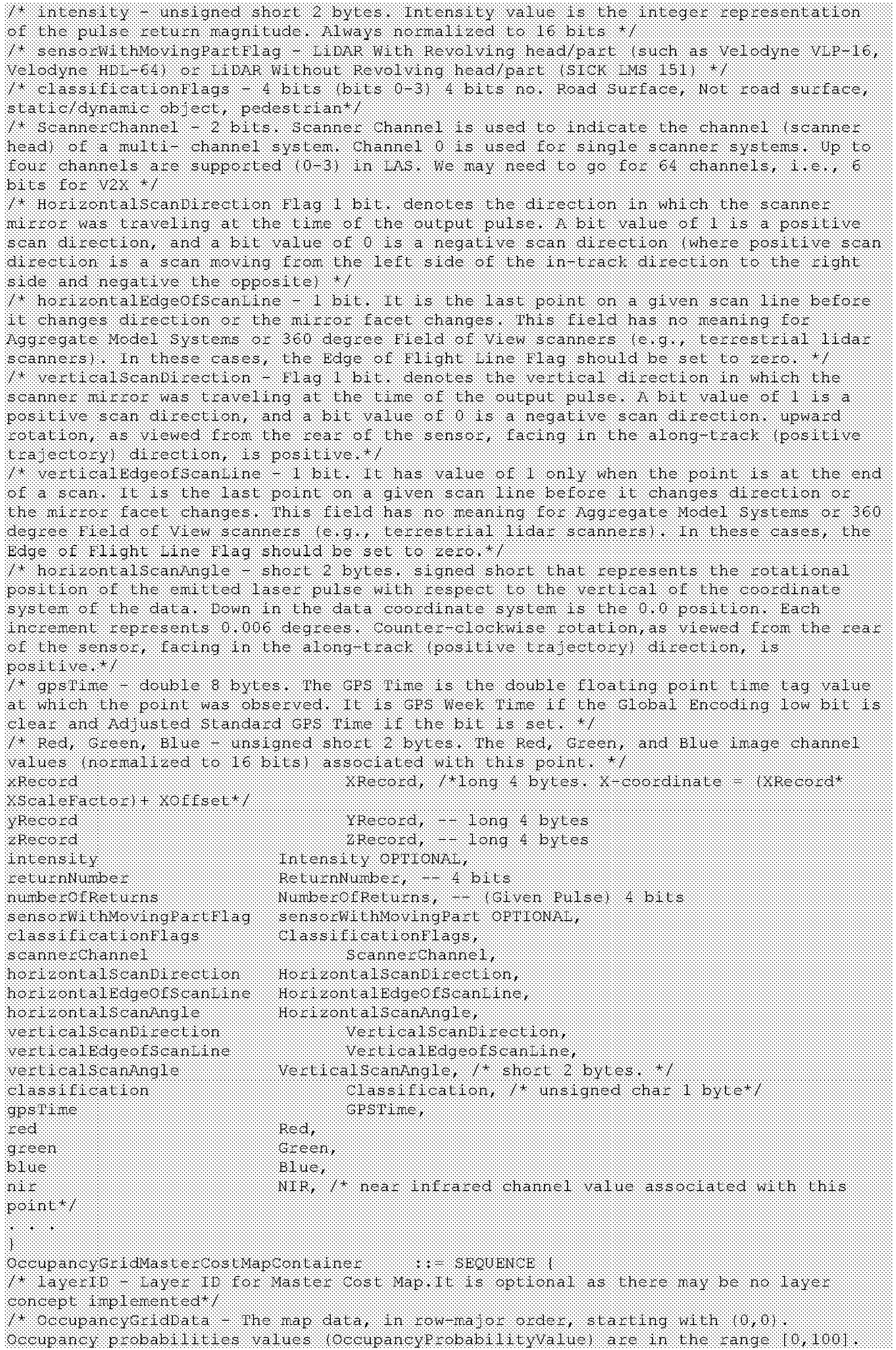

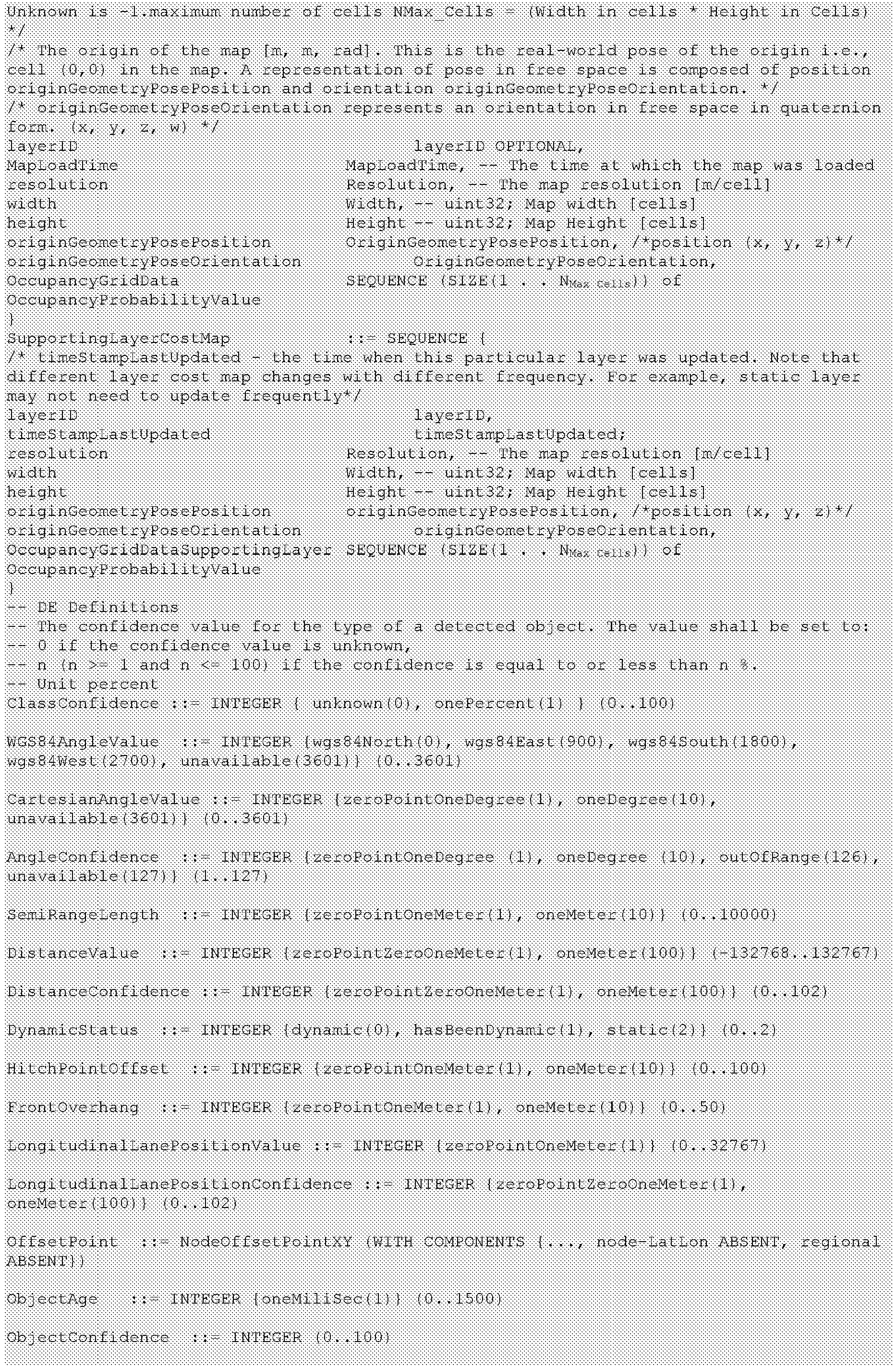

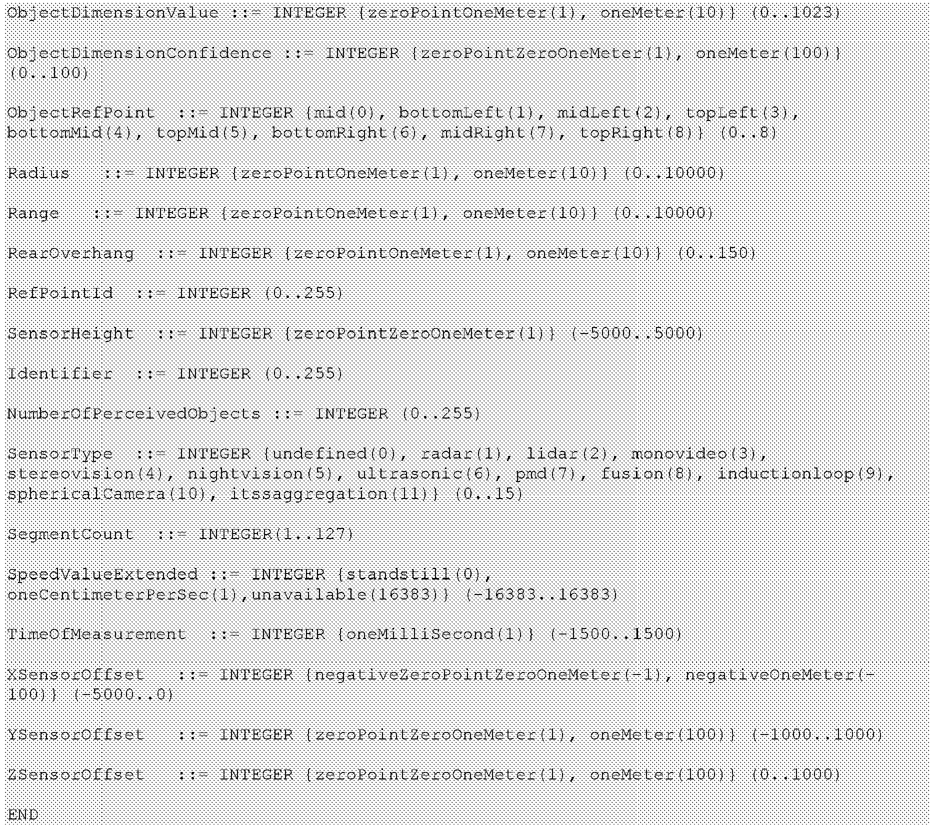

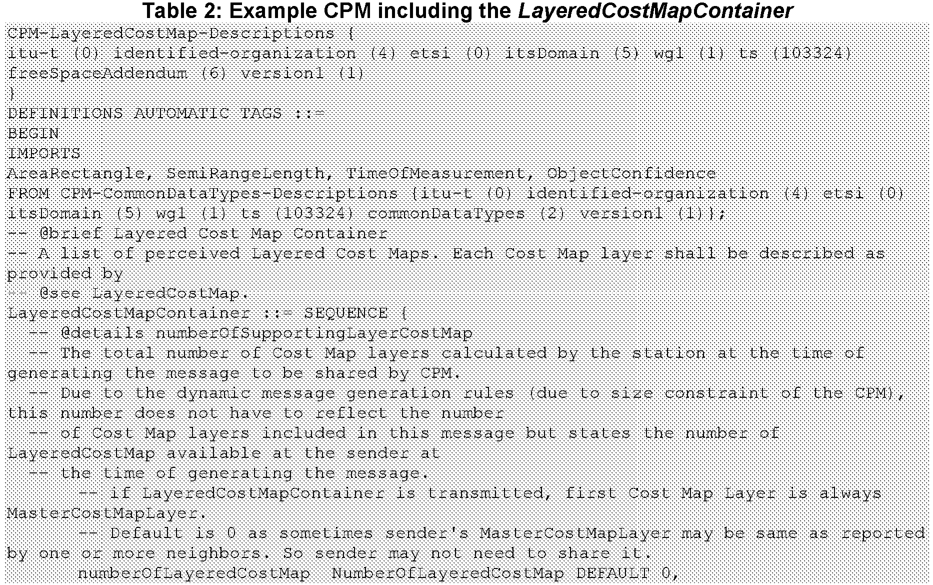

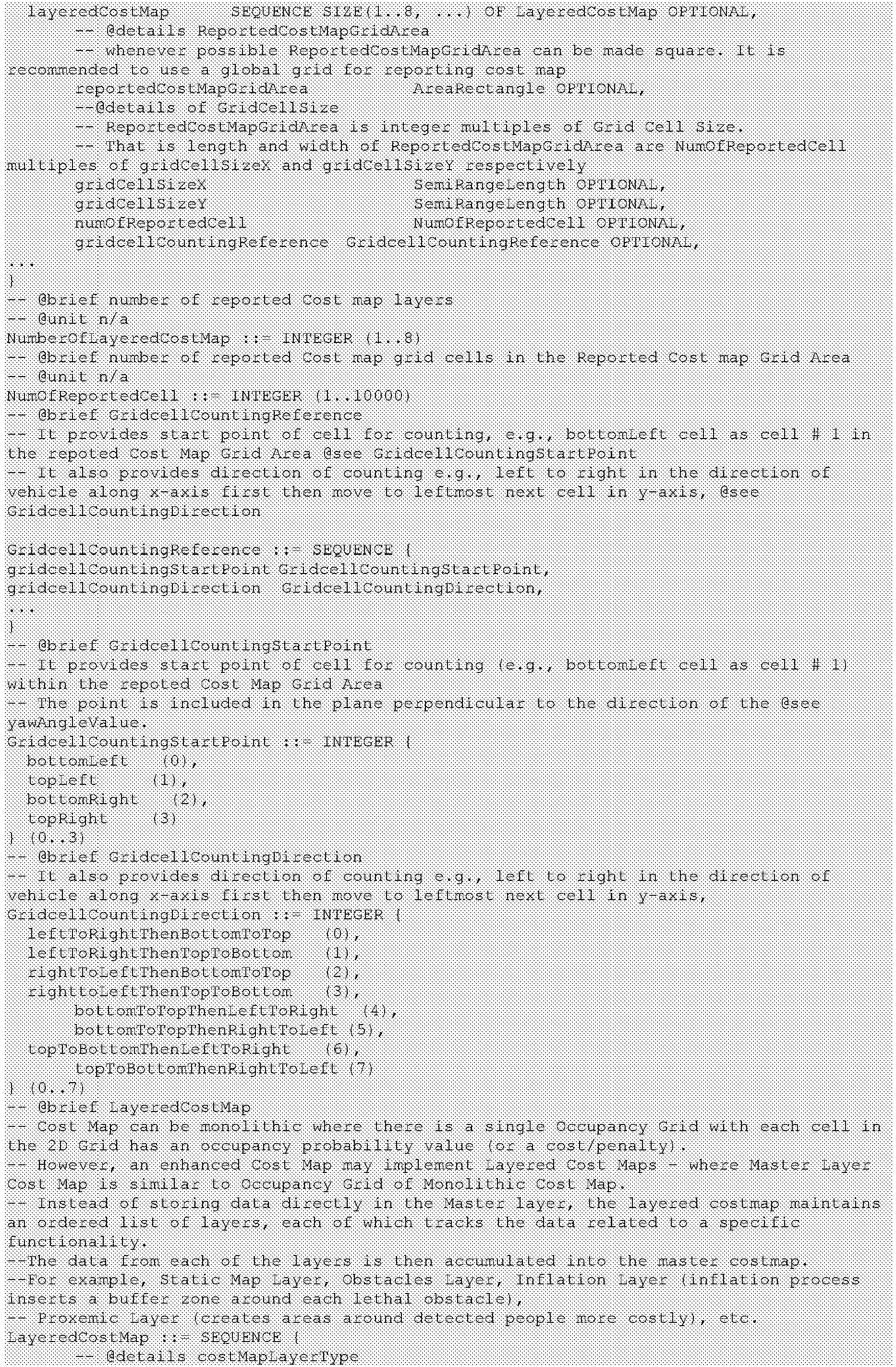

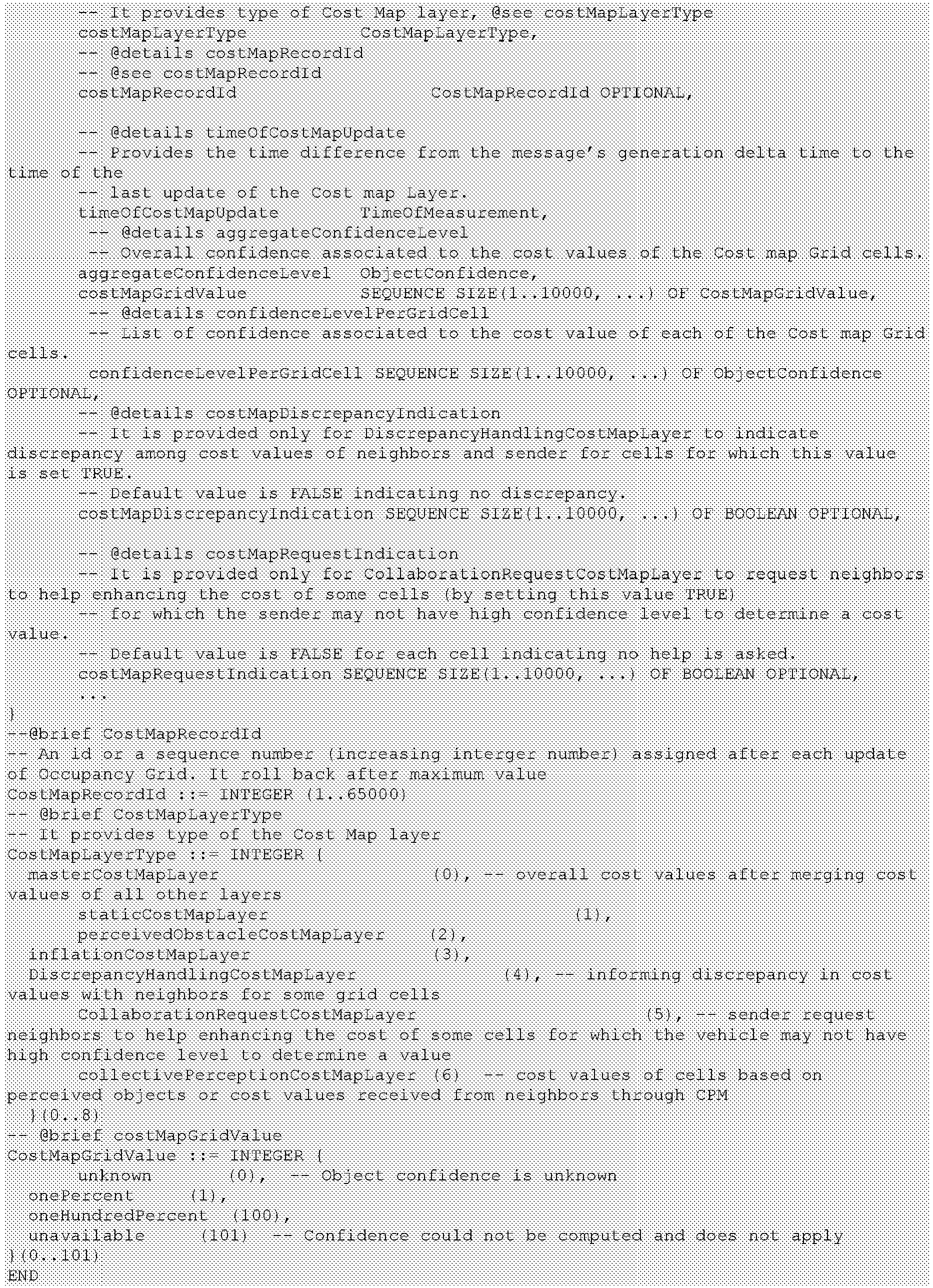

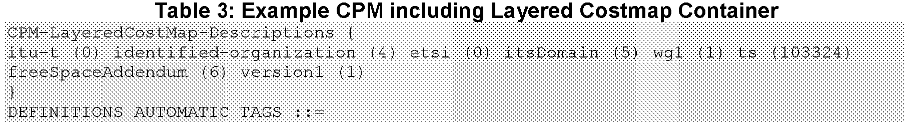

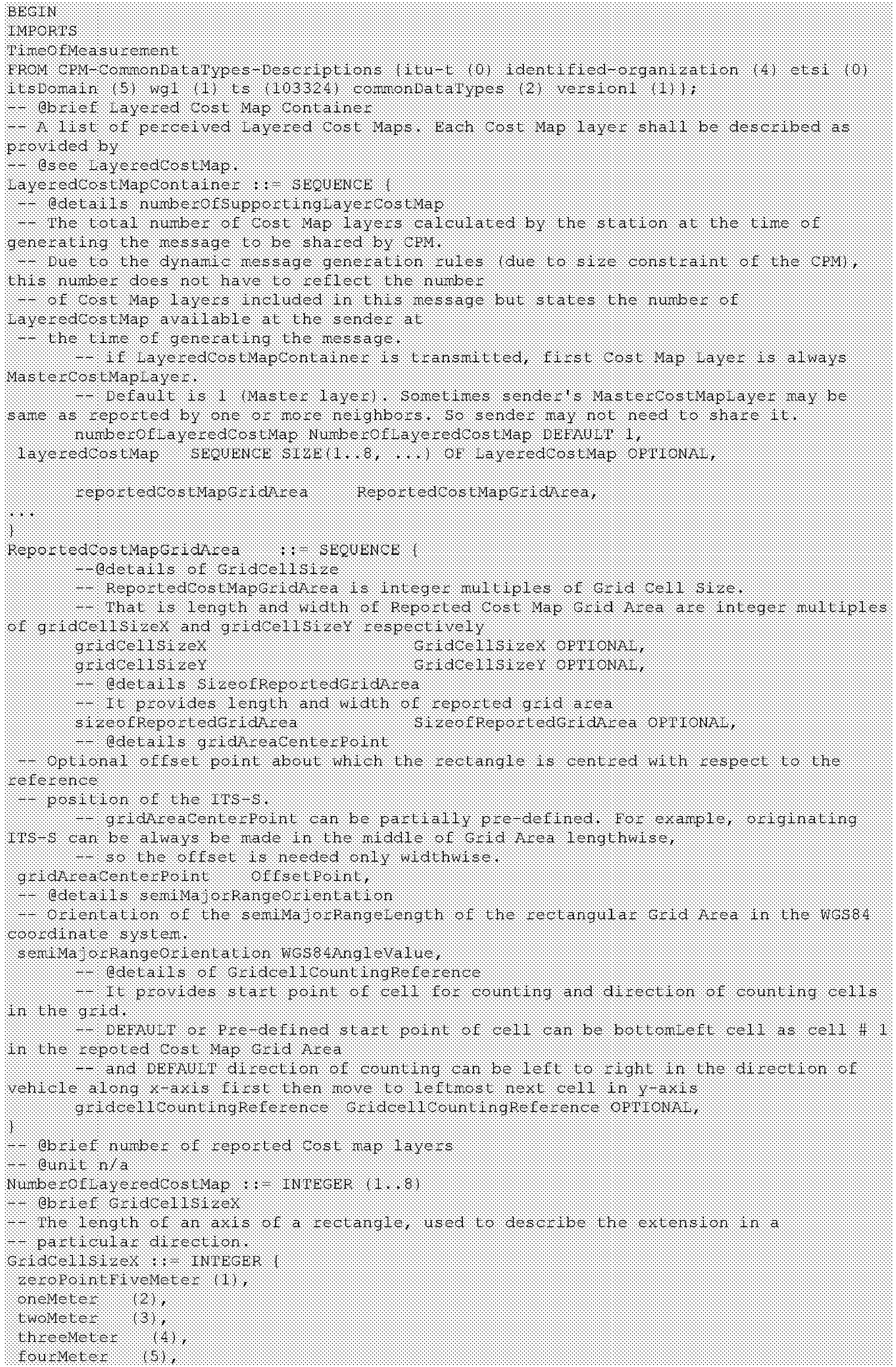

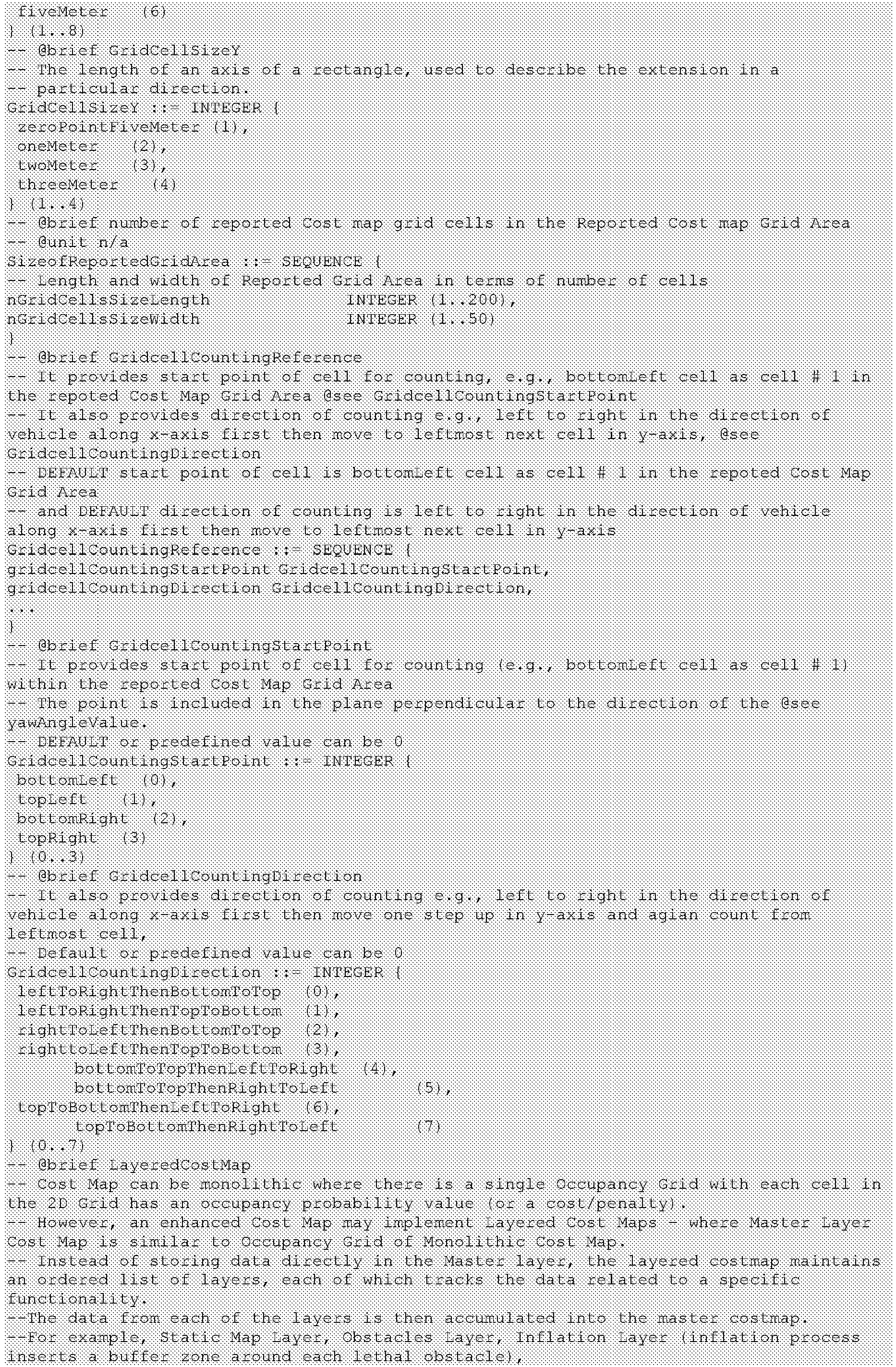

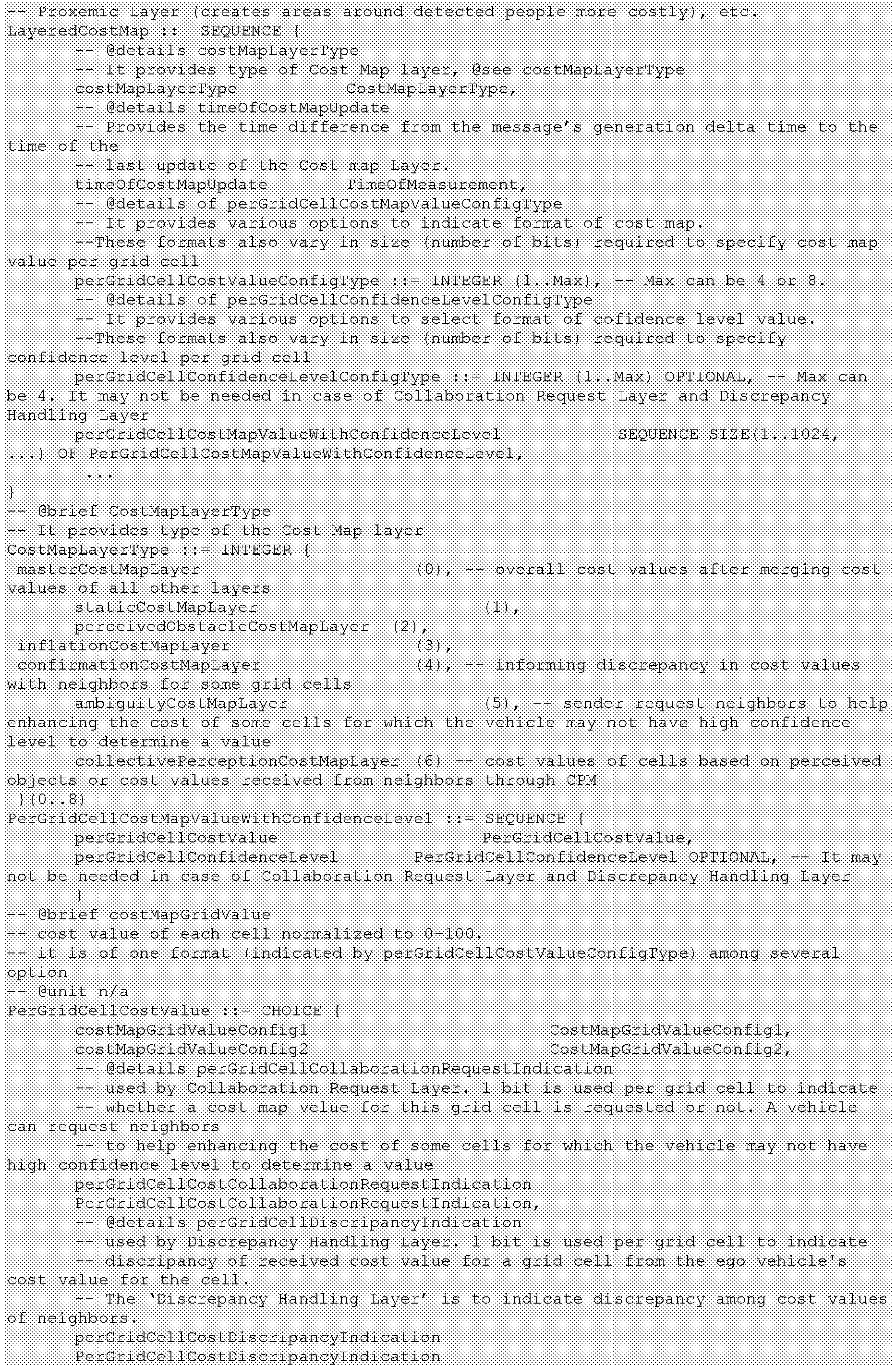

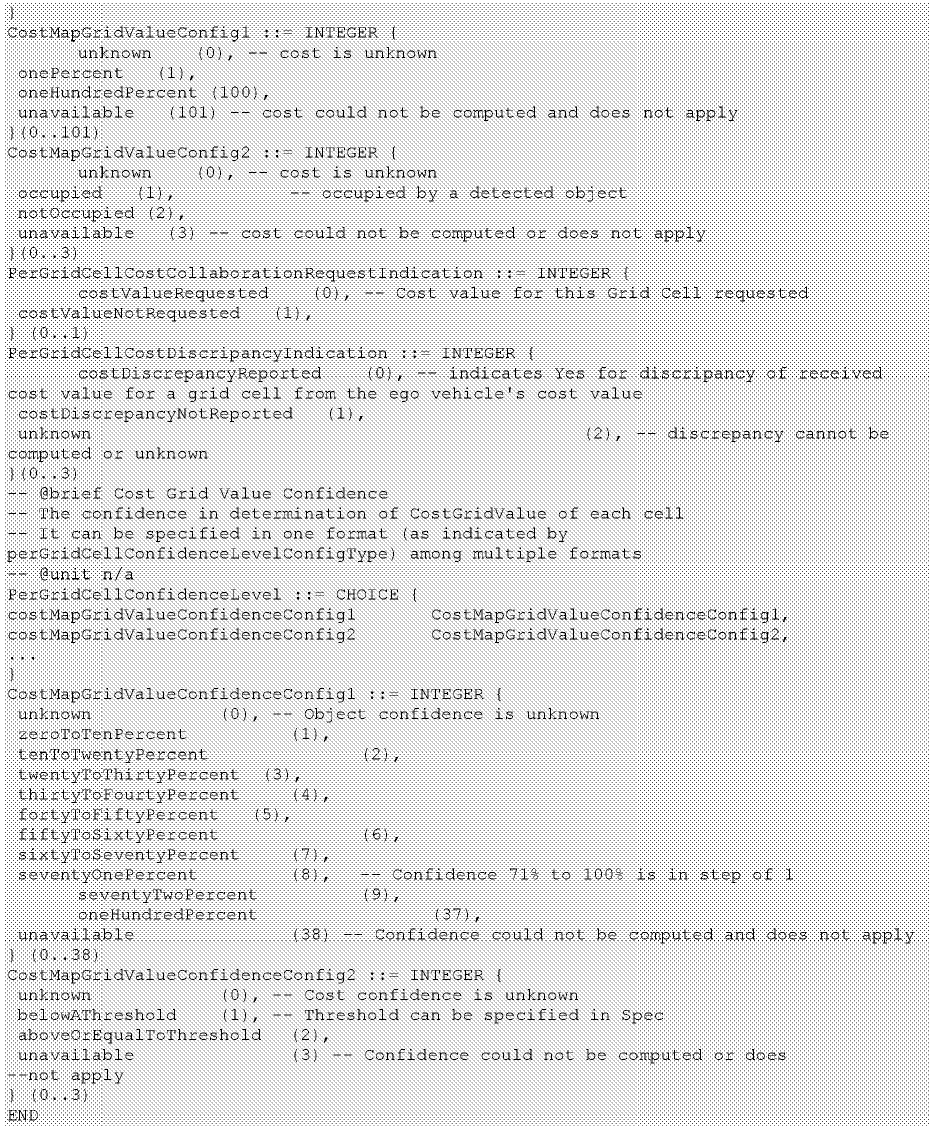

### I.C. CPS FOR AREAS INCLUDING A HIGH OBJECT DENSITY

Embodiments herein also address challenges and potential inefficiencies of current CPS [R02] for scenarios/cases with very high density of specific types/classes of perceived objects. The present disclosure provides embodiments to address those challenges/inefficiencies. One example of such high density of specific type(s)/class(es) of objects has been identified and explored in ETSI TR 103 300-1 v2.1.1 (2019-09) and ETSI TS 103 300-2 V0.3.0 (2019-12) (e.g., scenario of presence of very high Vulnerable Roadside User (VRU) density). Example scenarios of very high VRU densities can be crowded urban intersections and sidewalks, intersection and sidewalks near a big public event like sports-events/music-concerts, a herd of animals/wild-animals/pets on sidewalk/road, kids on sidewalk coming out of kids-event/game, etc. It results in tens or hundreds of objects (like pedestrians) crossing/waiting-to-cross intersection/zebra-crossing, and so on. Similarly, a group of cyclists, horse-riders, etc may move as a close group on bike-lane, sidewalk, etc. In these scenarios, objects of similar class usually walk/stay as a close group on the sidewalk or road with their velocities or directions being coherent and their location being within a bounding area. Enabling a provision to report these objects as a group with proper group information in the CPM can significantly reduce CPM overhead and improve CPS efficiency.

In the existing CPS standards, each detected object is reported as an individual object in the above-mentioned scenario (e.g., presence of high density of same types/classes of objects with their velocities and/or directions being coherent and their location being within a perception area), which may not be the efficient way of collective perception due to the following reasons:
It may create huge communication overhead with no or marginal gain in improving efficiency and safety of the ITS. Since objects are acting as a close group in such scenarios, providing information about the objects-group is good enough for the collective perception to enable efficient and safe collaborative driving.

Redundancy Mitigation Techniques and Timely Sharing of Perceived Objects: Many ITS-Ss will perceive and report same objects/pedestrians/VRUs in their CPMs with different object IDs (e.g., same object/VRU being assigned different IDs by different ITS-S) in such scenario. To reduce the redundancy in object list of CPM, each ITS-S may need to process/compare several objects with multiple object IDs for same object (each object may have been assigned different object IDs from different ITS-Ss) with its own perceived object list based on other information of these objects like location, dimension, etc to identify redundancy. Moreover, perceived object attributes for same object may be different for different ITS-Ss as objects may be too close or objects may have overlapping view. Redundancy mitigation technique may not work effectively in such scenario.

Since existing redundancy mitigation [R02] may not work efficiently in such scenario, reporting all (or most of the) perceived objects timely may be hard with the current limit on maximum number of objects (128) in a CPM and constraint on the maximum size of CPM (size may depend on lower/access layer). It may take several CPM cycles to share all the perceived objects. Sharing objects as individual entities will also create significant communication overhead at access layer specially if ITS-S cannot handle redundancy effectively in such case.

Reporting as group of objects may also help in handling perception challenges/errors in such dense scenario. For examples, objects can be too close, objects can have overlapping view, etc. So, identifying each individual object and its attributes (like location, dimension) may be challenging. Group reporting may be more robust to such perception challenges/errors.

Reporting as a group can also help in relaxing CPM generation/transmission trigger and frequency. For example, detecting a new object of same class/category in the already reported group boundary may not need immediate trigger for new CPM generation/transmission.

The embodiments herein extend the existing CPS to enable Group reporting of same class of objects when they are closely located and moving/acting as a close group, such as for high density scenarios with the same types/classes of objects. In some embodiments, objects of more than one class/type can be included in the same Object Cluster. An ObjectCluster with only one class/type of objects may be referred to as a "homogeneous ObjectCluster," and an ObjectCluster with more than one class/type of objects may be referred to as a "heterogeneous ObjectCluster."

Currently, there are ongoing works in ETSI to enable CPS for ITS, which provides basic functionalities to share sensing capabilities and perceived objects among proximate V-ITS-S [R02]. Current work provides broadcast based CPM sharing, which can be expensive in terms of network overhead and can be optimized for collective perception especially for the scenarios like presence of high density of same types/classes of objects. In the existing CPS [R02], each perceived object is reported as an individual object, which can be very inefficient for the scenario of presence of high density of same types/classes of objects due to several reasons discussed above. Existing CPS still lacks way to report Group of the same class of objects as a single entity when their locations are too close, and they are moving/acting as a close group.

Embodiments herein extend the existing CPS to enable group reporting of same or similar class of objects as a single entity/object when their locations are relatively close to one another, and they are moving/acting as a close group, which could be used for scenarios including presence of high density of same types/classes of objects. The embodiments herein involve message exchanges among nodes, such as CPM exchanges among various V-ITS-S, R-ITS-S, and/or VRU ITS-Ss. The embodiments herein can also be adopted in cellular standards such as ETSI and/or 3GPP. The embodiments herein enable collective perception among proximity (proximate) vehicles for efficient, safe and coordinated autonomous driving environment.

### I.C.1. EXAMPLE CPM STRUCTURES AND FORMATS FOR PERCEIVED OBJECT CLUSTERS

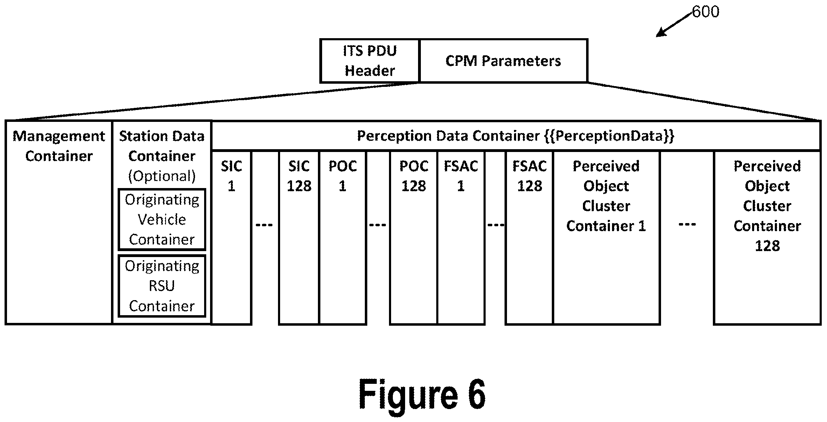

Referring now to Figure 6, which shows a modified CPM 600 according to various embodiments. The modified CPM 400 includes the Sensor Information Container(s) (SIC), Perceived Object Container(s) (POC), and the Free Space Addendum Container(s) (FSAC) as discussed previously with respect to Figure 3, as well as a new Perceived Obj ectCluster Container to share object clusters among neighbors (or proximate ITS-Ss).

The modified CPM 600 includes the addition of a Perceived Object Cluster Container (*perceivedObjectClusterContainer*). The *perceivedObjectClusterContainer* is of type *PerceptionData.* The *perceivedObjectClusterContainer* is used to report a group or cluster of the same/similar class of objects as a single entity referred to as a "Perceived Object Cluster" (*perceivedObjectCluster*) when their locations are close or proximate to one another (e.g., within some predefined distance or the like), and they are moving/acting as a close group. Moving/acting as a close group may involve objects having a coherent heading and speed, and/or a same or similar speed and direction of travel.

### I.C.2. GENERATION OF PERCEIVED OBJECT CLUSTER CONTAINER OR MODIFICATION OF EXISTING OBJECT CLUSTER A TAND ITS-S

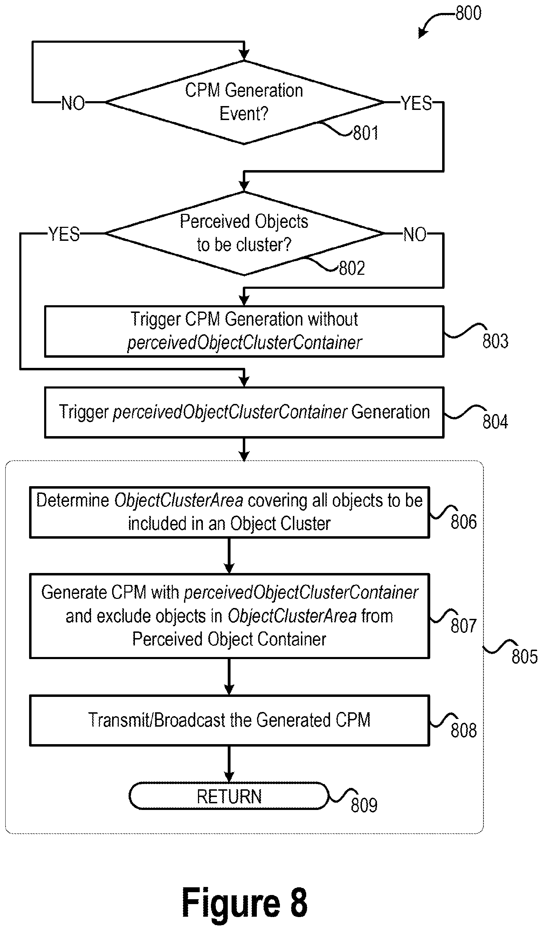

Figure 8 illustrates an example process 800 for triggering generation of a *perceivedObjectClusterContainer* according to various embodiments. Process 800 may be performed or operated by a CPS entity in an ITS-S (see e.g., Figure 10). Process 800 begins at operation 801 where CPS element determines whetheer a CPM generation event has occurred. This may be a periodic (time interval) check or in response to detection of a specified event, such as any events discussed herein. If the CPM generation event has not occurred, then the CPS element loops back to perform operation 801 to continue to monitor for occurrence of a CPM generation event. If a CPM generation event has occurred, then the CPS element proceeds to operation 802 to determine whether any perceived objects should be grouped or clustered into an Object Cluster.

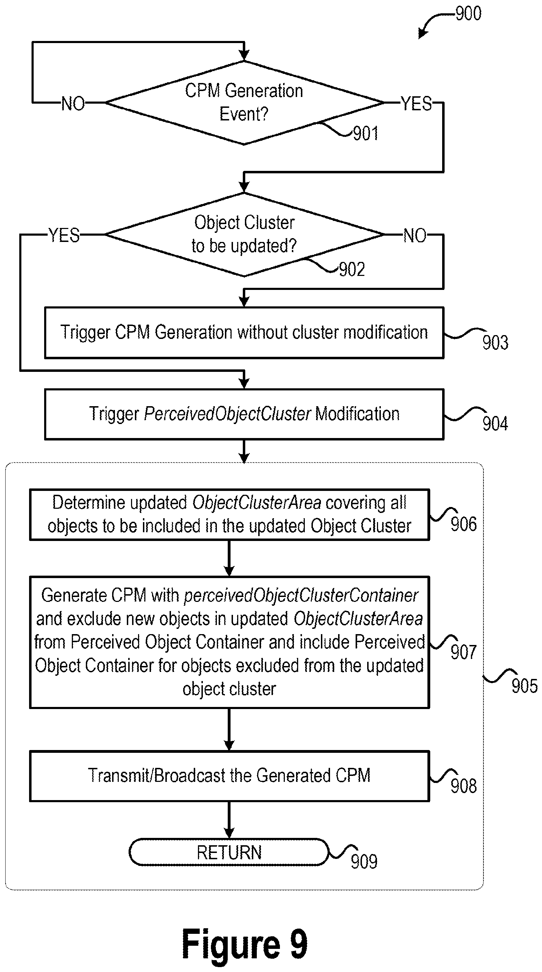

Before each CPM generation event, at operation 802, the CPS element may determine whether a number of perceived objects is greater than or equal to a minimum number of objects that are permitted to be in a cluster (N_{min_objectcluster}) and whether those perceived objects a same or similar class/type are (i) located closer than a minimum clustering distance (D_{min_objectcluster}) with each other and (ii) are travelling at a same or similar heading and a same or similar speed profile. The speed profile may indicate the velocity and/or acceleration of an object. As an example, the speed difference among objects may be less than a maximum speed differential percentage (V_{maxdiff_objectcluster} %) with each other to be included in a cluster. In embodiments, if the CPS entity finds more than or equal to N_{min_objectcluster} (e.g., N_{min_objectcluster} = 2, 3, 4, or some other interger value) perceived objects of same class/type (i) located closer than D_{min_objectcluster} (e.g., 2, 3, 4, or 5m, or some other value) with each other and (ii) with similar heading and similar speed profile (e.g., speed difference less than V_{maxdiff_ objectcluster} % with each other), CP service module triggers ObjectCluster Container Generation. V_{maxdiff_ objectcluster} may need to be satisfied in one or more speed dimensions (e.g., xSpeed, ySpeed, zSpeed of an object may need to be within (+/-) V_{maxdiff_ objectcluster} % of average speed of the ObjectCluster in x-, y- and z-direction). In some embodiments, the CPS entity may check for new Object Cluster(s) or updates in existing Object Cluster(s) (see e.g., Figure 9) right before each CPM generation.

If at operation 802 the CPS entity determines that the perceived objects should not be grouped into an object cluster, then the CPS entity proceeds to operation 803 to generate the CPM without the *perceivedObjectClusterContainer.* If the perceived objects should be clustered, then the CPS entity proceeds to operation 804 to trigger CPM *perceivedObjectClusterContainer* Generation, and then proceeds to the *perceivedObjectClusterContainer* Generation, Transmission, and Reception subprocess 805.

Subprocess 805 includes operation 806 where the CPS entity determines the *ObjectClusterArea* covering all objects to be reported as a group in the *ObjectCluster,* and gathers other information to be included in the *perceivedObjectClusterContainer.* At operation 807, the CPS entity generates the CPM including the *perceivedObjectClusterContainer* and excluding objects in the *ObjectClusterArea* from being included in their own *PerceivedObjectContainers.* At operation 808, the CPS entity transmits or broadcasts the generated CPM, and at operation 809, the CPS module returns back to operation 801. Upon reception, neighbors also exclude any object of same class (with similar heading/speed profile) in the *ObjectClusterArea* from individual Object containers of their CPMs. The CPS module may periodically check for one or more new ObjectCluster(s) possibilities.

Figure 9 illustrates an example process 900 for modifying a *PerceivedObjectCluster* according to various embodiments. Process 900 may be performed or operated by a CPS entity in an ITS-S (see e.g., Figure 10). Process 900 begins at operation 901 where CPS element determines whether there is a CPM generation event in a same or similar manner as discussed with respect to operation 801 of process 800 of Figure 8.

At operation 902, the CPS element determines whether any existing object clusters should updated or modified. The CPS element checks updates about existing object cluster(s) such as whether an existing object cluster is still valid (e.g., updated number of objects in objectcluster ≥ N_{min_objectcluster}), a change in the number of perceived objects in the *PerceivedObjectCluster,* and/or a change in object cluster area's center offset.

As an example, an updated object cluster can be added to the current CPM if the difference between the current Euclidian distance of the center of current *ObjectClusterArea* and the Euclidian distance of the center of same *ObjectClusterArea* previously included in a previous CPM exceeds a threshold (e.g., 4 m).

In another example, an updated object cluster can be added to the current CPM if the difference between the current Radius or SemiRangeLength of the *ObjectClusterArea* and the Radius or SemiRangeLength of the same *ObjectClusterArea* included in a previous CPM exceeds a threshold (e.g., 4 m).

In another example, an updated object cluster can be added to the current CPM if the difference between the current semiMajorRangeOrientation of the *ObjectClusterArea* and the semiMajorRangeOrientation of the same *ObjectClusterArea* included in a previous CPM exceeds a threshold (e.g., 4 degrees).

In another example, an updated object cluster can be added to the current CPM if the difference between the orientation of the vector of the current estimated ground velocity of the Object Cluster and the estimated orientation of the vector of the ground velocity of the reference point of this Object Cluster included in a previous CPM exceeds a threshold (e.g., 4 degrees).

If at operation 902 the CPS entity determines that the existing object cluster should not be updated, then the CPS entity proceeds to operation 903 to generate the CPM without updating the object cluster, such as by generating a CPM without an object cluster or performing process 800 of Figure 8. If the existing object cluster should be updated, then the CPS entity proceeds to operation 904 to trigger CPM *PerceivedObjectCluster* Modification, and then proceeds to the *PerceivedObjectCluster* Modification subprocess 905.

Subprocess 905 includes operation 906 where the CPS entity determines the *ObjectClusterArea* covering all objects to be reported in the updated object cluster, and gathers other information to be included in the *perceivedObjectClusterContainer.* At operation 907, the CPS entity generates the CPM including the *perceivedObjectClusterContainer* and excluding new objects in the *ObjectClusterArea* (objects newly added to the object cluster) from being included in their own *PerceivedObjectContainers* and includes a *PerceivedObjectContainer* for each object excluded from the updated object cluster. For objects that are removed or otherwise excluded from an existing object cluster, the CPS module considers these objects for inclusion in individual perceived object containers. The *ObjectClusterArea* can be adjusted to exclude these objects and/or other information can also be collected for the excluded objects. After exclusion of these objects, if the existing object cluster covers less than N_{min_objectcluster} objects, the *perceivedObjectClusterContainer* is removed from the CPM and remaining objects in this object cluster are considered for inclusion in individual Perceived Object Container.

At operation 908, the CPS entity transmits or broadcasts the generated CPM, and at operation 909, the CPS module returns back to operation 901. Upon reception, neighbors also exclude any object of same class (with similar heading/speed profile) in the updated *ObjectClusterArea* from individual Object containers of their CPMs. The CPS module may periodically check for one or more new ObjectCluster(s) possibilities and consider some objects (excluded in updated ObjectCluster) for transmission as individual Object Container of CPM.

### I.C.3. PERCEIVED OBJECT CLUSTER CONTAINER CONTENTIDA TA

In various embodiments, the Information about the object cluster/group to be provided in the ObjectCluster container may include one or more of the following datalinformation:
ObjectClusterID - an identifier associated with a particular object cluster.
objectClusterAge - ObjectCluster First Reported Time.
timeOfMeasurement: ObjectCluster Info Last Modified Time - e.g., most recent time any information of the ObjectCluster has been modified. This time is provided as the time difference for the provided measurement of the ObjectCluster with respect to the generation delta time stated in the management container. In one embodiment, one or more new objects may be detected in an ObjectCluster, in such a case, measurement Time associated with the last (later most) detected object can be considered as the measurement time (e.g., Last Modification Time) of the ObjectCluster. In another embodiment, one or more existing objects may be removed from (e.g., disqualified to remain in) an ObjectCluster, in such a case, measurement Time associated with the last removed object can be considered as the measurement time (e.g., Last Modification Time) of the ObjectCluster. In another embodiment, one or more new objects can be detected, and one or more existing objects can be removed from (e.g., disqualified to remain in) an existing ObjectCluster, in such a case, the detection or removal whichever occurs last (later most) can be considered as the measurement time (e.g., Last Modification Time) of the ObjectCluster. In another embodiment, there is no change in object detection or removal, however, ObjectCluster Area's offset point, speed, heading, orientation may be changed triggering Information update of the ObjectCluster. In such a case, measurement time of such changes can be considered as the measurement time (e.g., Last Modification Time) of the ObjectCluster.

### SensorIDList

ObjectClusterType - Homogeneous or Heterogeneous ObjectCluster
Names of Class(es)/Type(s) of objects in the ObjectCluster
Number of objects (or number of objects per object/class)
ObjectClusterArea of the ObjectCluster:
   Shape and size of the ObjectCluster Area. Various types of Area defined in current CPM [R02] such as AreaRectangle, AreaEllipse, AreaCircular can be used to specify ObjectCluster Area. In most of the cases, AreaRectangle is good enough to specify Shape and size of the ObjectCluster Area, due to rectangular shapes of intersection, zebra-crossing and sidewalks.

Position of the object cluster (reference point of the ObjectCluster and coordinates of the reference point with reference to the reporting ITS-S/vehicle). Similar data elements DEs (as those defined Various types of DetectionArea defined in current CPM [R02]) can be used to specify the ObjectCluster Area. For example, Rectangular Object Area can be specified by following data elements (DEs):
- nodeCenterPoint OffsetPoint (center of rectangular area with respect to reporting ITS-S); semiMajorRangeLength (SemiRangeLength), semiMinorRangeLength (SemiRangeLength), semiMajorRangeOrientation (WGS84AngleValue), semiHeight (SemiRangeLength) - In case of ObjectCluster, height will be considered as Max height of any object covered by Obj ectCluster.
- Aggregated confidence level of the objectcluster detection (e.g., Minimum and Maximum confidence levels among all perceived objects included in the objectcluster).
- Heading and Speed of the ObjectCluster (Average values of all objects). For example, xSpeed; ySpeed; zSpeed, xAcceleration, yAcceleration, zAcceleration, yawAngle,
- ObjectCluster Constarints (e.g., N_{min_objectcluster}, D_{min_objectcluster}, V_{maxdiff_} objectcluster).
- ObjectCluster Parameters (e.g., N_{Additional_Perceived_Objects}).
- MergedFlag: Merging Indicator - indicates whether the current ObjectCluster was created as a result of merging one or more other ObjectClusters.
- minOverlappedAreaForMerging: Minimum overlapped area of two ObjectClusters when they can be considered for merging.
- dynamicStatus: Dynamic (e.g., if at least one object in ObjectCluster is moving); Has Been Dynamic (e.g., if at least one object in ObjectCluster has been dynamic before); Static (e.g., if none of the objects in ObjectCluster is moving or has been dynamic in past).
- matchedPosition - Lane IDs (e.g., one Lane ID where center of ObjectCluster is located or one or more lane IDs occupied by ObjectCluster Area); longitudinalLanePosition.

### I.C.4. ACTIONS ON GENERATION, TRANSMISSION, AND RECEPTION OF PERCEIVED OBJECT CLUSTER

At a Tx ITS-S, if a new Object Cluster report is triggered, the CPS module determines the *ObjectClusterArea* covering all objects to be reported as a group in the Object Cluster. The CPS module ensures that these objects are now excluded from individual perceived object containers.

If a modification in the existing Object Cluster is triggered, the CPS module updates the information included in the *perceivedObjectClusterContainer* (see e.g., section ***I.C.3*** supra). When one or more new objects of same or similar class moves closer to an existing object cluster (e.g., satisfying D_{min_objectcluster}) and/or other contraints (e.g., V_{maxdiff_ objectcluster}, etc.), the new perceived objects are included in the updated Object Cluster. The CPS module ensures that these objects are now excluded from individual perceived object containers. An updated *ObjectClusterArea* and other information are collected.

When one or more existing perceived objects in an existing Object Cluster move away from the Object Cluster (e.g., more than D_{min_objectcluster}) and/or violate other constraints (e.g., V_{maxdiff_ objectcluster}, etc.), these objects are excluded from the updated Object Cluster. The CPS module then considers these objects for inclusion in individual perceived object containers. An updated *ObjectClusterArea* and other information are collected. After exclusion of these objects, if the existing Object Cluster covers less than N_{min_objectcluster} objects, the *perceivedObjectClusterContainer* is removed from the CPM and remaining objects in this Object Cluster are considered for inclusion in individual Perceived Object Containers.

At the Rx ITS-S, if a new Object Cluster report is received at a node/neighbor, the CPS module of the Rx ITS-S identifies any perceived object covered by the received Object Cluster and ensures that these objects are now excluded from individual perceived object containers. If a modification in the existing Object Cluster is received at the Rx ITS-S, the CPS module of that Rx ITS-S identifies any new perceived objects covered by the received updated Object Cluster and ensures that these objects are now excluded from individual perceived object containers. The Rx ITS-S also identifies any previously covered objects which are excluded in the received updated ObjectCluster and considers these objects for inclusion in individual perceived object containers in the future.

### I.C.5. REDUNDANCY MITIGATION OF PERCEIVED OBJECTS IN PERCEIVED OBJECT CLUSTER CONTAINER

As mentioned earlier, if an Object Cluster of a specific object class/type is reported in CPM by an ITS-S, other neighboring ITS-Ss stop reporting same class of objects located within the reported ObjectCluster area. It reduces the size of CPMs in the proximity.

If an ITS-S N2 finds that it has better information about the Object Cluster OC1 reported by another ITS-S N1, N2 may start reporting OC1 in some cases. N1 then stops reporting OC1. For example, N2 can detect more number of objects with higher confidence level in the reported ObjectCluster area of OC1 than reported by N1. It can happen when N2 has better view of ObjectCluster Area of OC1 then N1. In another example, N2 has X additional perceived objects that can be included in OC1 by expanding ObjectCluster Area. All these new/additional objects perceived by N2 satisfy constraints specified in OC1 (such as N_{min_objectcluster}, D_{min_objectcluster}, V_{maxdiff_ objectcluster}). In some embodiments, value of X must be greater than or equal to a threshold (N_{Additional_Perceived_Objects} such as 1, 2, and so on) for N2 to take over reporting updated-OC1.

To reduce the number of CPM generation/transmission triggers, the CPM generation trigger is relaxed if one or more new objects of same class and similar speed/heading is/are detected in an existing ObjectCluster Area. In embodiments, if the number of new such perceived objects is greater than or equal to a threshold (N_{MinOCModify} such as 1, 2,3, or some other number), then only CPM generation or ObjectCluster modification is triggered, otherwise such objects can be included in ObjectCluster regular (such as periodic) CPM updates.

### I.C.5 MERGING OBJECT CLUSTERS

In some cases, ObjectClusters (e.g., two or more ObjectClusters of peoples moving on sidewalk with similar speed and heading profiles) can come very close (with fully or partially overlapped ObjectCluster Areas) due to, for example, these ObjectClusters faced different wait times during red traffic lights. In such a case merging these ObjectClusters is beneficial in reducing CPM overhead. In embodiments, two or more ObjectClusters can be merged together.

In a first embodiment, if a percentage of overlapped area of two or more ObjectClusters OC1 and OC2 is greater than or equal to a threshold (*minOverlappedAreaForMerging*) (e.g., 30%), and and OC1 and OC2 both are reported by a same ITS-S V1, then ITS-S V1 merges ObjectClusters OC1 and OC2 into a single ObjectCluster OC3.

Additionally or alternatively, OC3 may need to select new set of ObjectCluster Constarints (e.g., N_{min_objectcluster}, D_{min_objectcluster}, V_{maxdiff_ objectcluster}, etc) which are valid for objects in both ObjectClusters OC1 and OC2. For example, min value of N_{min_objectcluster} among OC1 and OC2 is selected as new N_{min_objectcluster} for OC3. Similarly, maximum values of D_{min_objectcluster} and V_{maxdiff_ objectcluster} among OC1 and OC2 are selected as new D_{min_objectcluster} and V_{maxdiff_ objectcluster} for OC3, respectively.

In a second embodiment, if the percentage of overlapped area of two or more ObjectClusters OC1 and OC2 is greater than or equal to a threshold (*minOverlappedAreaForMerging*) (e.g., 40%), and OC1 and OC2 are reported by two (or more) different ITS-Ss V1 and V2, then V1 or V2 merges ObjectClusters OC1 and OC2 into a single ObjectCluster OC3.

Various embodiments may be used to determine whether V1 or V2 should merge and report ObjectCluster OC3. In one embodiment, if OC1 has a larger number of objects in its OjectCluster Area, then V1 takes action to merge OC1 and OC2; otherwise V2 takes action to merge OC1 and OC2. In another embodiment, if OC1 has a larger Oj ectCluster Area, then V1 takes action to merge OC1 and OC2; otherwise V2 takes action to merge OC1 and OC2.

OC3 may need to select new set of ObjectCluster Constarints (such as N_{min_objectcluster}, D_{min_objectcluster}, V_{maxdiff_ objectcluster}, etc) which are valid for objects in both ObjectClusters OC1 and OC2. For example, min value of N_{min_objectcluster} among OC1 and OC2 is selected as new N_{min_objectcluster} for OC3. Similarly, maximum values of D_{min_objectcluster} and V_{maxdiff_ objectcluster} among OC1 and OC2 are selected as new D_{min_objectcluster} and V_{maxdiff_ objectcluster} for OC3, respectively.

In both the first and second embodiments, OC3 may use the ObjectCluster ID of OC1, the ObjectCluster ID of OC2, or a new ID. The new ID may be a newly generated ObjectCluster ID (e.g., generated in a same manner as an unmerged cluster), some combination of the ObjectCluster IDs of OC1 and OC2 (e.g., using a selected number of MSBs of each ID and placing each in some predefined portion (or bit positions) of the new ID), a hash of one or more of the ObjectCluster IDs, and/or the like. An indication (e.g., *mergedFlag*) can be added to the ObjectCluster container to let neighbors know about the merging. Other means for selecting or generating the new ID may be used in other embodiments.

### I.C.6. CPM SEGMENTATION AND OBJECT CLUSTER INCLUSION PRIORITY

In case the size of an encoded CPM including all perceived objects and Object Cluster candidates selected for transmission exceeds MTU_CPM, the message segmentation may occur as discussed herein and/or as discussed in [R01] and/or [R02]. Each message segment can be interpreted without the need to receive all segments. Currently, selected perceived object candidates are included in a CPM segment in a descending order of the product of an object's confidence (if available) and speed. In case the object confidence is unavailable, only the object speed is used for sorting in a descending fashion.

For an Object Cluster, a priority value for ordering objects and Object Clusters in descending in a current CPM is calculated as the product of an Object Cluster's aggregate confidence (if available), the Object Cluster's average speed, and size of the Object Cluster. In case the Object Cluster's aggregate confidence is unavailable, the product of only the ObjectCluster speed and size should be used for sorting in a descending fashion. It will provide higher priority to include ObjectCluster minimizing CPM size further in proximity.

### I.C.7. MODIFYING EXISTING PERCEIVED OBJECT CONTAINER FOR OBJECT CLUSTER REPORTING

The new container of perception data type *perceivedObjectClusterContainer* is used to report a group of objects as an Object Cluster. In some embodiments, the existing individual perceived object reporting container (*PerceivedObjectContainer*) is modified so that the *PerceivedObjectContainer* can also carry Object Clusters.

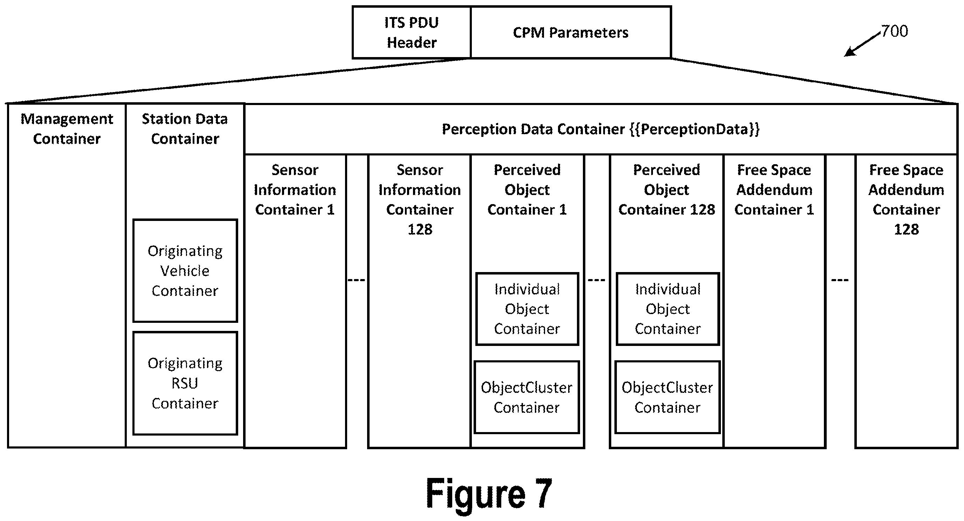

Figure 7 shows an example CPM 700 modification so that the *PerceivedObjectContainer* can carry information about either an individual perceived object (e.g., the Individual Object Container in Figure 7) or an Object Cluster (e.g., ObjectCluster Container in Figure 7).

In one embodiment, an objectReportType field is added in the 'PerceivedObject', which indicates whether the PerceivedObject is carrying information about an individual perceived object or an ObjectCluster (e.g., a group of objects). The other elements are added in the 'PerceivedObject' based on the objectReportType value. For example, if objectReportType indicates individual perceived object, data elements of the 'PerceivedObject' in existing CPM will be included. If the objectReportType indicates ObjectCluster, then the data elements (see e.g., Section AC8648.9) can be included. An example CPM according to these embodiments is shown by table 4.

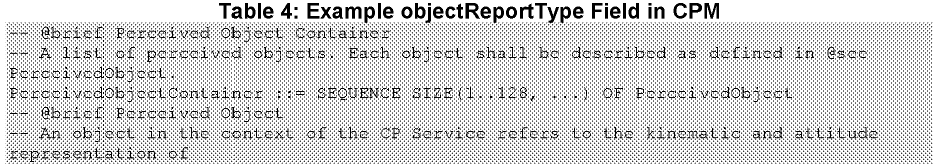

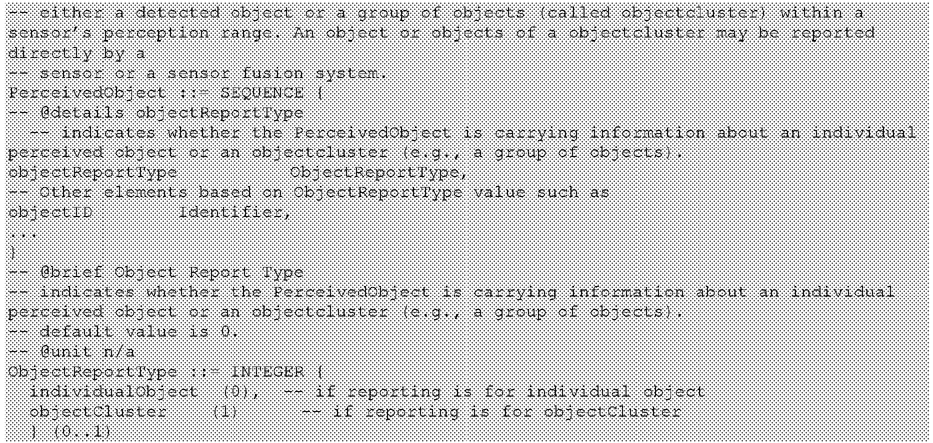

In another embodiment, the values (1 to 128) of objectID of the 'PerceivedObject' container are divided into two pools, such as objectIDPool1 (e.g., 1 to N, where 1<N<=128) and objectIDPool2 (N to 128). objectID in objectIDPool1 implicitly indicates individual perceived object reporting, while objectIDPool2 indicates objectcluster reporting. Based on objectID value, rest of the elements are added in the 'PerceivedObject'. For example, if objectID indicates individual perceived object, data elements of the 'PerceivedObject' in existing CPM will be included. If objectID indicates objectcluster, then the data elements discussed herein can be included.

### I.C.8. EXAMPLE CPM IMPLEMENTATIONS INCLUDING OBJECT CLUSTERS

Example implementations of CPMs including the object clusters are provided by tables 1-3. Contents of various containers and description of data fields (DFs) and data elements (DEs) are also provided by tables 1-3. In these implementations, DEs and/or DFs are included in the *CPMManagementInformationContainer* to enable incremental CPM transmission; containers for CP layered costmaps; containers for sharing raw data from various sensors; and subcontainers inside perceived object container(s) to include associated sensor data along with the perceived object(s). Examples of the DEs and DFs according to various embodiments are shown the following example ASN.1 representation of CPM based on the message format defined in

Examples of the DEs and DFs according to various embodiments are shown the following example ASN. 1 representation of CPM based on the message format defined in [R05]

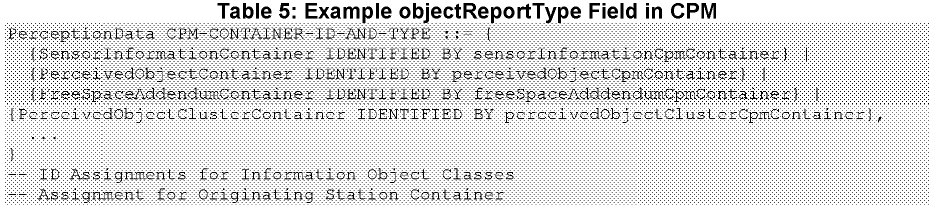

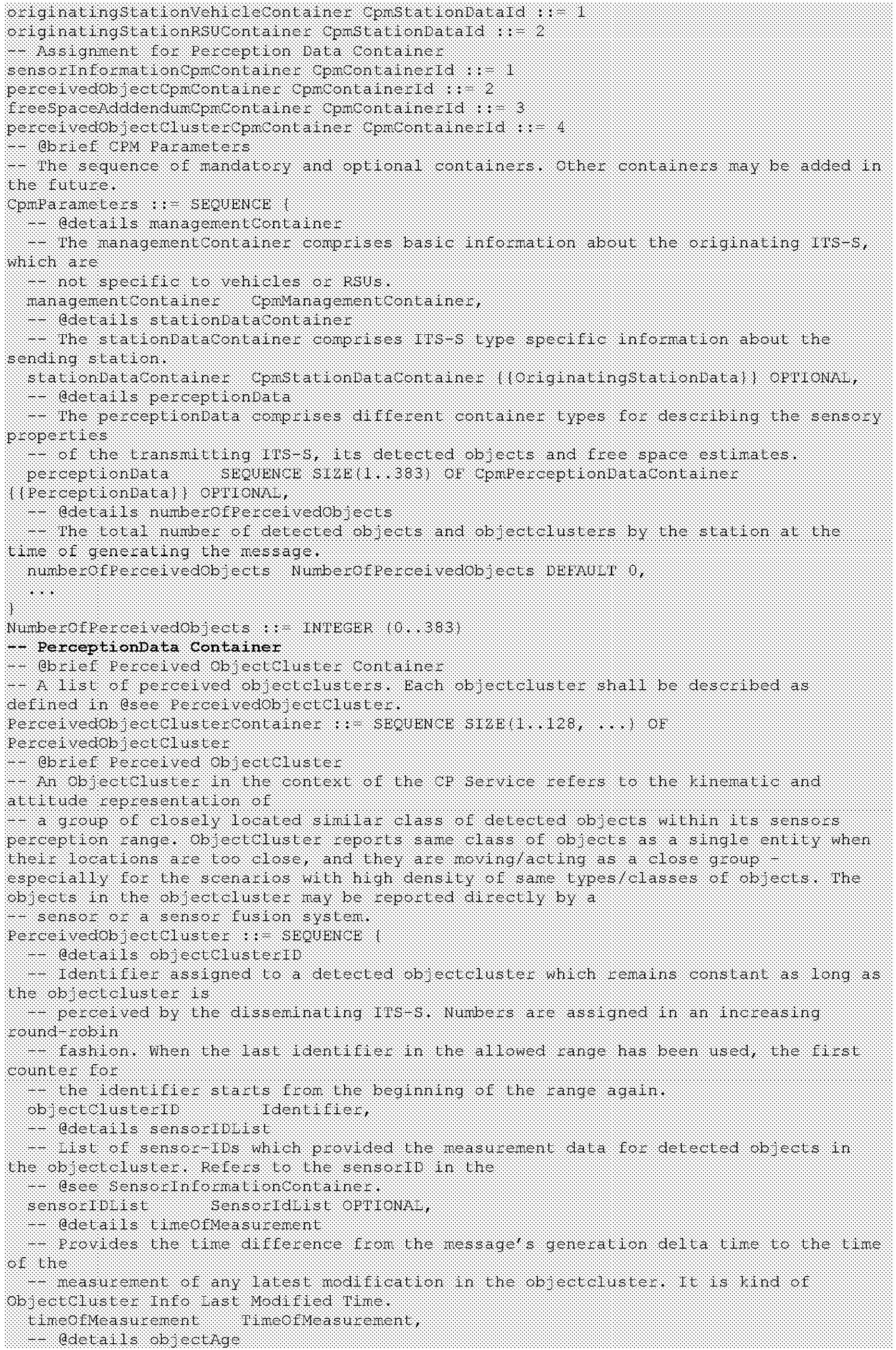

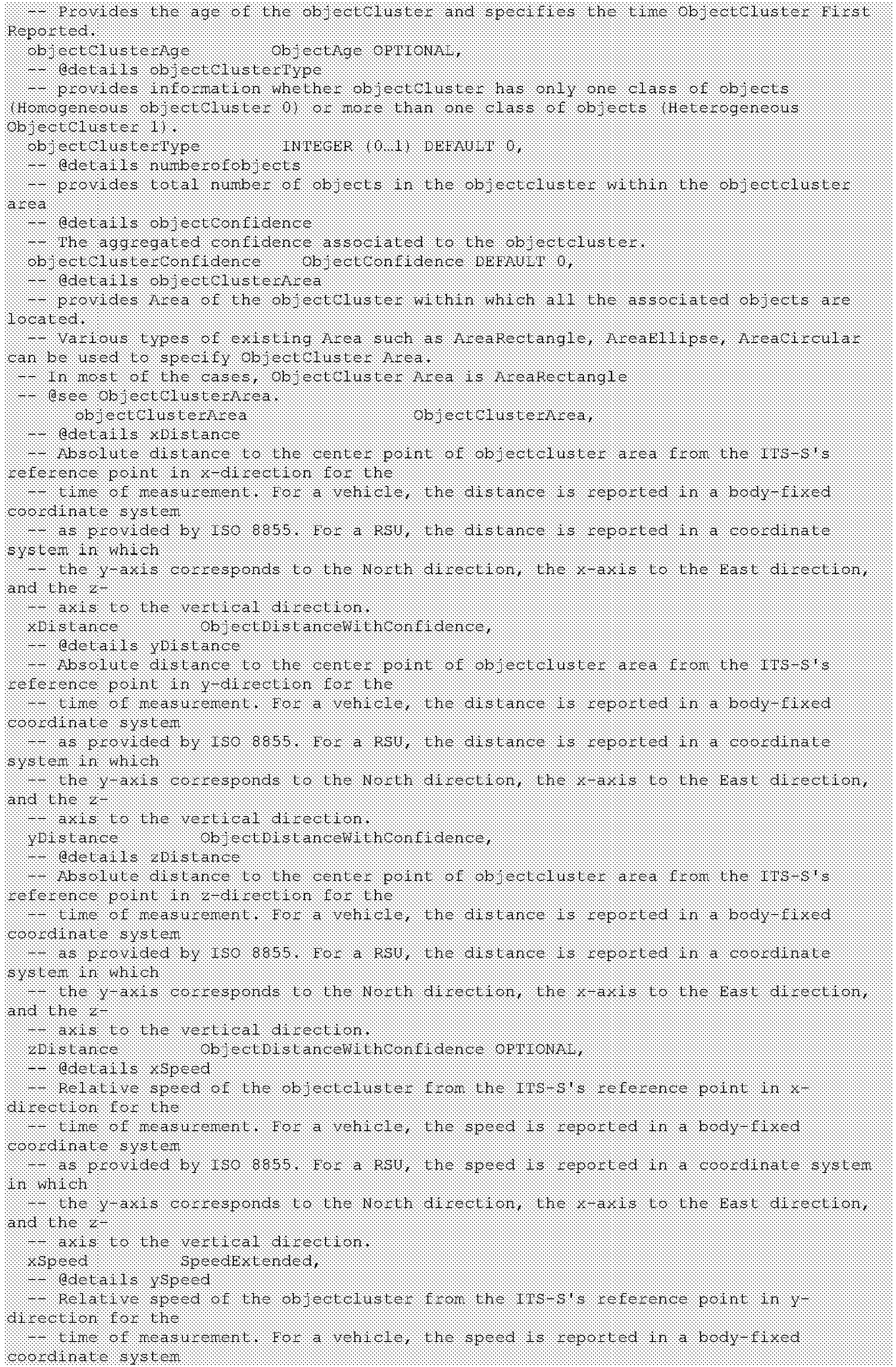

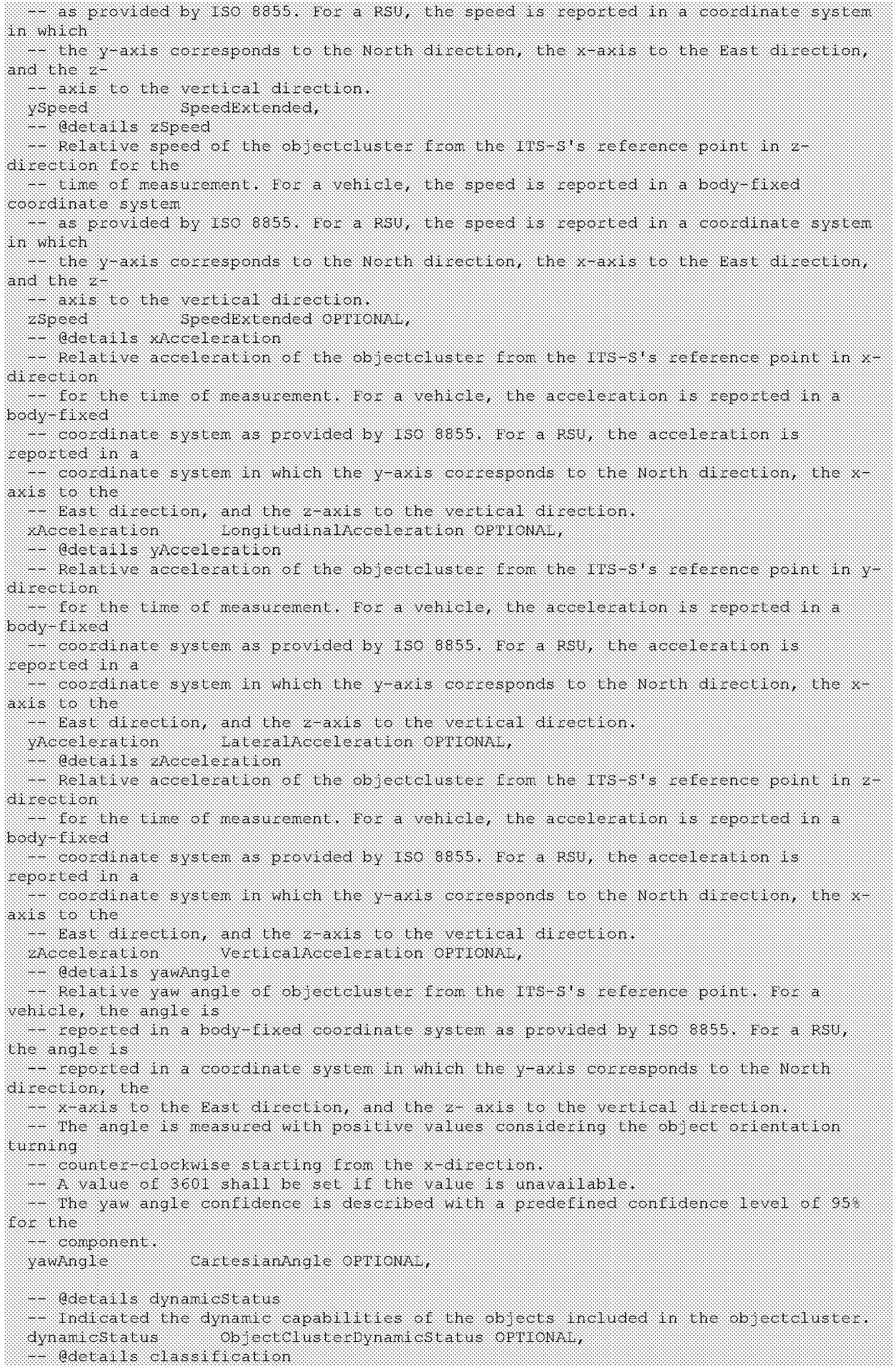

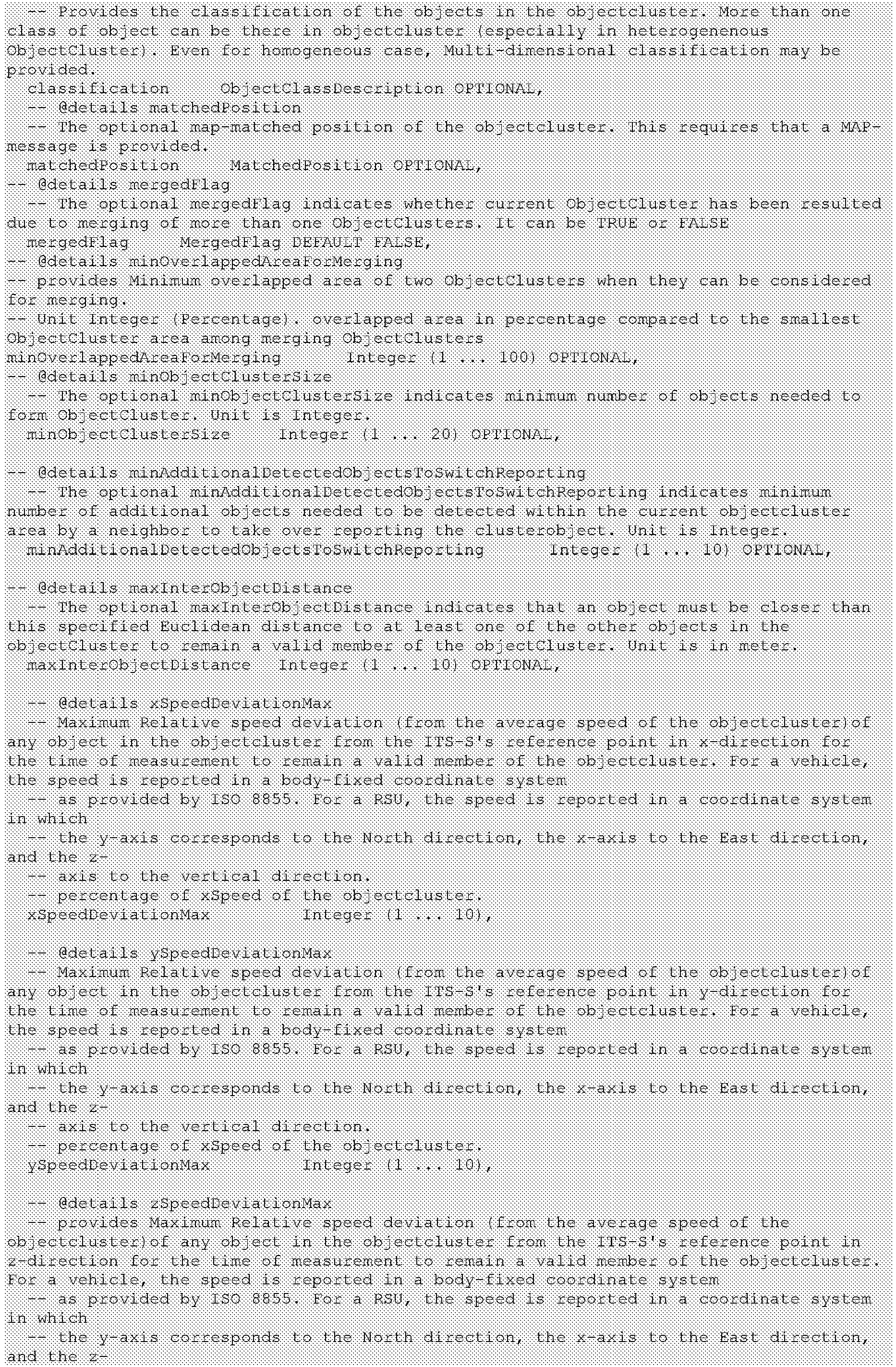

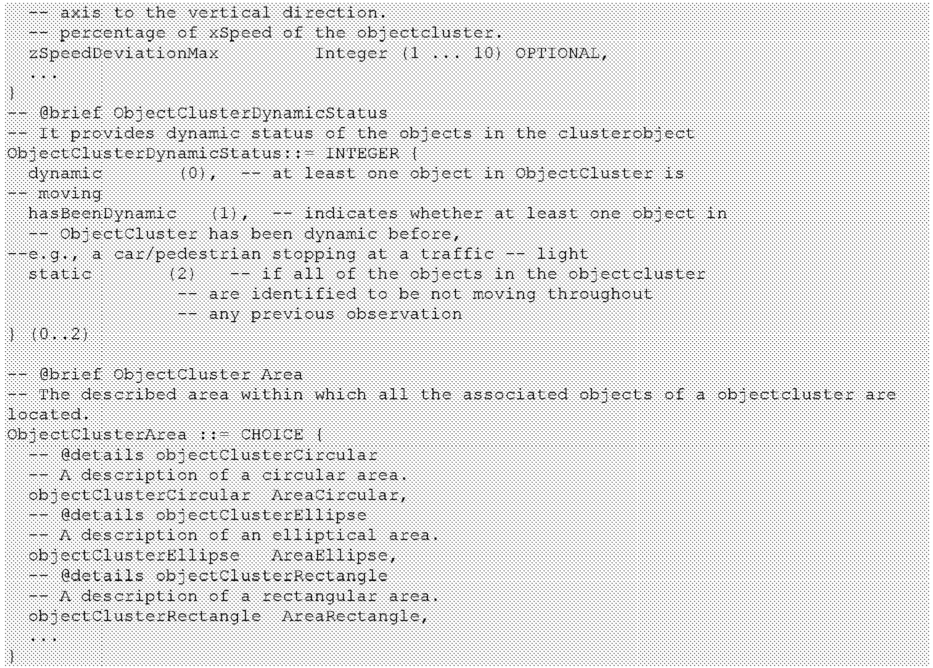

The cluster object embodiments may be combined with any other embodiments discussed herein to provide further reductions in resource consumpton and further reductions in signalingg overrhead.

### II. EXAMPLE ITS-STATION CONFIGURATIONS AND ARRANGEMENTS

Figure 10 shows an example station reference architecture according to various embodiments. In ITS-based implementations, some or all of the components depicted by Figure 10 may follow the ITSC protocol, which is based on the principles of the OSI model for layered communication protocols extended for ITS applications. The ITSC includes, inter alia, an access layer which corresponds with the OSI layers 1 and 2, a networking & transport (N&T) layer which corresponds with OSI layers 3 and 4, the facilities layer which corresponds with OSI layers 5, 6, and at least some functionality of OSI layer 7, and an applications layer which corresponds with some or all of OSI layer 7. Each of these layers are interconnected via respective interfaces, SAPs, APIs, and/or other like connectors or interfaces.

The applications layer provides ITS services, and ITS applications are defined within the application layer. An ITS application is an application layer entity that implements logic for fulfilling one or more ITS use cases. An ITS application makes use of the underlying facilities and communication capacities provided by the ITS-S. Each application can be assigned to one of the three identified application classes: road safety, traffic efficiency, and other applications (see e.g., ETSI EN 302 663 V1.3.1 (2020-01) (hereinafter "[R07]"), [R00]). Examples of ITS applications may include driving assistance applications (e.g., for cooperative awareness and road hazard warnings) including AEB, EMA, and FCW applications, speed management applications, mapping and/or navigation applications (e.g., tum-by-turn navigation and cooperative navigation), applications providing location based services, and applications providing networking services (e.g., global Internet services and ITS-S lifecycle management services). A V-ITS-S provides ITS applications to vehicle drivers and/or passengers, and may require an interface for accessing in-vehicle data from the in-vehicle network or in-vehicle system. For deployment and performances needs, specific instances of a V-ITS-S may contain groupings of Applications and/or Facilities.

The facilities layer comprises middleware, software connectors, software glue, or the like, comprising multiple facilities. In particular, the facilities layer contains functionality from the OSI application layer, the OSI presentation layer (e.g., ASN.1 encoding and decoding, and encryption) and the OSI session layer (e.g., inter-host communication). A facility is a component that provides functions, information, and/or services to the applications in the application layer and exchanges data with lower layers for communicating that data with other ITS-Ss. A list of the common facilities is given by ETSI TS 102 894-1 V1.1.1 (2013-08) (hereinafter "[R08]").

The CP service (CPS) is a Facilities layer entity in the ITS-S architecture as defined in ETSI EN 302 665 V1.1.1 (2010-09). The CPS may interface with other entities of the Facilities layer and with ITS applications to collect relevant information for CPM generation and for forwarding received CPM content for further processing. Figure 10 depicts the CPS within the ITS-S architecture along with the logical interfaces to other layers and entities within the Facilities layer.

Collective Perception (CP) is the concept of sharing a perceived environment of an ITS-S based on perception sensors. In contrast to Cooperative Awareness (CA), an ITS-S broadcasts information about its current (e.g., driving) environment rather than about its current state. Hence, CP is the concept of actively exchanging locally perceived objects between different ITS-Ss by means of V2X communication technology (or V2X RAT). CP decreases the ambient uncertainty of ITS-Ss by contributing information to their mutual Field-of-Views. The CPM enables ITS-Ss to share information about objects in the surrounding, which have been detected by sensors, cameras, or other information sources mounted or otherwise accessible to the transmitting ITS-S.

The CPS differs fundamentally from the CA basic service [R09], as it does not focus on transmitting data about the current state of the disseminating ITS-S but about its perceived environment. To avoid broadcasting CPMs about the same object by multiple ITS-Ss, the CP service may filter detected objects to be included in CPMs (see e.g., clause 6.1 of [R01]).

CPS activation may vary for different types of ITS-S (e.g., V-ITS-S, R-ITS-S, personal ITS-S, VRU ITS-S, etc.). As long as the CPS is active, CPM generation is managed by the CPS entity/module. For V-ITS-Ss, the CPS is activated with the ITS-S activation, and the CPS is terminated when the ITS-S is deactivated.

Figure 10 shows the CPS-specific functionality, including interfaces mapped to the ITS-S architecture. The CPS-specific functionality is centred around the CPS Basic Service located in the facilities layer. The CP Basic Service is a facility at the ITS-S facilities layer configurable or operable to generate, receive, and process CPMs.

The CP Basic Service may operate a CPM protocol, which is an ITS facilities layer protocol for the operation of the CPM transmission and reception. The CPM is a CP basic service PDU including CPM data and an ITS PDU header according to the various embodiments discussed herein. The CPM data comprises a partial or complete CPM payload, and may include the various data containers and associated values/parameters as discussed herein. The CPS Basic Service consumes data from other services located in the facilities layer, and is linked with others application support facilities. The CPS Basic Service is responsible for transmission of CPMs according to the various embodiments discussed herein.

The entities for the collection of data to generate a CPM may be the Device Data Provider (DDP), the Position and Time management (POTI) and the Local Dynamic Map (LDM). For a vehicle ITS-S, the DDP is connected with the in-vehicle network and provides the vehicle state information. The POTI entity provides the position of the ITS-S and time information.

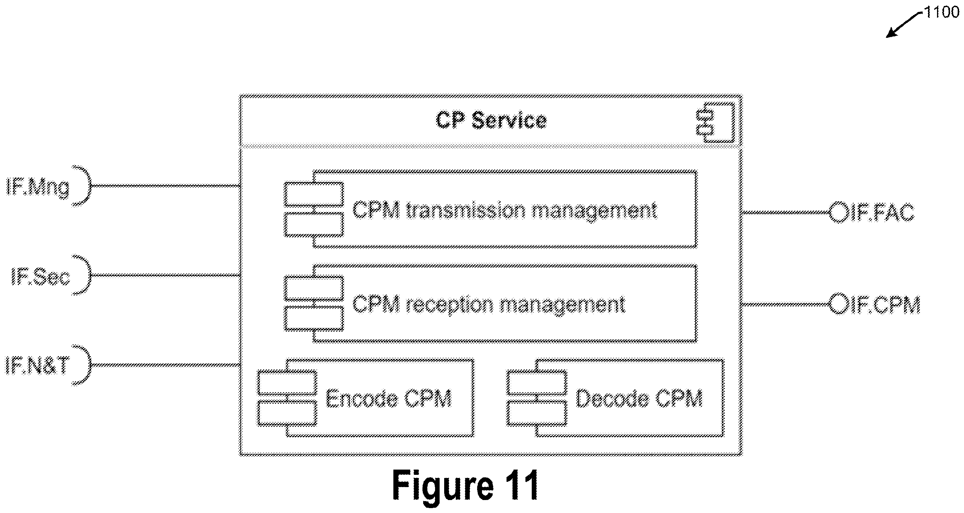

The CPS entity interfaces with the LDM and/or ITS application(s) over an IF.CPM interface (not shown by Figure 10; see e.g., Figure 11). For the provision of received data, the CA basic service provides the interface IF.CAM to LDM or to ITS application layer ().The LDM is a database in the ITS-S, which in addition to on-board sensor data may be updated with received CAM and CPM data (see e.g., ETSI TR 102 863 V1.1.1 (2011-06)). ITS applications may retrieve information from the LDM for further processing. The CPS may also interface with the Service Announcement (SA) Service to indicate an ITS-S's ability to generate CPMs. Message dissemination-specific information related to the current channel utilization are received by interfacing with the dynamic congestion control and facilities layer admission control module (DCC-FAC) entity. The DCC-FAC) provides access network congestion information to the CPS. The interface to the other layers may be implemented as one or more APIs, and data may be exchanged between the CP basic service and the other layers via these APIs. In another possible implementation, the interface to the other layers may be implemented as respective SAP.

Although not shown, the CPS could interface with other facility layer functions (or simply a "facilities"), such as MCS, etc., for coordinating respective services/data to/from other layers. The CPS entity communicates with these other facilities layer entities over an IF.FAC interface (not shown). As examples, the other facilities/services may include the collaborative awareness basic service (CABS) and/or cooperative awareness basic service (CABS), signal phase and timing service (SPATS), vulnerable road user basic service (VRUBS), Decentralized Environmental Notification (DEN) basic service, maneuver coordination services (MCS), and/or the like. The CPS Basic Service may also interact with a CPS profile management entity in the management layer to CPS-related purposes.

The CPS entity communicates with the N&T layer elements over an IF.N&T interface (not shown). The CPS interfaces through the Network - Transport/Facilities (NF)-Service Access Point (SAP) with the N&T for exchanging of CPMs with other ITS-Ss. The CPS entity communicates with the ITS security entity over an IF.SEC interface (not shown). The CPS interfaces through the Security - Facilities (SF)-SAP with the Security entity to access security services for CPM transmission and CPM reception. The CPS interfaces through the Management-Facilities (MF)-SAP with the Management entity and through the Facilities - Application (FA)-SAP with the application layer if received CPM data is provided directly to the applications. Each of the aforementioned interfaces/SAPs may provide the full duplex exchange of data with the facilities layer, and may implement suitable APIs to enable communication between the various entities/elements.

In some embodiments, the embodiments discussed herein may be implemented in or by the CPS or other like facility layer function (or simply a "facility") that provides CPS related data to other layers and/or controls the generation and transmission of CPMs and/or other like messages. In particular, the CPS module/entity may reside or operate in the facilities layer, generate CPMs, which are then passed to the N&T and access layers for transmission to other proximate ITS-Ss. In embodiments, the CPMs are included in ITS packets (see e.g., Figures 3-7), which are facilities layer PDUs that may be passed to the access layer via the N&T layer or passed to the application layer for consumption by one or more ITS applications. In this way, CPM format is agnostic to the underlying access layer and is designed to allow CPMs to be shared regardless of the underlying access technology/RAT.

For a vehicle ITS-S, the facilities layer is connected to an in-vehicle network via an in-vehicle data gateway as shown and described in [R08]. The facilities and applications of a vehicle ITS-S receive required in-vehicle data from the data gateway in order to construct messages (e.g., CSMs, VAMs, CAMs, DENMs, MCMs, and/or CPMs) and for application usage. For sending and receiving CAMs, the CA-BS includes the following entities: an encode CAM entity, a decode CAM entity, a CAM transmission management entity, and a CAM reception management entity. For sending and receiving DENMs, the DEN-BS includes the following entities: an encode DENM entity, a decode DENM entity, a DENM transmission management entity, a DENM reception management entity, and a DENM keep-alive forwarding (KAF) entity. The CAM/DENM transmission management entity implements the protocol operation of the originating ITS-S including activation and termination of CAM/DENM transmission operation, determining CAM/DENM generation frequency, and triggering generation of CAMs/DENMs. The CAM/DENM reception management entity implements the protocol operation of the receiving ITS-S including triggering the decode CAM/DENM entity at the reception of CAMs/DENMs, provisioning received CAM/DENM data to the LDM, facilities, or applications of the receiving ITS-S, discarding invalid CAMs/DENMs, and checking the information of received CAMs/DENMs. The DENM KAF entity KAF stores a received DENM during its validity duration and forwards the DENM when applicable; the usage conditions of the DENM KAF may either be defined by ITS application requirements or by a cross-layer functionality of an ITSC management entity. The encode CAM/DENM entity constructs (encodes) CAMs/DENMs to include various, the object list may include a list of DEs and/or DFs included in the ITS data dictionary as defined by [R03].

The ITS-S type/capabilities facility provides information to describe a profile of an ITS-S to be used in the applications and facilities layers. This profile indicates the ITS-S type (e.g., vehicle ITS-S, road side ITS-S, personal ITS-S, or central ITS-S), a role of the ITS-S, and detection capabilities and status (e.g., the ITS-S's positioning capabilities, sensing capabilities, etc.). The station type/capabilities facility may store sensor capabilities of various connected/coupled sensors and sensor data obtained from such sensors.

The Position and Time management entity (PoTi) manages the position and time information for use by ITS applications, facility, network, management, and security layers. For this purpose, the PoTi gets information from sub-system entities such as GNSS, sensors and other subsystem of the ITS-S. The PoTi ensures ITS time synchronicity between ITS-Ss in an ITS constellation, maintains the data quality (e.g., by monitoring time deviation), and manages updates of the position (e.g., kinematic and attitude state) and time. A ITS contellation is a group of ITS-S's that are exchanging ITS data among themselves. The PoTi entity may include augmentation services to improve the position and time accuracy, integrity, and reliability. Among these methods, communication technologies may be used to provide positioning assistance from mobile to mobile ITS-Ss and infrastructure to mobile ITS-Ss. Given the ITS application requirements in terms of position and time accuracy, PoTi may use augmentation services to improve the position and time accuracy. Various augmentation methods may be applied. PoTi may support these augmentation services by providing messages services broadcasting augmentation data. For instance, a roadside ITS-S may broadcast correction information for GNSS to oncoming vehicle ITS-S; ITS-Ss may exchange raw GPS data or may exchange terrestrial radio position and time relevant information. PoTi maintains and provides the position and time reference information according to the application and facility and other layer service requirements in the ITS-S. In the context of ITS, the "position" includes attitude and movement parameters including velocity, heading, horizontal speed, and the like. The kinematic and attitude state of a rigid body contained in the ITS-S included position, velocity, acceleration, orientation, angular velocity, and possible other motion related information. The position information at a specific moment in time is referred to as the kinematic and attitude state including time, of the rigid body. In addition to the kinematic and attitude state, PoTi should also maintain information on the confidence of the kinematic and attitude state variables.

The N&T layer provides functionality of the OSI network layer and the OSI transport layer and includes one or more networking protocols, one or more transport protocols, and network and transport layer management. Additionally, aspects of sensor interfaces and communication interfaces may be part of the N&T and access layers. The networking protocols may include, inter alia, IPv4, IPv6, IPv6 networking with mobility support, IPv6 over GeoNetworking, the CALM FAST protocol, and/or the like. The transport protocols may include, inter alia, BOSH, BTP, GRE, GeoNetworking protocol, MPTCP, MPUDP, QUIC, RSVP, SCTP, TCP, UDP, VPN, one or more dedicated ITSC transport protocols, or some other suitable transport protocol. Each of the networking protocols may be connected to a corresponding transport protocol. The access layer includes a physical layer (PHY) connecting physically to the communication medium, a data link layer (DLL), which may be sub-divided into a medium access control sub-layer (MAC) managing the access to the communication medium, and a logical link control sub-layer (LLC), management adaptation entity (MAE) to directly manage the PHY and DLL, and a security adaptation entity (SAE) to provide security services for the access layer. The access layer may also include external communication interfaces (CIs) and internal CIs. The CIs are instantiations of a specific access layer technology or (RAT) and protocol such as 3GPP LTE, 3GPP 5G/NR, C-V2X (e.g., based on 3GPP LTE and/or 5G/NR), WiFi, W-V2X (e.g., including ITS-G5 and/or DSRC), Ethernet, Bluetooth, and/or any other RAT and/or communication protocol discussed herein. The CIs provide the functionality of one or more logical channels (LCHs), where the mapping of LCHs on to physical channels is specified by the standard of the particular access technology involved.

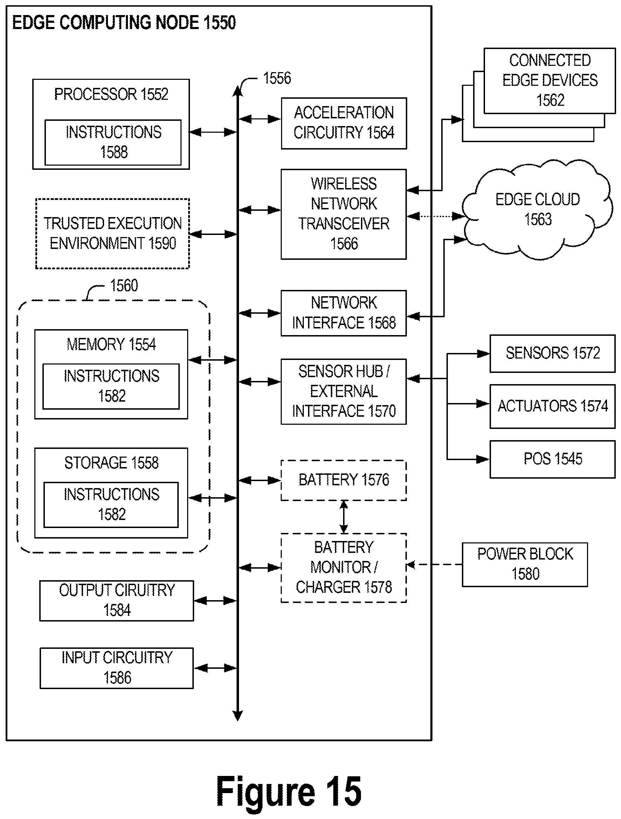

Additionally, other entities that operate at the same level but are not included in the ITS-S include the relevant users at that level, the relevant HMI (e.g., audio devices, display/touchscreen devices, etc.); when the ITS-S is a vehicle, vehicle motion control for automated vehicles (both HMI and vehicle motion control entities may be triggered by the ITS-S applications); a local device sensor system and IoT Platform that collects and shares IoT data; local device sensor fusion and actuator application(s), which may contain AI and aggregates the data flow issued by the sensor system; local perception and trajectory prediction applications that consume the output of the fusion application and feed the ITS-S applications; and the relevant ITS-S. The sensor system can include one or more cameras, radars, lidars, etc., in a V-ITS-S or RSE. In the central station, the sensor system includes sensors that may be located on the side of the road, but directly report their data to the central station, without the involvement of a V-ITS-S or a R-ITS-S. In some cases, the sensor system may additionally include gyroscope(s), accelerometer(s), and the like (see e.g., sensor circuitry 1572 of Figure 15).

Figure 11 shows an example CP basic service functional architecture 1100, according to various embodiments. The CPS is part of the Application Support domain of the Facilities Layer according to [R08]. Figure 11 shows the CPS and interfaces to other facilities and layers. For sending and receiving CPMs, the CPS includes an encode CPM sub-function, decode CPM sub-function, CPM transmission management sub-function, and CPM reception management sub-function.

The encode CPM sub-function constructs CPMs according to the format specified in Annex B of [R01] and according to the various embodiments discussed herein. The most recent abstract CP object information, sensor information and free space information data are included in the CPM. The CPM may also include layered costmap containers and object cluster containers as discussed herein. The decode CPM sub-function decodes the received CPM.

The CPM transmission management sub-function implements the protocol operation of the originating ITS-S such as: activation and termination of CPM transmission operation; determination of the CPM generation frequency; and triggering the generation of the CPM. The CPM reception management sub-function implements the protocol operation of the receiving ITS-S such as: triggering the decoding of the CPM upon receiving an incoming CPM; provisioning of the received CPM to the LDM or ITS applications of the receiving ITS-S; and checking the validity of the information of received CPMs.

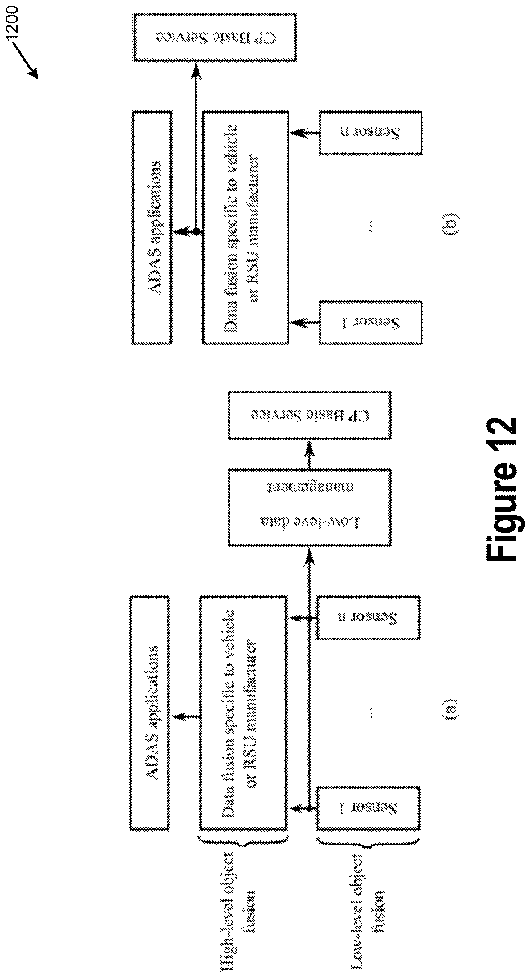

Figure 12 shows an example object data extraction levels 1200 of the CP basic service 1100 of Figure 11. Figure 12 part (a) depicts an implementation in which sensor data is processed as part of a low-level data management entity. The CP Basic Service 1100 then selects the object candidates to be transmitted as defined in clause 4.3 of [R02]. Part (a) is more likely to avoid filter cascades, as the task of high-level fusion will be performed by the receiving ITS-S. Figure 12 part (b) depicts an implementation in which the CP Basic Service selects objects to be transmitted as part of the CPM according to clause 4.3 of [R02] from a high-level fused object list, thereby abstracting the original sensor measurement used in the fusion process. The CPM provides data fields to indicate the source of the object.

Raw sensor data refers to low-level data generated by a local perception sensor that is mounted to, or otherwise accessible by, a vehicle or an RSU. This data is specific to a sensor type (e.g., reflexions, time of flight, point clouds, camera image, etc.). In the context of environment perception, this data is usually analysed and subjected to sensor-specific analysis processes to detect and compute a mathematical representation for a detected object from the raw sensor data. The IST-S sensore may provide raw sensor data as a result of their measurements, which is then used by a sensor specific low-level object fusion system (e.g., sensor hub, dedicated processor(s), and the like) to provide a list of obj ects as detected by the measurement of the sensor. The detection mechanisms and data processing capabilities are specific to each sensor and/or hardware configurations.

This means that the definition and mathematical representation of an object can vary. Themathematical representation of an object is called a state space representation. Depending on the sensor type, a state space representation may comprise multiple dimensions (e.g., relative distance components of the feature to the sensor, speed of the feature, geometric dimensions, etc.). A state space is generated for each detected object of a particular measurement. Depending on the sensor type, measurements are performed cyclically, periodically, and/or based on some defined trigger condition. After each measurement, the computed state space of each detected object is provided in an object list that is specific to the timestamp of the measurement.

The object (data) fusion system maintains one or more lists of objects that are currently perceived by the ITS-S. The object fusion mechanism performs prediction of each object to timestamps at which no measurement is available from sensors; associates objects from other potential sensors mounted to the station or received from other ITS-Ss with objects in the tracking list; and merges the prediction and an updated measurement for an object. At each point in time, the data fusion mechanism is able to provide an updated object list based on consecutive measurements from (possibly) multiple sensors containing the state spaces for all tracked objects. V2X information (e.g., CAMs, DENMs, CPMs, etc.) from other vehicles may additionally be fused with locally perceived information. Other approaches additionally provide alternative representations of the processed sensor data, such as an occupancy grid.

The data fusion mechanism also performs various housekeeping tasks such as, for example, adding state spaces to the list of objects currently perceived by an ITS-S in case a new object is detected by a sensor; updating objects that are already tracked by the data fusion system with new measurements that should be associated to an already tracked object; and removing objects from the list of tracked objects in case new measurements should not be associated to already tracked objects. Depending on the capabilities of the fusion system, objects can also be classified (e.g., some sensor systems may be able to classify a detected object as a particular road user, while others are merely able to provide a distance measurement to an object within the perception range). These tasks of object fusion may be performed either by an individual sensor, or by a high-level data fusion system or process.

### III. EXAMPLE EDGE COMPUTING SYSTEM CONFIGURATIONS AND ARRANGEMENTS

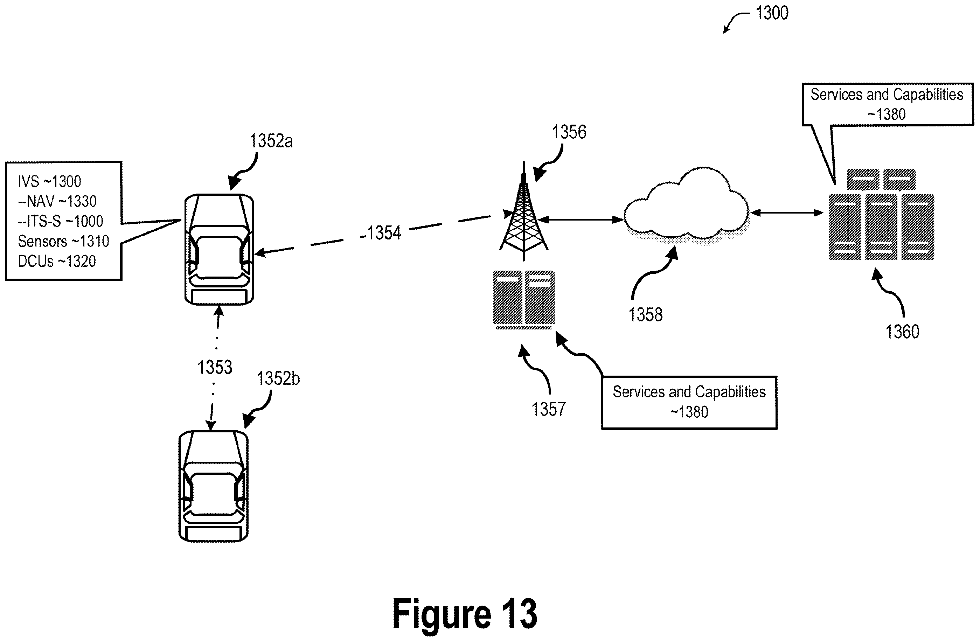

Figure 13 illustrates an overview of an environment for incorporating and using the embodiments of the present disclosure. As shown, for the illustrated embodiments, the example environment includes vehicles 1352. Vehicle 1352 includes an engine, transmission, axles, wheels and so forth (not shown). For illustrative purposes, the following description is provided for deployment scenarios including vehicles 1352 in a 2D freeway/highway/roadway environment wherein the vehicles 1352 are automobiles. However, the embodiments described herein are also applicable to other types of vehicles, such as trucks, busses, motorboats, motorcycles, electric personal transporters, and/or any other motorized devices capable of transporting people or goods. Also, embodiments described herein are applicable to social networking between vehicles of different vehicle types. The embodiments described herein may also be applicable to 3D deployment scenarios where some or all of the vehicles 1352 are implemented as flying objects, such as aircraft, drones, UAVs, and/or to any other like motorized devices

The vehicles 1352 may be any type of motorized vehicles used for transportation of people or goods, each of which are equipped with an engine, transmission, axles, wheels, as well as control systems used for driving, parking, passenger comfort and/or safety, etc. The terms "motor", "motorized", etc. as used herein refer to devices that convert one form of energy into mechanical energy, and include internal combustion engines (ICE), compression combustion engines (CCE), electric motors, and hybrids (e.g., including an ICE/CCE and electric motor(s)). The plurality of vehicles 1352 shown by Figure 13 may represent motor vehicles of varying makes, models, trim, etc., and may be collectively referred to as a "C/AD vehicle 1352" or the like.

Each vehicle 1352 includes an in-vehicle system (IVS) 1300, one or more sensors 1310, and one or more driving control units (DCUs) 1320. The IVS 100 includes a number of vehicle computing hardware subsystems and/or applications including, for example, various hardware and software elements to implement the ITS architecture 1000 of Figure 10, which includes the CP Basic Service 1100 of Figure 11. The vehicles 1352 may employ one or more V2X radio access technologies (RATs), which allow the vehicles 1352 to communicate directly with one another and with infrastructure equipment (e.g., NAN 1356). The V2X RAT may refer to 3GPP cellular V2X RAT (e.g., LTE, 5G/NR, and beyond), a WLAN V2X (W-V2X) RAT based on IEEE 802.11p or the like (e.g., DSRC in the USA or ITS-G5 in the EU), and/or some other RAT such as those discussed herein. Some or all of the vehicles 1352 may include positioning circuitry to (coarsely) determine their respective geolocations and communicate their current position with the RSU XE330 in a secure and reliable manner. This allows the vehicles 1352 to synchronize with one another and/or the NAN 1356. Additionally, some or all of the vehicles 1352 may be computer-assisted or autonomous driving (C/AD) vehicles, which may include artificial intelligence (AI) and/or robotics to assist vehicle operation. In this example, the NAN 1356 may be a stationary RSU, such as an gNB/eNB-type RSU or other like infrastructure. In other embodiments, the NAN 1356 may be a mobile RSU or a UE-type RSU, which may be implemented by a vehicle, pedestrian, or some other device with such capabilities. In these cases, mobility issues can be managed in order to ensure a proper radio coverage of the translation entities.

The subsystems/applications may also include instrument cluster subsystems, front-seat and/or back-seat infotainment subsystems and/or other like media subsystems, a navigation subsystem (NAV) 1330, a vehicle status subsystem/application, a HUD subsystem, an EMA subsystem, and so forth. The NAV 1330 may be configurable or operable to provide navigation guidance or control, depending on whether C/AD vehicle 1352 is a computer-assisted vehicle, partially or fully autonomous driving vehicle. NAV 1330 may be configured with computer vision to recognize stationary or moving objects (e.g., a pedestrian, another vehicle, or some other moving object) in an area surrounding C/AD vehicle 1352, as it travels enroute to its destination. The NAV 1330 may be configurable or operable to recognize stationary or moving objects in the area surrounding C/AD vehicle 1352, and in response, make its decision in guiding or controlling DCUs of C/AD vehicle 1352, based at least in part on sensor data collected by sensors 1310.

The DCUs 1320 include hardware elements that control various systems of the C/AD vehicles 1352, such as the operation of the engine, the transmission, steering, braking, etc. DCUs 1320 are embedded systems or other like computer devices that control a corresponding system of a vehicle 1352. The DCUs 1320 may each have the same or similar components as devices/systems of Figures **Error! Reference source not found.-Error! Reference source not found.** discussed infra, or may be some other suitable microcontroller or other like processor device, memory device(s), communications interfaces, and the like. Individual DCUs 1320 are capable of communicating with one or more sensors 1310 and actuators (e.g., actuators 1574 of Figure 15). Examples of DCUs 1320 may include, inter alia, a Drivetrain Control Unit, an Engine Control Unit (ECU), an Engine Control Module (ECM), EEMS, a Powertrain Control Module (PCM), a Transmission Control Module (TCM), a Brake Control Module (BCM) including an anti-lock brake system (ABS) module and/or an electronic stability control (ESC) system, a Central Control Module (CCM), a Central Timing Module (CTM), a General Electronic Module (GEM), a Body Control Module (BCM), a Suspension Control Module (SCM), a Door Control Unit (DCU), a Speed Control Unit (SCU), a Human-Machine Interface (HMI) unit, a Telematic Control Unit (TTU), a Battery Management System, a Portable Emissions Measurement Systems (PEMS), an evasive maneuver assist (EMA) module/system, and/or any other entity or node in a vehicle system. Examples of the CSD that may be generated by the DCUs 1320 may include, but are not limited to, real-time calculated engine load values from an engine control module (ECM), such as engine revolutions per minute (RPM) of an engine of the vehicle; fuel injector activation timing data of one or more cylinders and/or one or more injectors of the engine, ignition spark timing data of the one or more cylinders (e.g., an indication of spark events relative to crank angle of the one or more cylinders), transmission gear ratio data and/or transmission state data (which may be supplied to the ECM by a transmission control unit (TCU)); and/or the like.

The sensors 1310 are hardware elements configurable or operable to detect an environment surrounding the vehicles 1352 and/or changes in the environment. The sensors 1310 are configurable or operable to provide various sensor data to the DCUs 1320 and/or one or more AI agents to enable the DCUs 1320 and/or one or more AI agents to control respective control systems of the vehicles 1352. Some of the sensors 1310 may be the same or similar as the sensor circuitry 1572 of Figure 15. Additionally or alternatively, some of the sensors 1310 may be sensors used for various vehicle control systems, and may include, inter alia, exhaust sensors including exhaust oxygen sensors to obtain oxygen data and manifold absolute pressure (MAP) sensors to obtain manifold pressure data; mass air flow (MAF) sensors to obtain intake air flow data; intake air temperature (IAT) sensors to obtain IAT data; ambient air temperature (AAT) sensors to obtain AAT data; ambient air pressure (AAP) sensors to obtain AAP data (e.g., tire pressure data); catalytic converter sensors including catalytic converter temperature (CCT) to obtain CCT data and catalytic converter oxygen (CCO) sensors to obtain CCO data; vehicle speed sensors (VSS) to obtain VSS data; exhaust gas recirculation (EGR) sensors including EGR pressure sensors to obtain ERG pressure data and EGR position sensors to obtain position/orientation data of an EGR valve pintle; Throttle Position Sensor (TPS) to obtain throttle position/orientation/angle data; a crank/cam position sensors to obtain crank/cam/piston position/orientation/angle data; coolant temperature sensors; drive train sensors to collect drive train sensor data (e.g., transmission fluid level), vehicle body sensors to collect vehicle body data (e.g., data associated with buckling of the front grill/fenders, side doors, rear fenders, rear trunk, and so forth); and so forth. The sensors 1310 may include other sensors such as an accelerator pedal position sensor (APP), accelerometers, magnetometers, level sensors, flow/fluid sensors, barometric pressure sensors, and the like. Sensor data from sensors 1310 of the host vehicle may include engine sensor data collected by various engine sensors (e.g., engine temperature, oil pressure, and so forth).

The DCUs 1320 may be provisioned with control system configurations (CSCs), which are collections of software modules, software components, logic blocks, parameters, calibrations, variants, etc. used to control and/or monitor various systems implemented by the C/AD vehicle 1352. The CSCs define how the DCUs 1320 are to interpret sensor data of sensors 1310 and/or CSD of other DCUs 1320 using multidimensional performance maps or lookup tables, and define how actuators/components are to be adjust/modified based on the sensor data. The CSCs and/or the software components to be executed by individual DCUs 1320 may be developed using any suitable object-oriented programming language (e.g., C, C++, Java, etc.), schema language (e.g., XML schema, AUTomotive Open System Architecture (AUTOSAR) XML schema, etc.), scripting language (VBScript, JavaScript, etc.), or the like. the CSCs and software components may be defined using a hardware description language (HDL), such as register-transfer logic (RTL), very high speed integrated circuit (VHSIC) HDL (VHDL), Verilog, etc. for DCUs 1320 that are implemented as field-programmable devices (FPDs). The CSCs and software components may be generated using a modeling environment or model-based development tools. According to various embodiments, the CSCs may be generated or updated by one or more autonomous software agents and/or AI agents based on learnt experiences, ODDs, and/or other like parameters. In another example, in embodiments where one or more DCUs 1320 .

The IVS 1300 and/or the DCUs 1320 is configurable or operable to operate one or more actuators (e.g., actuators 1574 of Figure 15) based on one or more captured events (as indicated by sensor data captured by sensors 1310) and/or instructions or control signals received from user inputs, signals received over-the-air from a service provider, or the like. Additionally, one or more DCUs 1320 may be configurable or operable to operate one or more actuators by transmitting/sending instructions or control signals to the actuators based on detected events (as indicated by sensor data captured by sensors 1310). One or more DCUs 1320 may be capable of reading or otherwise obtaining sensor data from one or more sensors 1310, processing the sensor data to generate control system data (or CSCs), and providing the control system data to one or more actuators to control various systems of the vehicle 1352. An embedded device/system acting as a central controller or hub may also access the control system data for processing using a suitable driver, API, ABI, library, middleware, firmware, and/or the like; and/or the DCUs 1320 may be configurable or operable to provide the control system data to a central hub and/or other devices/components on a periodic or aperiodic basis, and/or when triggered.

The various subsystems, including sensors 1310 and/or DCUs 1320 , may be operated and/or controlled by one or more AI agents. The AI agents is/are autonomous entities configurable or operable to observe environmental conditions and determine actions to be taken in furtherance of a particular goal. The particular environmental conditions to be observed and the actions to take may be based on an operational design domain (ODD). An ODD includes the operating conditions under which a given AI agent or feature thereof is specifically designed to function. An ODD may include operational restrictions, such as environmental, geographical, and time-of-day restrictions, and/or the requisite presence or absence of certain traffic or roadway characteristics.

In embodiments, individual AI agents are configurable or operable to control respective control systems of the host vehicle, some of which may involve the use of one or more DCUs 1320 and/or one or more sensors 1310. In these embodiments, the actions to be taken and the particular goals to be achieved may be specific or individualized based on the control system itself. Additionally, some of the actions or goals may be dynamic driving tasks (DDT), object and event detection and response (OEDR) tasks, or other non-vehicle operation related tasks depending on the particular context in which an AI agent 09 is implemented. DDTs include all real-time operational and tactical functions required to operate a vehicle 1352 in on-road traffic, excluding the strategic functions (e.g., trip scheduling and selection of destinations and waypoints. DDTs include tactical and operational tasks such as lateral vehicle motion control via steering (operational); longitudinal vehicle motion control via acceleration and deceleration (operational); monitoring the driving environment via object and event detection, recognition, classification, and response preparation (operational and tactical); object and event response execution (operational and tactical); maneuver planning (tactical); and enhancing conspicuity via lighting, signaling and gesturing, etc. (tactical). OEDR tasks may be subtasks of DDTs that include monitoring the driving environment (e.g., detecting, recognizing, and classifying objects and events and preparing to respond as needed) and executing an appropriate response to such objects and events, for example, as needed to complete the DDT or fallback task.

To observe environmental conditions, the AI agents is/are configurable or operable to receive, or monitor for, sensor data from one or more sensors 1310 and receive control system data (CSD) from one or more DCUs 1320 of the host vehicle 1352. The act of monitoring may include capturing CSD and/or sensor data from individual sensors 1310 and DCUs 1320 . Monitoring may include polling (e.g., periodic polling, sequential (roll call) polling, etc.) one or more sensors 1310 for sensor data and/or one or more DCUs 1320 for CSD for a specified/selected period of time. In other embodiments, monitoring may include sending a request or command for sensor data/CSD in response to an external request for sensor data/CSD. In some embodiments, monitoring may include waiting for sensor data/CSD from various sensors/modules based on triggers or events, such as when the host vehicle reaches predetermined speeds and/or distances in a predetermined amount of time (with or without intermitted stops). The events/triggers may be AI agent specific, and may vary depending of a particular embodiment. In some embodiments, the monitoring may be triggered or activated by an application or subsystem of the IVS 1300 or by a remote device, such as compute node 1357 and/or server(s) 1360.

In some embodiments, one or more of the AI agents may be configurable or operable to process the sensor data and CSD to identify internal and/or external environmental conditions upon which to act. Examples of the sensor data may include, but are not limited to, image data from one or more cameras of the vehicle providing frontal, rearward, and/or side views looking out of the vehicle; sensor data from accelerometers, inertia measurement units (IMU), and/or gyroscopes of the vehicle providing speed, acceleration, and tilt data of the host vehicle; audio data provided by microphones; and control system sensor data provided by one or more control system sensors. In an example, one or more of the AI agents may be configurable or operable to process images captured by sensors 1310 (image capture devices) and/or assess conditions identified by some other subsystem (e.g., an EMA subsystem, CAS and/or CPS entities, and/or the like) to determine a state or condition of the surrounding area (e.g., existence of potholes, fallen trees/utility poles, damages to road side barriers, vehicle debris, and so forth). In another example, one or more of the AI agents may be configurable or operable to process CSD provided by one or more DCUs 1320 to determine a current amount of emissions or fuel economy of the host vehicle. The AI agents may also be configurable or operable to compare the sensor data and/or CSDs with training set data to determine or contribute to determining environmental conditions for controlling corresponding control systems of the vehicle.

To determine actions to be taken in furtherance of a particular goal, each of the AI agents are configurable or operable to identify a current state of the IVS 1300, the host vehicles 1352, and/or the AI agent itself, identify or obtain one or more models (e.g., ML models), identify or obtain goal information, and predict a result of taking one or more actions based on the current state/context, the one or more models, and the goal information. The one or more models may be any algorithms or objects created after an AI agent is trained with one or more training datasets, and the one or more models may indicate the possible actions that may be taken based on the current state. The one or more models may be based on the ODD defined for a particular AI agent. The current state is a configuration or set of information in the IVS 1300 and/or one or more other systems of the host vehicle 1352, or a measure of various conditions in the IVS 1300 and/or one or more other systems of the host vehicle 1352. The current state is stored inside an AI agent and is maintained in a suitable data structure. The AI agents are configurable or operable to predict possible outcomes as a result of taking certain actions defined by the models. The goal information describes desired outcomes (or goal states) that are desirable given the current state. Each of the AI agents may select an outcome from among the predict possible outcomes that reaches a particular goal state, and provide signals or commands to various other subsystems of the vehicle 1352 to perform one or more actions determined to lead to the selected outcome. The AI agents may also include a learning module configurable or operable to learn from an experience with respect to the selected outcome and some performance measure(s). The experience may include sensor data and/or new state data collected after performance of the one or more actions of the selected outcome. The learnt experience may be used to produce new or updated models for determining future actions to take. Further, each C/AD vehicle 1352 is provided with the RSS embodiments of the present disclosure. In particular, the IVS 1300 may include or implement a facilities layer and operate one or more RSS entities within the facilities layer. Further, each C/AD vehicle 1352 is provided with CS technology of the present disclosure. In particular, the IVS 1300 may include a CS module /CS Basic Service function(s) of the present disclosure.

IVS system 1300, on its own or in response to user interactions, communicates or interacts with one or more vehicles 1352 via interface 1353, which may be, for example, LTE/NR Proximity Services (ProSe) link or PC5 interfaces/links, or WiFi based links or a personal area network (PAN) based links (e.g., IEEE 802.15.4 based protocols including ZigBee, IPv6 over Low power Wireless Personal Area Networks (6LoWPAN), WirelessHART, MiWi, Thread, etc.; WiFi-direct; Bluetooth/Bluetooth Low Energy (BLE) protocols). In various embodiments, the vehicles 1352 may exchange CPMs of the example embodiments with one another over the interface 1353.

IVS system 1300, on its own or in response to user interactions, communicates or interacts with one or more remote/cloud servers 1360 via network access node (NAN) 1356 over interface 1354 and over network 1358. The NAN 1356 is arranged to provide network connectivity to the vehicles 1352 via respective interfaces 1354 between the NAN 1356 and the individual vehicles 1352. In various embodiments, the NAN 1356 is, or includes, an ITS-S, and may be an R-ITS-S as discussed previously.

The NAN 1356 that enables the connections 1354 may be referred to as a "RAN node" or the like. The RAN node 1356 may comprise ground stations (e.g., terrestrial access points) or satellite stations providing coverage within a geographic area (e.g., a cell). The RAN node 1356 may be implemented as one or more of a dedicated physical device such as a macrocell base station, and/or a low power base station for providing femtocells, picocells or other like cells having smaller coverage areas, smaller user capacity, or higher bandwidth compared to macrocells. In this example, the RAN node 1356 is embodied as a NodeB, evolved NodeB (eNB), or a next generation NodeB (gNB), one or more relay nodes, distributed units, or Road Side Unites (RSUs). Any other type of NANs can be used. Additionally, the RAN node 1356 can fulfill various logical functions for the RAN including, but not limited to, RAN function(s) (e.g., radio network controller (RNC) functions and/or NG-RAN functions) for radio resource management, admission control, uplink and downlink dynamic resource allocation, radio bearer management, data packet scheduling, etc.

As examples, the network 1358 and/or access technologies may include cellular technology such as LTE, MuLTEfire, and/or NR/5G (e.g., as provided by Radio Access Network (RAN) node 1356), WiFi or wireless local area network (WLAN) technologies (e.g., as provided by an access point (AP) 1356), and/or the like. Different technologies exhibit benefits and limitations in different scenarios, and application performance in different scenarios becomes dependent on the choice of the access networks (e.g., WiFi, LTE, etc.) and the used network and transport protocols (e.g., Transfer Control Protocol (TCP), Virtual Private Network (VPN), MultiPath TCP (MPTCP), Generic Routing Encapsulation (GRE), etc.).

The remote/cloud servers 1360 may represent a cloud computing architecture/platform that provides one or more cloud computing services. The remote/cloud servers 1360 may include any one of a number of services and capabilities 1380 such as, for example, ITS-related applications and services, driving assistance (e.g., mapping/navigation), content provision (e.g., multi-media infotainment streaming), and/or the like.

Additionally, the NAN 1356 is co-located with an edge compute node 1357 (or a collection of edge compute nodes 1357), which may provide any number of services/capabilities 1380 to vehicles 1352 such as ITS services/applications, driving assistance, and/or content provision services 1380. The edge compute node 1357 may include or be part of an edge edge network or "edge cloud." The edge compute node 1357 may also be referred to as an "edge host 1357," "edge server 1357," or "compute platforms 1357." The edge compute nodes 1357 may partition resources (e.g., memory, CPU, GPU, interrupt controller, I/O controller, memory controller, bus controller, network connections or sessions, etc.) where respective partitionings may contain security and/or integrity protection capabilities. Edge nodes may also provide orchestration of multiple applications through isolated user-space instances such as containers, partitions, virtual environments (VEs), virtual machines (VMs), Servlets, servers, and/or other like computation abstractions.

The edge compute node 1357 may be implemented in a data center or cloud installation; a designated edge node server, an enterprise server, a roadside server, a telecom central office; or a local or peer at-the-edge device being served consuming edge services. Examples of such other edge computing/networking technologies that may implement the edge compute node 1357 and/or edge computing network/cloud include Multi-Access Edge Computing (MEC), Content Delivery Networks (CDNs) (also referred to as "Content Distribution Networks" or the like); Mobility Service Provider (MSP) edge computing and/or Mobility as a Service (MaaS) provider systems (e.g., used in AECC architectures); Nebula edge-cloud systems; Fog computing systems; Cloudlet edge-cloud systems; Mobile Cloud Computing (MCC) systems; Central Office Re-architected as a Datacenter (CORD), mobile CORD (M-CORD) and/or Converged Multi-Access and Core (COMAC) systems; and/or the like. Further, the techniques disclosed herein may relate to other IoT edge network systems and configurations, and other intermediate processing entities and architectures may also be used to practice the embodiments herein.

### IV. COMPUTING SYSTEM AND HARDWARE CONFIGURATIONS

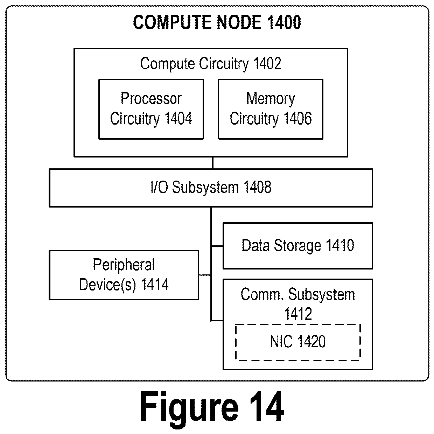

Figures 14 and 15 depict examples of edge computing systems and environments that may fulfill any of the compute nodes or devices discussed herein. Respective edge compute nodes may be embodied as a type of device, appliance, computer, or other "thing" capable of communicating with other edge, networking, or endpoint components. For example, an edge compute device may be embodied as a smartphone, a mobile compute device, a smart appliance, an in-vehicle compute system (e.g., a navigation system), or other device or system capable of performing the described functions.

Figure 14 depicts an example edge compute node 1400 that may be employed as any of the computing devices/systems discussed herein such as, for example, a mobile device, an in-vehicle system, a base station, server, gateway, etc.). In Figure 14, an edge compute node 1400 includes a compute engine (also referred to herein as "compute circuitry") 1402, an input/output (I/O) subsystem 1408, data storage 1410, a communication circuitry subsystem 1412, and, in some implementations, one or more peripheral devices 1414. In other examples, respective compute devices may include other or additional components, such as those typically found in a computer (e.g., a display, peripheral devices, etc.). Additionally, in some examples, one or more of the illustrative components may be incorporated in, or otherwise form a portion of, another component.

The compute node 1400 may be embodied as any type of engine, device, or collection of devices capable of performing various compute functions. In some examples, the compute node 1400 may be embodied as a single device such as an integrated circuit, an embedded system, an FPGA, a System-on-Chip (SoC), or other integrated system or device. The compute node 1400 includes or is embodied as a processor 1404 and a memory 1406. The processor 1404 may be embodied as any type of processor capable of performing the functions described herein (e.g., executing an application). For example, the processor 1404 may be embodied as a multi-core processor(s), a microcontroller, or other processor or processing/controlling circuit. In some examples, the processor 1404 may be embodied as, include, or be coupled to an FPGA, an application specific integrated circuit (ASIC), reconfigurable hardware or hardware circuitry, or other specialized hardware to facilitate performance of the functions described herein.

The main memory 1406 may be embodied as any type of volatile (e.g., dynamic random access memory (DRAM), etc.) or non-volatile memory or data storage capable of performing the functions described herein. Volatile memory may be a storage medium that requires power to maintain the state of data stored by the medium. Non-limiting examples of volatile memory may include various types of random access memory (RAM), such as DRAM or static random access memory (SRAM). One particular type of DRAM that may be used in a memory module is synchronous dynamic random access memory (SDRAM).

In one example, the memory device is a block addressable memory device, such as those based on NAND or NOR technologies. A memory device may also include a three dimensional crosspoint memory device (e.g., Intel^{®} 3D XPoint^{™} memory), or other byte addressable write-in-place nonvolatile memory devices. The memory device may refer to the die itself and/or to a packaged memory product. In some examples, 3D crosspoint memory (e.g., Intel^{®} 3D XPoint^{™} memory) may comprise a transistor-less stackable cross point architecture in which memory cells sit at the intersection of word lines and bit lines and are individually addressable and in which bit storage is based on a change in bulk resistance. In some examples, all or a portion of the main memory 1406 may be integrated into the processor 1404. The main memory 1406 may store various software and data used during operation such as one or more applications, data operated on by the application(s), libraries, and drivers.

The compute circuitry 1402 is communicatively coupled to other components of the compute node 1400 via the I/O subsystem 1408, which may be embodied as circuitry and/or components to facilitate input/output operations with the compute circuitry 1402 (e.g., with the processor 1404 and/or the main memory 1406) and other components of the compute circuitry 1402. For example, the I/O subsystem 1408 may be embodied as, or otherwise include, memory controller hubs, input/output control hubs, integrated sensor hubs, firmware devices, communication links (e.g., point-to-point links, bus links, wires, cables, light guides, printed circuit board traces, etc.), and/or other components and subsystems to facilitate the input/output operations. In some examples, the I/O subsystem 1408 may form a portion of a system-on-a-chip (SoC) and be incorporated, along with one or more of the processor 1404, the main memory 1406, and other components of the compute circuitry 1402, into the compute circuitry 1402.

The one or more illustrative data storage devices 1410 may be embodied as any type of devices configured for short-term or long-term storage of data such as, for example, memory devices and circuits, memory cards, hard disk drives, solid-state drives, or other data storage devices. Individual data storage devices 1410 may include a system partition that stores data and firmware code for the data storage device 1410. Individual data storage devices 1410 may also include one or more operating system partitions that store data files and executables for operating systems depending on, for example, the type of compute node 1400.

The communication circuitry 1412 may be embodied as any communication circuit, device, or collection thereof, capable of enabling communications over a network between the compute circuitry 1402 and another compute device (e.g., an edge gateway node or the like). The communication circuitry 1412 may be configured to use any one or more communication technology (e.g., wired or wireless communications) and associated protocols (e.g., a cellular networking protocol such a 3GPP 4G or 5G standard, a wireless local area network protocol such as IEEE 802.11/WiFi^{®}, a wireless wide area network protocol, Ethernet, Bluetooth^{®}, Bluetooth Low Energy, a IoT protocol such as IEEE 802.15.4 or ZigBee^{®}, low-power wide-area network (LPWAN) or low-power wide-area (LPWA) protocols, etc.) to effect such communication.

The illustrative communication circuitry 1412 includes a network interface controller (NIC) 1420, which may also be referred to as a host fabric interface (HFI). The NIC 1420 may be embodied as one or more add-in-boards, daughter cards, network interface cards, controller chips, chipsets, or other devices that may be used by the compute node 1400 to connect with another compute device. In some examples, the NIC 1420 may be embodied as part of a system-on-a-chip (SoC) that includes one or more processors, or included on a multichip package that also contains one or more processors. In some examples, the NIC 1420 may include a local processor (not shown) and/or a local memory (not shown) that are both local to the NIC 1420. In such examples, the local processor of the NIC 1420 may be capable of performing one or more of the functions of the compute circuitry 1402 described herein. Additionally, or alternatively, in such examples, the local memory of the NIC 1420 may be integrated into one or more components of the client compute node at the board level, socket level, chip level, and/or other levels.

Additionally, in some examples, a respective compute node 1400 may include one or more peripheral devices 1414. Such peripheral devices 1414 may include any type of peripheral device found in a compute device or server such as audio input devices, a display, other input/output devices, interface devices, and/or other peripheral devices, depending on the particular type of the compute node 1400. In further examples, the compute node 1400 may be embodied by a respective edge compute node in an edge computing system (e.g., client compute node, edge gateway node, edge aggregation node, UEs discussed previous, etc.) or like forms of appliances, computers, subsystems, circuitry, or other components.

Figure 15 illustrates an example of components that may be present in an edge computing node 1550 for implementing the techniques (e.g., operations, processes, methods, and methodologies) described herein. This edge computing node 1550 provides a closer view of the respective components of node 1500 when implemented as or as part of a computing device (e.g., as a mobile device, a base station, server, gateway, etc.). The edge computing node 1550 may include any combinations of the hardware or logical components referenced herein, and it may include or couple with any device usable with an edge communication network or a combination of such networks. The components may be implemented as ICs, portions thereof, discrete electronic devices, or other modules, instruction sets, programmable logic or algorithms, hardware, hardware accelerators, software, firmware, or a combination thereof adapted in the edge computing node 1550, or as components otherwise incorporated within a chassis of a larger system.

The edge computing node 1550 includes processing circuitry in the form of one or more processors 1552. The processor circuitry 1552 includes circuitry such as, but not limited to one or more processor cores and one or more of cache memory, low drop-out voltage regulators (LDOs), interrupt controllers, serial interfaces such as SPI, I²C or universal programmable serial interface circuit, real time clock (RTC), timer-counters including interval and watchdog timers, general purpose I/O, memory card controllers such as secure digital/multi-media card (SD/MMC) or similar, interfaces, mobile industry processor interface (MIPI) interfaces and Joint Test Access Group (JTAG) test access ports. In some implementations, the processor circuitry 1552 may include one or more hardware accelerators (e.g., same or similar to acceleration circuitry 1564), which may be microprocessors, programmable processing devices (e.g., FPGA, ASIC, etc.), or the like. The one or more accelerators may include, for example, computer vision and/or deep learning accelerators. In some implementations, the processor circuitry 1552 may include on-chip memory circuitry, which may include any suitable volatile and/or non-volatile memory, such as DRAM, SRAM, EPROM, EEPROM, Flash memory, solid-state memory, and/or any other type of memory device technology, such as those discussed herein

The processor circuitry 1552 may include, for example, one or more processor cores (CPUs), application processors, GPUs, RISC processors, Acorn RISC Machine (ARM) processors, CISC processors, one or more DSPs, one or more FPGAs, one or more PLDs, one or more ASICs, one or more baseband processors, one or more radio-frequency integrated circuits (RFIC), one or more microprocessors or controllers, a multi-core processor, a multithreaded processor, an ultra-low voltage processor, an embedded processor, or any other known processing elements, or any suitable combination thereof. The processors (or cores) 1552 may be coupled with or may include memory/storage and may be configured to execute instructions stored in the memory/storage to enable various applications or operating systems to run on the node 1550. The processors (or cores) 1552 is configured to operate application software to provide a specific service to a user of the node 1550. In some embodiments, the processor(s) 1552 may be a special-purpose processor(s)/controller(s) configured (or configurable) to operate according to the various embodiments herein.

As examples, the processor(s) 1552 may include an Intel^{®} Architecture Core^{™} based processor such as an i3, an i5, an i7, an i9 based processor; an Intel^{®} microcontroller-based processor such as a Quark^{™}, an Atom^{™}, or other MCU-based processor; Pentium^{®} processor(s), Xeon^{®} processor(s), or another such processor available from Intel^{®} Corporation, Santa Clara, California. However, any number other processors may be used, such as one or more of Advanced Micro Devices (AMD) Zen^{®} Architecture such as Ryzen^{®} or EPYC^{®} processor(s), Accelerated Processing Units (APUs), MxGPUs, Epyc^{®} processor(s), or the like; A5-A12 and/or S1-S4 processor(s) from Apple^{®} Inc., Snapdragon^{™} or Centriq^{™} processor(s) from Qualcomm^{®} Technologies, Inc., Texas Instruments, Inc.^{®} Open Multimedia Applications Platform (OMAP)^{™} processor(s); a MIPS-based design from MIPS Technologies, Inc. such as MIPS Warrior M-class, Warrior I-class, and Warrior P-class processors; an ARM-based design licensed from ARM Holdings, Ltd., such as the ARM Cortex-A, Cortex-R, and Cortex-M family of processors; the ThunderX2^{®} provided by Cavium^{™}, Inc.; or the like. In some implementations, the processor(s) 1552 may be a part of a system on a chip (SoC), System-in-Package (SiP), a multi-chip package (MCP), and/or the like, in which the processor(s) 1552 and other components are formed into a single integrated circuit, or a single package, such as the Edison^{™} or Galileo^{™} SoC boards from Intel^{®} Corporation. Other examples of the processor(s) 1552 are mentioned elsewhere in the present disclosure.

The processor(s) 1552 may communicate with system memory 1554 over an interconnect (IX) 1556. Any number of memory devices may be used to provide for a given amount of system memory. As examples, the memory may be random access memory (RAM) in accordance with a Joint Electron Devices Engineering Council (JEDEC) design such as the DDR or mobile DDR standards (e.g., LPDDR, LPDDR2, LPDDR3, or LPDDR4). In particular examples, a memory component may comply with a DRAM standard promulgated by JEDEC, such as JESD79F for DDR SDRAM, JESD79-2F for DDR2 SDRAM, JESD79-3F for DDR3 SDRAM, JESD79-4A for DDR4 SDRAM, JESD209 for Low Power DDR (LPDDR), JESD209-2 for LPDDR2, JESD209-3 for LPDDR3, and JESD209-4 for LPDDR4. Other types of RAM, such as dynamic RAM (DRAM), synchronous DRAM (SDRAM), and/or the like may also be included. Such standards (and similar standards) may be referred to as DDR-based standards and communication interfaces of the storage devices that implement such standards may be referred to as DDR-based interfaces. In various implementations, the individual memory devices may be of any number of different package types such as single die package (SDP), dual die package (DDP) or quad die package (Q 17P). These devices, in some examples, may be directly soldered onto a motherboard to provide a lower profile solution, while in other examples the devices are configured as one or more memory modules that in turn couple to the motherboard by a given connector. Any number of other memory implementations may be used, such as other types of memory modules, e.g., dual inline memory modules (DIMMs) of different varieties including but not limited to microDIMMs or MiniDIMMs.

To provide for persistent storage of information such as data, applications, operating systems and so forth, a storage 1558 may also couple to the processor 1552 via the IX 1556. In an example, the storage 1558 may be implemented via a solid-state disk drive (SSDD) and/or high-speed electrically erasable memory (commonly referred to as "flash memory"). Other devices that may be used for the storage 1558 include flash memory cards, such as SD cards, microSD cards, XD picture cards, and the like, and USB flash drives. In an example, the memory device may be or may include memory devices that use chalcogenide glass, multi-threshold level NAND flash memory, NOR flash memory, single or multi-level Phase Change Memory (PCM), a resistive memory, nanowire memory, ferroelectric transistor random access memory (FeTRAM), antiferroelectric memory, magnetoresistive random access memory (MRAM) memory that incorporates memristor technology, phase change RAM (PRAM), resistive memory including the metal oxide base, the oxygen vacancy base and the conductive bridge Random Access Memory (CB-RAM), or spin transfer torque (STT)-MRAM, a spintronic magnetic junction memory based device, a magnetic tunneling junction (MTJ) based device, a Domain Wall (DW) and Spin Orbit Transfer (SOT) based device, a thyristor based memory device, or a combination of any of the above, or other memory. The memory circuitry 1554 and/or storage circuitry 1558 may also incorporate three-dimensional (3D) cross-point (XPOINT) memories from Intel^{®} and Micron^{®}.

In low power implementations, the storage 1558 may be on-die memory or registers associated with the processor 1552. However, in some examples, the storage 1458 may be implemented using a micro hard disk drive (HDD). Further, any number of new technologies may be used for the storage 1558 in addition to, or instead of, the technologies described, such resistance change memories, phase change memories, holographic memories, or chemical memories, among others.

The storage circuitry 1558 store computational logic 1582 (or "modules 1582") in the form of software, firmware, or hardware commands to implement the techniques described herein. The computational logic 1582 may be employed to store working copies and/or permanent copies of computer programs, or data to create the computer programs, for the operation of various components of node 1550 (e.g., drivers, etc.), an OS of node 1550 and/or one or more applications for carrying out the embodiments discussed herein. The computational logic 1582 may be stored or loaded into memory circuitry 1554 as instructions 1582, or data to create the instructions 1588, for execution by the processor circuitry 1552 to provide the functions described herein. The various elements may be implemented by assembler instructions supported by processor circuitry 1552 or high-level languages that may be compiled into such instructions (e.g., instructions 1588, or data to create the instructions 1588). The permanent copy of the programming instructions may be placed into persistent storage devices of storage circuitry 1558 in the factory or in the field through, for example, a distribution medium (not shown), through a communication interface (e.g., from a distribution server (not shown)), or over-the-air (OTA).

In an example, the instructions 1588 provided via the memory circuitry 1554 and/or the storage circuitry 1558 of Figure 15 are embodied as one or more non-transitory computer readable storage media (see e.g., NTCRSM 1560) including program code, a computer program product or data to create the computer program, with the computer program or data, to direct the processor circuitry 1558 of node 1550 to perform electronic operations in the node 1550, and/or to perform a specific sequence or flow of actions, for example, as described with respect to the flowchart(s) and block diagram(s) of operations and functionality depicted previously. The processor circuitry 1552 accesses the one or more non-transitory computer readable storage media over the interconnect 1556.

In alternate embodiments, programming instructions (or data to create the instructions) may be disposed on multiple NTCRSM 1560. In alternate embodiments, programming instructions (or data to create the instructions) may be disposed on computer-readable transitory storage media, such as, signals. The instructions embodied by a machine-readable medium may further be transmitted or received over a communications network using a transmission medium via a network interface device utilizing any one of a number of transfer protocols (e.g., HTTP). Any combination of one or more computer usable or computer readable medium(s) may be utilized. The computer-usable or computer-readable medium may be, for example but not limited to, one or more electronic, magnetic, optical, electromagnetic, infrared, or semiconductor systems, apparatuses, devices, or propagation media. For instance, the NTCRSM 1560 may be embodied by devices described for the storage circuitry 1558 and/or memory circuitry 1554. More specific examples (a non- exhaustive list) of a computer-readable medium would include the following: an electrical connection having one or more wires, a portable computer diskette, a hard disk, a random access memory (RAM), a read-only memory (ROM), an erasable programmable read-only memory (EPROM, Flash memory, etc.), an optical fiber, a portable compact disc read-only memory (CD-ROM), an optical storage device and/or optical disks, a transmission media such as those supporting the Internet or an intranet, a magnetic storage device, or any number of other hardware devices. Note that the computer-usable or computer-readable medium could even be paper or another suitable medium upon which the program (or data to create the program) is printed, as the program (or data to create the program) can be electronically captured, via, for instance, optical scanning of the paper or other medium, then compiled, interpreted, or otherwise processed in a suitable manner, if necessary, and then stored in a computer memory (with or without having been staged in or more intermediate storage media). In the context of this document, a computer-usable or computer-readable medium may be any medium that can contain, store, communicate, propagate, or transport the program (or data to create the program) for use by or in connection with the instruction execution system, apparatus, or device. The computer-usable medium may include a propagated data signal with the computer-usable program code (or data to create the program code) embodied therewith, either in baseband or as part of a carrier wave. The computer usable program code (or data to create the program) may be transmitted using any appropriate medium, including but not limited to wireless, wireline, optical fiber cable, RF, etc.

In various embodiments, the program code (or data to create the program code) described herein may be stored in one or more of a compressed format, an encrypted format, a fragmented format, a packaged format, etc. Program code (or data to create the program code) as described herein may require one or more of installation, modification, adaptation, updating, combining, supplementing, configuring, decryption, decompression, unpacking, distribution, reassignment, etc. in order to make them directly readable and/or executable by a computing device and/or other machine. For example, the program code (or data to create the program code) may be stored in multiple parts, which are individually compressed, encrypted, and stored on separate computing devices, wherein the parts when decrypted, decompressed, and combined form a set of executable instructions that implement the program code (the data to create the program code such as that described herein. In another example, the Program code (or data to create the program code) may be stored in a state in which they may be read by a computer, but require addition of a library (e.g., a dynamic link library), a software development kit (SDK), an application programming interface (API), etc. in order to execute the instructions on a particular computing device or other device. In another example, the program code (or data to create the program code) may need to be configured (e.g., settings stored, data input, network addresses recorded, etc.) before the program code (or data to create the program code) can be executed/used in whole or in part. In this example, the program code (or data to create the program code) may be unpacked, configured for proper execution, and stored in a first location with the configuration instructions located in a second location distinct from the first location. The configuration instructions can be initiated by an action, trigger, or instruction that is not co-located in storage or execution location with the instructions enabling the disclosed techniques. Accordingly, the disclosed program code (or data to create the program code) are intended to encompass such machine readable instructions and/or program(s) (or data to create such machine readable instruction and/or programs) regardless of the particular format or state of the machine readable instructions and/or program(s) when stored or otherwise at rest or in transit.

Computer program code for carrying out operations of the present disclosure (e.g., computational logic 1582, instructions 1582, instructions 1588 discussed previously) may be written in any combination of one or more programming languages, including an object oriented programming language such as Python, Ruby, Scala, Smalltalk, Java^{™}, C++, C#, or the like; a procedural programming languages, such as the "C" programming language, the Go (or "Golang") programming language, or the like; a scripting language such as JavaScript, Server-Side JavaScript (SSJS), JQuery, PHP, Pearl, Python, Ruby on Rails, Accelerated Mobile Pages Script (AMPscript), Mustache Template Language, Handlebars Template Language, Guide Template Language (GTL), PHP, Java and/or Java Server Pages (JSP), Node.js, ASP.NET, JAMscript, and/or the like; a markup language such as Hypertext Markup Language (HTML), Extensible Markup Language (XML), Java Script Object Notion (JSON), Apex^{®}, Cascading Stylesheets (CSS), JavaServer Pages (JSP), MessagePack^{™}, Apache^{®} Thrift, Abstract Syntax Notation One (ASN. 1), Google^{®} Protocol Buffers (protobuf), or the like; some other suitable programming languages including proprietary programming languages and/or development tools, or any other languages tools. The computer program code for carrying out operations of the present disclosure may also be written in any combination of the programming languages discussed herein. The program code may execute entirely on the system 1550, partly on the system 1550, as a stand-alone software package, partly on the system 1550 and partly on a remote computer or entirely on the remote computer or server. In the latter scenario, the remote computer may be connected to the system 1550 through any type of network, including a LAN or WAN, or the connection may be made to an external computer (e.g., through the Internet using an Internet Service Provider).

In an example, the instructions 1588 on the processor circuitry 1552 (separately, or in combination with the instructions 1582 and/or logic/modules 1582 stored in computer-readable storage media) may configure execution or operation of a trusted execution environment (TEE) 1590. The TEE 1590 operates as a protected area accessible to the processor circuitry 1552 to enable secure access to data and secure execution of instructions. In some embodiments, the TEE 1590 may be a physical hardware device that is separate from other components of the system 1550 such as a secure-embedded controller, a dedicated SoC, or a tamper-resistant chipset or microcontroller with embedded processing devices and memory devices. Examples of such embodiments include a Desktop and mobile Architecture Hardware (DASH) compliant Network Interface Card (NIC), Intel^{®} Management/Manageability Engine, Intel^{®} Converged Security Engine (CSE) or a Converged Security Management/Manageability Engine (CSME), Trusted Execution Engine (TXE) provided by Intel^{®} each of which may operate in conjunction with Intel^{®} Active Management Technology (AMT) and/or Intel^{®} vPro^{™} Technology; AMD^{®} Platform Security coProcessor (PSP), AMD^{®} PRO A-Series Accelerated Processing Unit (APU) with DASH manageability, Apple^{®} Secure Enclave coprocessor; IBM^{®} Crypto Express3^{®}, IBM^{®} 4807, 4808, 4809, and/or 4765 Cryptographic Coprocessors, IBM^{®} Baseboard Management Controller (BMC) with Intelligent Platform Management Interface (IPMI), Dell^{™} Remote Assistant Card II (DRAC II), integrated Dell^{™} Remote Assistant Card (iDRAC), and the like.

In other embodiments, the TEE 1590 may be implemented as secure enclaves, which are isolated regions of code and/or data within the processor and/or memory/storage circuitry of the system 1550. Only code executed within a secure enclave may access data within the same secure enclave, and the secure enclave may only be accessible using the secure application (which may be implemented by an application processor or a tamper-resistant microcontroller). Various implementations of the TEE 1550, and an accompanying secure area in the processor circuitry 1552 or the memory circuitry 1554 and/or storage circuitry 1558 may be provided, for instance, through use of Intel^{®} Software Guard Extensions (SGX), ARM^{®} TrustZone^{®} hardware security extensions, Keystone Enclaves provided by Oasis Labs^{™}, and/or the like. Other aspects of security hardening, hardware roots-of-trust, and trusted or protected operations may be implemented in the device 1550 through the TEE 1590 and the processor circuitry 1552.

In some embodiments, the memory circuitry 1554 and/or storage circuitry 1558 may be divided into isolated user-space instances such as containers, partitions, virtual environments (VEs), etc. The isolated user-space instances may be implemented using a suitable OS-level virtualization technology such as Docker^{®} containers, Kubernetes^{®} containers, Solaris^{®} containers and/or zones, OpenVZ^{®} virtual private servers, DragonFly BSD^{®} virtual kernels and/or jails, chroot jails, and/or the like. Virtual machines could also be used in some implementations. In some embodiments, the memory circuitry 1554 and/or storage circuitry 1558 may be divided into one or more trusted memory regions for storing applications or software modules of the TEE 1590.

Although the instructions 1582 are shown as code blocks included in the memory circuitry 1554 and the computational logic 1582 is shown as code blocks in the storage circuitry 1558, it should be understood that any of the code blocks may be replaced with hardwired circuits, for example, built into an FPGA, ASIC, or some other suitable circuitry. For example, where processor circuitry 1552 includes (e.g., FPGA based) hardware accelerators as well as processor cores, the hardware accelerators (e.g., the FPGA cells) may be pre-configured (e.g., with appropriate bit streams) with the aforementioned computational logic to perform some or all of the functions discussed previously (in lieu of employment of programming instructions to be executed by the processor core(s)).

The memory circuitry 1554 and/or storage circuitry 1558 may store program code of an operating system (OS), which may be a general purpose OS or an OS specifically written for and tailored to the computing node 1550. For example, the OS may be Unix or a Unix-like OS such as Linux e.g., provided by Red Hat Enterprise, Windows 10^{™} provided by Microsoft Corp.^{®}, macOS provided by Apple Inc.^{®}, or the like. In another example, the OS may be a mobile OS, such as Android^{®} provided by Google Inc.^{®}, iOS^{®} provided by Apple Inc.^{®}, Windows 10 Mobile^{®} provided by Microsoft Corp.^{®}, KaiOS provided by KaiOS Technologies Inc., or the like. In another example, the OS may be a real-time OS (RTOS), such as Apache Mynewt provided by the Apache Software Foundation^{®}, Windows 10 For IoT^{®} provided by Microsoft Corp.^{®}, Micro-Controller Operating Systems ("MicroC/OS" or "µC/OS") provided by Micrium^{®}, Inc., FreeRTOS, VxWorks^{®} provided by Wind River Systems, Inc.^{®}, PikeOS provided by Sysgo AG^{®}, Android Things^{®} provided by Google Inc.^{®}, QNX^{®} RTOS provided by BlackBerry Ltd., or any other suitable RTOS, such as those discussed herein.

The OS may include one or more drivers that operate to control particular devices that are embedded in the node 1550, attached to the node 1550, or otherwise communicatively coupled with the node 1550. The drivers may include individual drivers allowing other components of the node 1550 to interact or control various I/O devices that may be present within, or connected to, the node 1550. For example, the drivers may include a display driver to control and allow access to a display device, a touchscreen driver to control and allow access to a touchscreen interface of the node 1550, sensor drivers to obtain sensor readings of sensor circuitry 1572 and control and allow access to sensor circuitry 1572, actuator drivers to obtain actuator positions of the actuators 1574 and/or control and allow access to the actuators 1574, a camera driver to control and allow access to an embedded image capture device, audio drivers to control and allow access to one or more audio devices. The OSs may also include one or more libraries, drivers, APIs, firmware, middleware, software glue, etc., which provide program code and/or software components for one or more applications to obtain and use the data from a secure execution environment, trusted execution environment, and/or management engine of the node 1550 (not shown).

The components of edge computing device 1550 may communicate over the IX 1556. The IX 1556 may include any number of technologies, including ISA, extended ISA, I²C, SPI, point-to-point interfaces, power management bus (PMBus), PCI, PCIe, PCIx, Intel^{®} UPI, Intel^{®} Accelerator Link, Intel^{®} CXL, CAPI, OpenCAPI, Intel^{®} QPI, UPI, Intel^{®} OPA IX, RapidIO^{™} system IXs, CCIX, Gen-Z Consortium IXs, a HyperTransport interconnect, NVLink provided by NVIDIA^{®}, a Time-Trigger Protocol (TTP) system, a FlexRay system, and/or any number of other IX technologies. The IX 1556 may be a proprietary bus, for example, used in a SoC based system.

The IX 1556 couples the processor 1552 to communication circuitry 1566 for communications with other devices, such as a remote server (not shown) and/or the connected edge devices 1562. The communication circuitry 1566 is a hardware element, or collection of hardware elements, used to communicate over one or more networks (e.g., cloud 1563) and/or with other devices (e.g., edge devices 1562).

The transceiver 1566 may use any number of frequencies and protocols, such as 2.4 Gigahertz (GHz) transmissions under the IEEE 802.15.4 standard, using the Bluetooth^{®} low energy (BLE) standard, as defined by the Bluetooth^{®} Special Interest Group, or the ZigBee^{®} standard, among others. Any number of radios, configured for a particular wireless communication protocol, may be used for the connections to the connected edge devices 1562. For example, a wireless local area network (WLAN) unit may be used to implement WiFi^{®} communications in accordance with the Institute of Electrical and Electronics Engineers (IEEE) 802.11 standard. In addition, wireless wide area communications, e.g., according to a cellular or other wireless wide area protocol, may occur via a wireless wide area network (WWAN) unit.

The wireless network transceiver 1566 (or multiple transceivers) may communicate using multiple standards or radios for communications at a different range. For example, the edge computing node 1550 may communicate with close devices, e.g., within about 10 meters, using a local transceiver based on BLE, or another low power radio, to save power. More distant connected edge devices 1562, e.g., within about 50 meters, may be reached over ZigBee^{®} or other intermediate power radios. Both communications techniques may take place over a single radio at different power levels or may take place over separate transceivers, for example, a local transceiver using BLE and a separate mesh transceiver using ZigBee^{®}.

A wireless network transceiver 1566 (e.g., a radio transceiver) may be included to communicate with devices or services in the edge cloud 1563 via local or wide area network protocols. The wireless network transceiver 1566 may be an LPWA transceiver that follows the IEEE 802.15.4, or IEEE 802.15.4g standards, among others. The edge computing node 1563 may communicate over a wide area using LoRaWAN^{™} (Long Range Wide Area Network) developed by Semtech and the LoRa Alliance. The techniques described herein are not limited to these technologies but may be used with any number of other cloud transceivers that implement long range, low bandwidth communications, such as Sigfox, and other technologies. Further, other communications techniques, such as time-slotted channel hopping, described in the IEEE 802.15.4e specification may be used.

Any number of other radio communications and protocols may be used in addition to the systems mentioned for the wireless network transceiver 1566, as described herein. For example, the transceiver 1566 may include a cellular transceiver that uses spread spectrum (SPA/SAS) communications for implementing high-speed communications. Further, any number of other protocols may be used, such as WiFi^{®} networks for medium speed communications and provision of network communications. The transceiver 1566 may include radios that are compatible with any number of 3GPP specifications, such as LTE and SG/NR communication systems, discussed in further detail at the end of the present disclosure. A network interface controller (NIC) 1568 may be included to provide a wired communication to nodes of the edge cloud 1563 or to other devices, such as the connected edge devices 1562 (e.g., operating in a mesh). The wired communication may provide an Ethernet connection or may be based on other types of networks, such as Controller Area Network (CAN), Local Interconnect Network (LIN), DeviceNet, ControlNet, Data Highway Plus (DH+), PROFIBUS, or PROFINET, among many others. An additional NIC 1568 may be included to enable connecting to a second network, for example, a first NIC 1568 providing communications to the cloud over Ethernet, and a second NIC 1568 providing communications to other devices over another type of network.

Given the variety of types of applicable communications from the device to another component or network, applicable communications circuitry used by the device may include or be embodied by any one or more of components 1564, 1566, 151468, or 1570. Accordingly, in various examples, applicable means for communicating (e.g., receiving, transmitting, etc.) may be embodied by such communications circuitry.

The edge computing node 1550 may include or be coupled to acceleration circuitry 1564, which may be embodied by one or more AI accelerators, a neural compute stick, neuromorphic hardware, an FPGA, an arrangement of GPUs, one or more SoCs (including programmable SoCs), one or more CPUs, one or more digital signal processors, dedicated ASICs (including programmable ASICs), PLDs such as CPLDs or HCPLDs, and/or other forms of specialized processors or circuitry designed to accomplish one or more specialized tasks. These tasks may include AI processing (including machine learning, training, inferencing, and classification operations), visual data processing, network data processing, object detection, rule analysis, or the like. In FPGA-based implementations, the acceleration circuitry 1564 may comprise logic blocks or logic fabric and other interconnected resources that may be programmed (configured) to perform various functions, such as the procedures, methods, functions, etc. of the various embodiments discussed herein. In such implementations, the acceleration circuitry 1564 may also include memory cells (e.g., EPROM, EEPROM, flash memory, static memory (e.g., SRAM, anti-fuses, etc.) used to store logic blocks, logic fabric, data, etc. in LUTs and the like.

The IX 1556 also couples the processor 1552 to a sensor hub or external interface 1570 that is used to connect additional devices or subsystems. The additional/external devices may include sensors 1572, actuators 1574, and positioning circuitry 1545.

The sensor circuitry 1572 includes devices, modules, or subsystems whose purpose is to detect events or changes in its environment and send the information (sensor data) about the detected events to some other a device, module, subsystem, etc. Examples of such sensors 1572 include, inter alia, inertia measurement units (IMU) comprising accelerometers, gyroscopes, and/or magnetometers; microelectromechanical systems (MEMS) or nanoelectromechanical systems (NEMS) comprising 3-axis accelerometers, 3-axis gyroscopes, and/or magnetometers; level sensors; flow sensors; temp sensors (e.g., thermistors); pressure sensors; barometric pressure sensors; gravimeters; altimeters; image capture devices (e.g., cameras); light detection and ranging (LiDAR) sensors; proximity sensors (e.g., infrared radiation detector and the like); depth sensors, ambient light sensors; optical light sensors; ultrasonic transceivers; microphones; and the like.

The actuators 1574, allow node 1550 to change its state, position, and/or orientation, or move or control a mechanism or system. The actuators 1574 comprise electrical and/or mechanical devices for moving or controlling a mechanism or system, and converts energy (e.g., electric current or moving air and/or liquid) into some kind of motion. The actuators 1574 may include one or more electronic (or electrochemical) devices, such as piezoelectric biomorphs, solid state actuators, solid state relays (SSRs), shape-memory alloy-based actuators, electroactive polymer-based actuators, relay driver integrated circuits (ICs), and/or the like. The actuators 1574 may include one or more electromechanical devices such as pneumatic actuators, hydraulic actuators, electromechanical switches including electromechanical relays (EMRs), motors (e.g., DC motors, stepper motors, servomechanisms, etc.), power switches, valve actuators, wheels, thrusters, propellers, claws, clamps, hooks, audible sound generators, visual warning devices, and/or other like electromechanical components. The node 1550 may be configured to operate one or more actuators 1574 based on one or more captured events and/or instructions or control signals received from a service provider and/or various client systems

The positioning circuitry 1545 includes circuitry to receive and decode signals transmitted/broadcasted by a positioning network of a global navigation satellite system (GNSS). Examples of navigation satellite constellations (or GNSS) include United States' Global Positioning System (GPS), Russia's Global Navigation System (GLONASS), the European Union's Galileo system, China's BeiDou Navigation Satellite System, a regional navigation system or GNSS augmentation system (e.g., Navigation with Indian Constellation (NAVIC), Japan's Quasi-Zenith Satellite System (QZSS), France's Doppler Orbitography and Radio-positioning Integrated by Satellite (DORIS), etc.), or the like. The positioning circuitry 1545 comprises various hardware elements (e.g., including hardware devices such as switches, filters, amplifiers, antenna elements, and the like to facilitate OTA communications) to communicate with components of a positioning network, such as navigation satellite constellation nodes. In some embodiments, the positioning circuitry 1545 may include a Micro-Technology for Positioning, Navigation, and Timing (Micro-PNT) IC that uses a master timing clock to perform position tracking/estimation without GNSS assistance. The positioning circuitry 1545 may also be part of, or interact with, the communication circuitry 1566 to communicate with the nodes and components of the positioning network. The positioning circuitry 1545 may also provide position data and/or time data to the application circuitry, which may use the data to synchronize operations with various infrastructure (e.g., radio base stations), for turn-by-turn navigation, or the like. When a GNSS signal is not available or when GNSS position accuracy is not sufficient for a particular application or service, a positioning augmentation technology can be used to provide augmented positioning information and data to the application or service. Such a positioning augmentation technology may include, for example, satellite based positioning augmentation (e.g., EGNOS) and/or ground based positioning augmentation (e.g., DGPS). In some implementations, the positioning circuitry 1545 is, or includes an INS, which is a system or device that uses sensor circuitry 1572 (e.g., motion sensors such as accelerometers, rotation sensors such as gyroscopes, and altimimeters, magentic sensors, and/or the like to continuously calculate (e.g., using dead by dead reckoning, triangulation, or the like) a position, orientation, and/or velocity (including direction and speed of movement) of the node 1550 without the need for external references.

In some examples, various input/output (I/O) devices may be present within or connected to, the edge computing node 1550, which are referred to as input circuitry 1586 and output circuitry 1584 in Figure 15. The input circuitry 151486 and output circuitry 1584 include one or more user interfaces designed to enable user interaction with the node 1550 and/or peripheral component interfaces designed to enable peripheral component interaction with the node 1550. Input circuitry 1586 may include any physical or virtual means for accepting an input including, inter alia, one or more physical or virtual buttons (e.g., a reset button), a physical keyboard, keypad, mouse, touchpad, touchscreen, microphones, scanner, headset, and/or the like. The output circuitry 1584 may be included to show information or otherwise convey information, such as sensor readings, actuator position(s), or other like information. Data and/or graphics may be displayed on one or more user interface components of the output circuitry 1584. Output circuitry 1584 may include any number and/or combinations of audio or visual display, including, inter alia, one or more simple visual outputs/indicators (e.g., binary status indicators (e.g., light emitting diodes (LEDs)) and multi-character visual outputs, or more complex outputs such as display devices or touchscreens (e.g., Liquid Chrystal Displays (LCD), LED displays, quantum dot displays, projectors, etc.), with the output of characters, graphics, multimedia objects, and the like being generated or produced from the operation of the node 1550. The output circuitry 1584 may also include speakers or other audio emitting devices, printer(s), and/or the like. In some embodiments, the sensor circuitry 1572 may be used as the input circuitry 1584 (e.g., an image capture device, motion capture device, or the like) and one or more actuators 1574 may be used as the output device circuitry 1584 (e.g., an actuator to provide haptic feedback or the like). In another example, near-field communication (NFC) circuitry comprising an NFC controller coupled with an antenna element and a processing device may be included to read electronic tags and/or connect with another NFC-enabled device. Peripheral component interfaces may include, but are not limited to, a non-volatile memory port, a USB port, an audio j ack, a power supply interface, etc. A display or console hardware, in the context of the present system, may be used to provide output and receive input of an edge computing system; to manage components or services of an edge computing system; identify a state of an edge computing component or service; or to conduct any other number of management or administration functions or service use cases.

A battery 1576 may power the edge computing node 1550, although, in examples in which the edge computing node 1550 is mounted in a fixed location, it may have a power supply coupled to an electrical grid, or the battery may be used as a backup or for temporary capabilities. The battery 1576 may be a lithium ion battery, or a metal-air battery, such as a zinc-air battery, an aluminum-air battery, a lithium-air battery, and the like.

A battery monitor/charger 1578 may be included in the edge computing node 1550 to track the state of charge (SoCh) of the battery 1576, if included. The battery monitor/charger 1578 may be used to monitor other parameters of the battery 1576 to provide failure predictions, such as the state of health (SoH) and the state of function (SoF) of the battery 1576. The battery monitor/charger 1578 may include a battery monitoring integrated circuit, such as an LTC4020 or an LTC2990 from Linear Technologies, an ADT7488A from ON Semiconductor of Phoenix Arizona, or an IC from the UCD90xxx family from Texas Instruments of Dallas, TX. The battery monitor/charger 1578 may communicate the information on the battery 1576 to the processor 1552 over the IX 1556. The battery monitor/charger1578 may also include an analog-to-digital (ADC) converter that enables the processor 1552 to directly monitor the voltage of the battery 1576 or the current flow from the battery 1576. The battery parameters may be used to determine actions that the edge computing node 1550 may perform, such as transmission frequency, mesh network operation, sensing frequency, and the like.

A power block 1580, or other power supply coupled to a grid, may be coupled with the battery monitor/charger 1578 to charge the battery 1576. In some examples, the power block 1580 may be replaced with a wireless power receiver to obtain the power wirelessly, for example, through a loop antenna in the edge computing node 1550. A wireless battery charging circuit, such as an LTC4020 chip from Linear Technologies of Milpitas, California, among others, may be included in the battery monitor/charger 1578. The specific charging circuits may be selected based on the size of the battery 1576, and thus, the current required. The charging may be performed using the Airfuel standard promulgated by the Airfuel Alliance, the Qi wireless charging standard promulgated by the Wireless Power Consortium, or the Rezence charging standard, promulgated by the Alliance for Wireless Power, among others.

The storage 1558 may include instructions 1582 in the form of software, firmware, or hardware commands to implement the techniques described herein. Although such instructions 1582 are shown as code blocks included in the memory 1554 and the storage 1558, it may be understood that any of the code blocks may be replaced with hardwired circuits, for example, built into an application specific integrated circuit (ASIC).

In an example, the instructions 1482 provided via the memory 1554, the storage 1558, or the processor 1552 may be embodied as a non-transitory, machine-readable medium 1560 including code to direct the processor 1552 to perform electronic operations in the edge computing node 1550. The processor 1552 may access the non-transitory, machine-readable medium 1560 over the IX 1556. For instance, the non-transitory, machine-readable medium 1560 may be embodied by devices described for the storage 1558 or may include specific storage units such as optical disks, flash drives, or any number of other hardware devices. The non-transitory, machine-readable medium 1560 may include instructions to direct the processor 1552 to perform a specific sequence or flow of actions, for example, as described with respect to the flowchart(s) and block diagram(s) of operations and functionality depicted above. As used herein, the terms "machine-readable medium" and "computer-readable medium" are interchangeable.

In further examples, a machine-readable medium also includes any tangible medium that is capable of storing, encoding or carrying instructions for execution by a machine and that cause the machine to perform any one or more of the methodologies of the present disclosure or that is capable of storing, encoding or carrying data structures utilized by or associated with such instructions. A "machine-readable medium" thus may include but is not limited to, solid-state memories, and optical and magnetic media. Specific examples of machine-readable media include non-volatile memory, including but not limited to, by way of example, semiconductor memory devices (e.g., electrically programmable read-only memory (EPROM), electrically erasable programmable read-only memory (EEPROM)) and flash memory devices; magnetic disks such as internal hard disks and removable disks; magneto-optical disks; and CD-ROM and DVD-ROM disks. The instructions embodied by a machine-readable medium may further be transmitted or received over a communications network using a transmission medium via a network interface device utilizing any one of a number of transfer protocols (e.g., HTTP).

A machine-readable medium may be provided by a storage device or other apparatus which is capable of hosting data in a non-transitory format. In an example, information stored or otherwise provided on a machine-readable medium may be representative of instructions, such as instructions themselves or a format from which the instructions may be derived. This format from which the instructions may be derived may include source code, encoded instructions (e.g., in compressed or encrypted form), packaged instructions (e.g., split into multiple packages), or the like. The information representative of the instructions in the machine-readable medium may be processed by processing circuitry into the instructions to implement any of the operations discussed herein. For example, deriving the instructions from the information (e.g., processing by the processing circuitry) may include: compiling (e.g., from source code, object code, etc.), interpreting, loading, organizing (e.g., dynamically or statically linking), encoding, decoding, encrypting, unencrypting, packaging, unpackaging, or otherwise manipulating the information into the instructions.

In an example, the derivation of the instructions may include assembly, compilation, or interpretation of the information (e.g., by the processing circuitry) to create the instructions from some intermediate or preprocessed format provided by the machine-readable medium. The information, when provided in multiple parts, may be combined, unpacked, and modified to create the instructions. For example, the information may be in multiple compressed source code packages (or object code, or binary executable code, etc.) on one or several remote servers. The source code packages may be encrypted when in transit over a network and decrypted, uncompressed, assembled (e.g., linked) if necessary, and compiled or interpreted (e.g., into a library, stand-alone executable, etc.) at a local machine, and executed by the local machine.

The illustrations of Figures 14 and 15 are intended to depict a high-level view of components of a varying device, subsystem, or arrangement of an edge computing node. However, some of the components shown may be omitted, additional components may be present, and a different arrangement of the components may occur in other implementations. Further, these arrangements are usable in a variety of use cases and environments, including those discussed herein (e.g., a mobile UE in industrial compute for smart city or smart factory, among many other examples). The respective compute platforms of Figures 14 and 15 may support multiple edge instances (e.g., edge clusters) by use of tenant containers running on a single compute platform. Likewise, multiple edge nodes may exist as subnodes running on tenants within the same compute platform. Accordingly, based on available resource partitioning, a single system or compute platform may be partitioned or divided into supporting multiple tenants and edge node instances, each of which may support multiple services and functions-even while being potentially operated or controlled in multiple compute platform instances by multiple owners. These various types of partitions may support complex multi-tenancy and many combinations of multi-stakeholders through the use of an LSM or other implementation of an isolation/security policy. References to the use of an LSM and security features which enhance or implement such security features are thus noted in the following sections. Likewise, services and functions operating on these various types of multi-entity partitions may be load-balanced, migrated, and orchestrated to accomplish necessary service objectives and operations.

### VI. TERMINOLOGY

As used herein, the singular forms "a," "an" and "the" are intended to include plural forms as well, unless the context clearly indicates otherwise. It will be further understood that the terms "comprises" and/or "comprising," when used in this specification, specific the presence of stated features, integers, steps, operations, elements, and/or components, but do not preclude the presence or addition of one or more other features, integers, steps, operation, elements, components, and/or groups thereof. The phrase "A and/or B" means (A), (B), or (A and B). For the purposes of the present disclosure, the phrase "A, B, and/or C" means (A), (B), (C), (A and B), (A and C), (B and C), or (A, B and C). The description may use the phrases "in an embodiment," or "In some embodiments," which may each refer to one or more of the same or different embodiments. Furthermore, the terms "comprising," "including," "having," and the like, as used with respect to embodiments of the present disclosure, are synonymous.

The terms "coupled," "communicatively coupled," along with derivatives thereof are used herein. The term "coupled" may mean two or more elements are in direct physical or electrical contact with one another, may mean that two or more elements indirectly contact each other but still cooperate or interact with each other, and/or may mean that one or more other elements are coupled or connected between the elements that are said to be coupled with each other. The term "directly coupled" may mean that two or more elements are in direct contact with one another. The term "communicatively coupled" may mean that two or more elements may be in contact with one another by a means of communication including through a wire or other interconnect connection, through a wireless communication channel or ink, and/or the like.

The term "circuitry" refers to a circuit or system of multiple circuits configured to perform a particular function in an electronic device. The circuit or system of circuits may be part of, or include one or more hardware components, such as a logic circuit, a processor (shared, dedicated, or group) and/or memory (shared, dedicated, or group), an ASIC, a FPGA, programmable logic controller (PLC), SoC, SiP, multi-chip package (MCP), DSP, etc., that are configured to provide the described functionality. In addition, the term "circuitry" may also refer to a combination of one or more hardware elements with the program code used to carry out the functionality of that program code. Some types of circuitry may execute one or more software or firmware programs to provide at least some of the described functionality. Such a combination of hardware elements and program code may be referred to as a particular type of circuitry.

It should be understood that the functional units or capabilities described in this specification may have been referred to or labeled as components or modules, in order to more particularly emphasize their implementation independence. Such components may be embodied by any number of software or hardware forms. For example, a component or module may be implemented as a hardware circuit comprising custom very-large-scale integration (VLSI) circuits or gate arrays, off-the-shelf semiconductors such as logic chips, transistors, or other discrete components. A component or module may also be implemented in programmable hardware devices such as field programmable gate arrays, programmable array logic, programmable logic devices, or the like. Components or modules may also be implemented in software for execution by various types of processors. An identified component or module of executable code may, for instance, comprise one or more physical or logical blocks of computer instructions, which may, for instance, be organized as an object, procedure, or function. Nevertheless, the executables of an identified component or module need not be physically located together but may comprise disparate instructions stored in different locations which, when joined logically together, comprise the component or module and achieve the stated purpose for the component or module.

Indeed, a component or module of executable code may be a single instruction, or many instructions, and may even be distributed over several different code segments, among different programs, and across several memory devices or processing systems. In particular, some aspects of the described process (such as code rewriting and code analysis) may take place on a different processing system (e.g., in a computer in a data center) than that in which the code is deployed (e.g., in a computer embedded in a sensor or robot). Similarly, operational data may be identified and illustrated herein within components or modules and may be embodied in any suitable form and organized within any suitable type of data structure. The operational data may be collected as a single data set or may be distributed over different locations including over different storage devices, and may exist, at least partially, merely as electronic signals on a system or network. The components or modules may be passive or active, including agents operable to perform desired functions.

The term "processor circuitry" as used herein refers to, is part of, or includes circuitry capable of sequentially and automatically carrying out a sequence of arithmetic or logical operations, or recording, storing, and/or transferring digital data. The term "processor circuitry" may refer to one or more application processors, one or more baseband processors, a physical CPU, a single-core processor, a dual-core processor, a triple-core processor, a quad-core processor, and/or any other device capable of executing or otherwise operating computer-executable instructions, such as program code, software modules, and/or functional processes. The terms "application circuitry" and/or "baseband circuitry" may be considered synonymous to, and may be referred to as, "processor circuitry."

The term "memory" and/or "memory circuitry" as used herein refers to one or more hardware devices for storing data, including RAM, MRAM, PRAM, DRAM, and/or SDRAM, core memory, ROM, magnetic disk storage mediums, optical storage mediums, flash memory devices or other machine readable mediums for storing data. The term "computer-readable medium" may include, but is not limited to, memory, portable or fixed storage devices, optical storage devices, and various other mediums capable of storing, containing or carrying instructions or data.

The term "interface circuitry" as used herein refers to, is part of, or includes circuitry that enables the exchange of information between two or more components or devices. The term "interface circuitry" may refer to one or more hardware interfaces, for example, buses, I/O interfaces, peripheral component interfaces, network interface cards, and/or the like.

The term "element" refers to a unit that is indivisible at a given level of abstraction and has a clearly defined boundary, wherein an element may be any type of entity including, for example, one or more devices, systems, controllers, network elements, modules, etc., or combinations thereof. The term "device" refers to a physical entity embedded inside, or attached to, another physical entity in its vicinity, with capabilities to convey digital information from or to that physical entity. The term "entity" refers to a distinct component of an architecture or device, or information transferred as a payload. The term "controller" refers to an element or entity that has the capability to affect a physical entity, such as by changing its state or causing the physical entity to move.

As used herein, the term "edge computing" encompasses many implementations of distributed computing that move processing activities and resources (e.g., compute, storage, acceleration resources) towards the "edge" of the network, in an effort to reduce latency and increase throughput for endpoint users (client devices, user equipment, etc.). Such edge computing implementations typically involve the offering of such activities and resources in cloud-like services, functions, applications, and subsystems, from one or multiple locations accessible via wireless networks. Thus, the references to an "edge" of a network, cluster, domain, system or computing arrangement used herein are groups or groupings of functional distributed compute elements and, therefore, generally unrelated to "edges" (links or connections) as used in graph theory. Specific arrangements of edge computing applications and services accessible via mobile wireless networks (e.g., cellular and WiFi data networks) may be referred to as "mobile edge computing" or "multi-access edge computing", which may be referenced by the acronym "MEC". The usage of "MEC" herein may also refer to a standardized implementation promulgated by the European Telecommunications Standards Institute (ETSI), referred to as "ETSI MEC". Terminology that is used by the ETSI MEC specification is generally incorporated herein by reference, unless a conflicting definition or usage is provided herein.

As used herein, the term "compute node" or "compute device" refers to an identifiable entity implementing an aspect of edge computing operations, whether part of a larger system, distributed collection of systems, or a standalone apparatus. In some examples, a compute node may be referred to as a "edge node", "edge device", "edge system", whether in operation as a client, server, or intermediate entity. Specific implementations of a compute node may be incorporated into a server, base station, gateway, road side unit, on premise unit, UE or end consuming device, or the like.

The term "computer system" as used herein refers to any type interconnected electronic devices, computer devices, or components thereof. Additionally, the term "computer system" and/or "system" may refer to various components of a computer that are communicatively coupled with one another. Furthermore, the term "computer system" and/or "system" may refer to multiple computer devices and/or multiple computing systems that are communicatively coupled with one another and configured to share computing and/or networking resources.

The term "architecture" as used herein refers to a computer architecture or a network architecture. A "network architecture" is a physical and logical design or arrangement of software and/or hardware elements in a network including communication protocols, interfaces, and media transmission. A "computer architecture" is a physical and logical design or arrangement of software and/or hardware elements in a computing system or platform including technology standards for interacts therebetween.

The term "appliance," "computer appliance," or the like, as used herein refers to a computer device or computer system with program code (e.g., software or firmware) that is specifically designed to provide a specific computing resource. A "virtual appliance" is a virtual machine image to be implemented by a hypervisor-equipped device that virtualizes or emulates a computer appliance or otherwise is dedicated to provide a specific computing resource.

The term "user equipment" or "UE" as used herein refers to a device with radio communication capabilities and may describe a remote user of network resources in a communications network. The term "user equipment" or "UE" may be considered synonymous to, and may be referred to as, client, mobile, mobile device, mobile terminal, user terminal, mobile unit, station, mobile station, mobile user, subscriber, user, remote station, access agent, user agent, receiver, radio equipment, reconfigurable radio equipment, reconfigurable mobile device, etc. Furthermore, the term "user equipment" or "UE" may include any type of wireless/wired device or any computing device including a wireless communications interface. The term "station" or "STA" refers to a logical entity that is a singly addressable instance of a medium access control (MAC) and physical layer (PHY) interface to the wireless medium (WM). The term "wireless medium" or WM" refers to the medium used to implement the transfer of protocol data units (PDUs) between peer physical layer (PHY) entities of a wireless local area network (LAN).

The term "network element" as used herein refers to physical or virtualized equipment and/or infrastructure used to provide wired or wireless communication network services. The term "network element" may be considered synonymous to and/or referred to as a networked computer, networking hardware, network equipment, network node, router, switch, hub, bridge, radio network controller, RAN device, RAN node, gateway, server, virtualized VNF, NFVI, and/or the like.

As used herein, the term "access point" or "AP" refers to an entity that contains one station (STA) and provides access to the distribution services, via the wireless medium (WM) for associated STAs. An AP comprises a STA and a distribution system access function (DSAF). As used herein, the term "base station" refers to a network element in a radio access network (RAN), such as a fourth-generation (4G) or fifth-generation (5G) mobile communications network which is responsible for the transmission and reception of radio signals in one or more cells to or from a user equipment (UE). A base station can have an integrated antenna or may be connected to an antenna array by feeder cables. A base station uses specialized digital signal processing and network function hardware. In some examples, the base station may be split into multiple functional blocks operating in software for flexibility, cost, and performance. In some examples, a base station can include an evolved node-B (eNB) or a next generation node-B (gNB). In some examples, the base station may operate or include compute hardware to operate as a compute node. However, in many of the scenarios discussed herein, a RAN base station may be substituted with an access point (e.g., wireless network access point) or other network access hardware.

As used herein, the term "central office" (or CO) indicates an aggregation point for telecommunications infrastructure within an accessible or defined geographical area, often where telecommunication service providers have traditionally located switching equipment for one or multiple types of access networks. The CO can be physically designed to house telecommunications infrastructure equipment or compute, data storage, and network resources. The CO need not, however, be a designated location by a telecommunications service provider. The CO may host any number of compute devices for edge applications and services, or even local implementations of cloud-like services.

The term "cloud computing" or "cloud" refers to a paradigm for enabling network access to a scalable and elastic pool of shareable computing resources with self-service provisioning and administration on-demand and without active management by users. Cloud computing provides cloud computing services (or cloud services), which are one or more capabilities offered via cloud computing that are invoked using a defined interface (e.g., an API or the like). The term "computing resource" or simply "resource" refers to any physical or virtual component, or usage of such components, of limited availability within a computer system or network. Examples of computing resources include usage/access to, for a period of time, servers, processor(s), storage equipment, memory devices, memory areas, networks, electrical power, input/output (peripheral) devices, mechanical devices, network connections (e.g., channels/links, ports, network sockets, etc.), operating systems, virtual machines (VMs), software/applications, computer files, and/or the like. A "hardware resource" may refer to compute, storage, and/or network resources provided by physical hardware element(s). A "virtualized resource" may refer to compute, storage, and/or network resources provided by virtualization infrastructure to an application, device, system, etc. The term "network resource" or "communication resource" may refer to resources that are accessible by computer devices/systems via a communications network. The term "system resources" may refer to any kind of shared entities to provide services, and may include computing and/or network resources. System resources may be considered as a set of coherent functions, network data objects or services, accessible through a server where such system resources reside on a single host or multiple hosts and are clearly identifiable.

The term "workload" refers to an amount of work performed by a computing system, device, entity, etc., during a period of time or at a particular instant of time. A workload may be represented as a benchmark, such as a response time, throughput (e.g., how much work is accomplished over a period of time), and/or the like. Additionally or alternatively, the workload may be represented as a memory workload (e.g., an amount of memory space needed for program execution to store temporary or permanent data and to perform intermediate computations), processor workload (e.g., a number of instructions being executed by a processor during a given period of time or at a particular time instant), an I/O workload (e.g., a number of inputs and outputs or system accesses during a given period of time or at a particular time instant), database workloads (e.g., a number of database queries during a period of time), a network-related workload (e.g., a number of network attachments, a number of mobility updates, a number of radio link failures, a number of handovers, an amount of data to be transferred over an air interface, etc.), and/or the like. Various algorithms may be used to determine a workload and/or workload characteristics, which may be based on any of the aforementioned workload types.

As used herein, the term "cloud service provider" (or CSP) indicates an organization which operates typically large-scale "cloud" resources comprised of centralized, regional, and edge data centers (e.g., as used in the context of the public cloud). In other examples, a CSP may also be referred to as a Cloud Service Operator (CSO). References to "cloud computing" generally refer to computing resources and services offered by a CSP or a CSO, at remote locations with at least some increased latency, distance, or constraints relative to edge computing.

As used herein, the term "data center" refers to a purpose-designed structure that is intended to house multiple high-performance compute and data storage nodes such that a large amount of compute, data storage and network resources are present at a single location. This often entails specialized rack and enclosure systems, suitable heating, cooling, ventilation, security, fire suppression, and power delivery systems. The term may also refer to a compute and data storage node in some contexts. A data center may vary in scale between a centralized or cloud data center (e.g., largest), regional data center, and edge data center (e.g., smallest).

As used herein, the term "access edge layer" indicates the sub-layer of infrastructure edge closest to the end user or device. For example, such layer may be fulfilled by an edge data center deployed at a cellular network site. The access edge layer functions as the front line of the infrastructure edge and may connect to an aggregation edge layer higher in the hierarchy.

As used herein, the term "aggregation edge layer" indicates the layer of infrastructure edge one hop away from the access edge layer. This layer can exist as either a medium-scale data center in a single location or may be formed from multiple interconnected micro data centers to form a hierarchical topology with the access edge to allow for greater collaboration, workload failover, and scalability than access edge alone.

As used herein, the term "network function virtualization" (or NFV) indicates the migration of NFs from embedded services inside proprietary hardware appliances to software-based virtualized NFs (or VNFs) running on standardized CPUs (e.g., within standard x86^{®} and ARM^{®} servers, such as those including Intel^{®} Xeon^{™} or AMD^{®} Epyc^{™} or Opteron^{™} processors) using industry standard virtualization and cloud computing technologies. In some aspects, NFV processing and data storage will occur at the edge data centers that are connected directly to the local cellular site, within the infrastructure edge.

As used herein, the term "virtualized NF" (or VNF) indicates a software-based NF operating on multi-function, multi-purpose compute resources (e.g., x86, ARM processing architecture) which are used by NFV in place of dedicated physical equipment. In some aspects, several VNFs will operate on an edge data center at the infrastructure edge.

As used herein, the term "edge computing" refers to the implementation, coordination, and use of computing and resources at locations closer to the "edge" or collection of "edges" of a network. Deploying computing resources at the network's edge may reduce application and network latency, reduce network backhaul traffic and associated energy consumption, improve service capabilities, improve compliance with security or data privacy requirements (especially as compared to conventional cloud computing), and improve total cost of ownership). As used herein, the term "edge compute node" refers to a real-world, logical, or virtualized implementation of a compute-capable element in the form of a device, gateway, bridge, system or subsystem, component, whether operating in a server, client, endpoint, IoT device, or peer mode, and whether located at an "edge" of an network or at a connected location further within the network. References to a "node" used herein are generally interchangeable with a "device", "component", and "sub-system"; however, references to an "edge computing system" or "edge computing network" generally refer to a distributed architecture, organization, or collection of multiple nodes and devices, and which is organized to accomplish or offer some aspect of services or resources in an edge computing setting.

The term "Internet of Things" or "IoT" refers to a system of interrelated computing devices, mechanical and digital machines capable of transferring data with little or no human interaction, and may involve technologies such as real-time analytics, machine learning and/or AI, embedded systems, wireless sensor networks, control systems, automation (e.g., smarthome, smart building and/or smart city technologies), and the like. IoT devices are usually low-power devices without heavy compute or storage capabilities. "Edge IoT devices" may be any kind of IoT devices deployed at a network's edge.

As used herein, the term "cluster" refers to a set or grouping of entities as part of an edge computing system (or systems), in the form of physical entities (e.g., different computing systems, networks or network groups), logical entities (e.g., applications, functions, security constructs, containers), and the like. In some locations, a "cluster" is also referred to as a "group" or a "domain". The membership of cluster may be modified or affected based on conditions or functions, including from dynamic or property-based membership, from network or system management scenarios, or from various example techniques discussed below which may add, modify, or remove an entity in a cluster. Clusters may also include or be associated with multiple layers, levels, or properties, including variations in security features and results based on such layers, levels, or properties.

As used herein, the term "radio technology" refers to technology for wireless transmission and/or reception of electromagnetic radiation for information transfer. The term "radio access technology" or "RAT" refers to the technology used for the underlying physical connection to a radio based communication network. The term "V2X" refers to vehicle to vehicle (V2V), vehicle to infrastructure (V2I), infrastructure to vehicle (I2V), vehicle to network (V2N), and/or network to vehicle (N2V) communications and associated radio access technologies.

As used herein, the term "communication protocol" (either wired or wireless) refers to a set of standardized rules or instructions implemented by a communication device and/or system to communicate with other devices and/or systems, including instructions for packetizing/depacketizing data, modulating/demodulating signals, implementation of protocols stacks, and/or the like.

The term "channel" as used herein refers to any transmission medium, either tangible or intangible, which is used to communicate data or a data stream. The term "channel" may be synonymous with and/or equivalent to "communications channel," "data communications channel," "transmission channel," "data transmission channel," "access channel," "data access channel," "link," "data link," "carrier," "radiofrequency carrier," and/or any other like term denoting a pathway or medium through which data is communicated. Additionally, the term "link" as used herein refers to a connection between two devices through a RAT for the purpose of transmitting and receiving information.

The terms "instantiate," "instantiation," and the like as used herein refers to the creation of an instance. An "instance" also refers to a concrete occurrence of an object, which may occur, for example, during execution of program code. The term "information element" refers to a structural element containing one or more fields. The term "field" refers to individual contents of an information element, or a data element that contains content. The term "database object", "data structure", or the like may refer to any representation of information that is in the form of an object, attribute-value pair (AVP), key-value pair (KVP), tuple, etc., and may include variables, data structures, functions, methods, classes, database records, database fields, database entities, associations between data and/or database entities (also referred to as a "relation"), blocks and links between blocks in block chain implementations, and/or the like. The term "data element" or "DE" refers to a data type that contains one single data. The term "data frame" or "DF" refers to a data type that contains more than one data element in a predefined order.

As used herein, the term "reliability" refers to the ability of a computer-related component (e.g., software, hardware, or network element/entity) to consistently perform a desired function and/or operate according to a specification. Reliability in the context of network communications (e.g., "network reliability") may refer to the ability of a network to carry out communication. Network reliability may also be (or be a measure of) the probability of delivering a specified amount of data from a source to a destination (or sink).

The term "application" may refer to a complete and deployable package, environment to achieve a certain function in an operational environment. The term "AI/ML application" or the like may be an application that contains some AI/ML models and application-level descriptions. The term "machine learning" or "ML" refers to the use of computer systems implementing algorithms and/or statistical models to perform specific task(s) without using explicit instructions, but instead relying on patterns and inferences. ML algorithms build or estimate mathematical model(s) (referred to as "ML models" or the like) based on sample data (referred to as "training data," "model training information," or the like) in order to make predictions or decisions without being explicitly programmed to perform such tasks. Generally, an ML algorithm is a computer program that learns from experience with respect to some task and some performance measure, and an ML model may be any object or data structure created after an ML algorithm is trained with one or more training datasets. After training, an ML model may be used to make predictions on new datasets. Although the term "ML algorithm" refers to different concepts than the term "ML model," these terms as discussed herein may be used interchangeably for the purposes of the present disclosure.

The term "session" refers to a temporary and interactive information interchange between two or more communicating devices, two or more application instances, between a computer and user, or between any two or more entities or elements.

The term "ego ITS-S" refers to an ITS-S that is under consideration, the term "ego vehicle" refers to a vehicle embedding an ITS-S being considered, and the term "neighbors" refers to other ITS-Ss different than the ego ITS-S and ego vehicle.

Although many of the previous examples are provided with use of specific cellular / mobile network terminology, including with the use of 4G/5G 3GPP network components (or expected terahertz-based 6G/6G+ technologies), it will be understood these examples may be applied to many other deployments of wide area and local wireless networks, as well as the integration of wired networks (including optical networks and associated fibers, transceivers, etc.).

Although these implementations have been described with reference to specific exemplary aspects, it will be evident that various modifications and changes may be made to these aspects without departing from the broader scope of the present disclosure. Many of the arrangements and processes described herein can be used in combination or in parallel implementations to provide greater bandwidth/throughput and to support edge services selections that can be made available to the edge systems being serviced. Accordingly, the specification and drawings are to be regarded in an illustrative rather than a restrictive sense. The accompanying drawings that form a part hereof show, by way of illustration, and not of limitation, specific aspects in which the subject matter may be practiced. The aspects illustrated are described in sufficient detail to enable those skilled in the art to practice the teachings disclosed herein. Other aspects may be utilized and derived therefrom, such that structural and logical substitutions and changes may be made without departing from the scope of this disclosure. This Detailed Description, therefore, is not to be taken in a limiting sense, and the scope of various aspects is defined only by the appended claims.

Such aspects of the inventive subject matter may be referred to herein, individually and/or collectively, merely for convenience and without intending to voluntarily limit the scope of this application to any single aspect or inventive concept if more than one is in fact disclosed. Thus, although specific aspects have been illustrated and described herein, it should be appreciated that any arrangement calculated to achieve the same purpose may be substituted for the specific aspects shown. This disclosure is intended to cover any and all adaptations or variations of various aspects. Combinations of the above aspects and other aspects not specifically described herein will be apparent to those of skill in the art upon reviewing the above description.

## Claims

1. A method of operating an Intelligent Transport System Station (ITS-S) to provide Collective Perception Services (CPS), the method comprising:
generating, by a CPS facility in a facilities layer of the ITS-S, a Collective Perception Message (CPM) including a Layered Costmap (LCM) container, the LCM container being a data structure including LCM data, the LCM data indicating cost values of corresponding cells in a layered costmap, the cost values being probabilities that perceived objects are present in the corresponding cells;
inserting one or more layers of an LCM into the LCM container, wherein the one or more layers of the LCM include a static costmap layer, a perceived obstacle costmap layer, an inflation costmap layer, a collective perception layer; and
transmitting or broadcasting, by the CPS facility, the CPM to one or more proximate ITS-Ss that are within a predefined distance from the ITS-S.

2. The method of claim 1, further comprising:
generating the LCM, wherein generating the LCM comprises:
tracking, at each layer of the LCM, data related to a respective functionality or a respective sensor type; and
accumulating the tracked data from the static costmap layer, the perceived obstacle costmap layer, the inflation costmap layer, and the collective perception layer into a master costmap layer, the master costmap layer being a layer of the one or more layers.

3. The method of claim 2, wherein tracking data at the static costmap layer comprises one or more of:
generating or updating an occupancy grid with cost values for one or more perceived objects representing non-moving structures;
generating or updating an occupancy grid with cost values for one or more perceived objects representing moving and non-moving objects;
generating or updating an occupancy grid with cost values for buffer zones around one or more perceived objects; and
generating or updating an occupancy grid with cost values received from the one or more proximate ITS-Ss.

4. The method of claim 3, wherein the one or more layers further comprise a discrepancy handling costmap layer, and tracking data at the discrepancy handling costmap layer comprises:
identifying discrepancies between cost values in occupancy grids of one or more layers of the LCM and corresponding cost values received from the one or more proximate ITS-Ss; and
inserting the discrepancy handling costmap layer into the LCM container when the identified discrepancies of a predetermined number of costmap values is at or above a threshold discrepancy value.

5. The method of claim 4, wherein resolution of the discrepancies is based on majority voting among the ITS-S and the one or more proximate ITS-Ss.

6. The method of claims 3-5, wherein the one or more layers further comprises a collaboration request costmap layer, and tracking data at the collaboration request costmap layer comprises:
generating or updating an occupancy grid with confidence levels for each of the one or more perceived objects; and
inserting the collaboration request costmap layer into the LCM container when a predetermined number of cells in the occupancy grid have a confidence level lower than a threshold confidence level.

7. The method of claims 1-6, further comprising:
detecting one or more objects since a previous CPM generation event resulting in change of the perceived obstacle costmap layer and the master costmap layer; and
inserting only the master costmap layer in the LCM container.

8. The method of claims 1-6, further comprising:
detecting one or more objects since a previous CPM generation event resulting in change of the perceived obstacle costmap layer and the master costmap layer; and
inserting the perceived obstacle costmap layer and the master costmap layer in the LCM container.

9. The method of claims 1-6, further comprising:
detecting one or more objects since a previous CPM generation event requiring a buffer zone around the detected one or more objects and resulting in change of the inflation costmap layer and the master costmap layer; and
inserting the inflation costmap layer and the master costmap layer in the LCM container.

10. The method of claims 1-6, further comprising:
inserting the perceived obstacle costmap layer in the LCM container upon expiration of a perceived obstacle costmap layer timer, the perceived obstacle costmap layer timer starting when the perceived obstacle costmap layer was inserted into a previous CPM.

11. The method of claims 1-10, further comprising:
inserting the inflation costmap layer in the LCM container upon expiration of an inflation costmap layer timer, the inflation costmap layer timer starting when the inflation costmap layer was inserted into a previous CPM, wherein inserting the perceived obstacle costmap layer and the inflation costmap layer comprises:
inserting the perceived obstacle costmap layer or the inflation costmap layer directly in the LCM container; or
inserting the perceived obstacle costmap layer or the inflation costmap layer indirectly in the LCM container via updating the master costmap layer.

12. The method of any one of claims 1-11, wherein generating the LCM further comprises:
generating respective costmaps for each layer, the respective costmaps including a shape having dimensions corresponding to a field of view (FoV) of at least one sensor;
dividing the respective costmaps into a plurality of cells; and
generating the CPM to include an area data field (DF) as part of the LCM container, and the dimensions of each cell of the plurality of cells are included in respective grid size data elements (DEs).

13. The method of claim 12, wherein inserting the one or more layers into the LCM container comprises:
inserting a cost value of each cell of each layer into respective DEs of a costmap grid value DF of the LCM container.

14. The method of claims 1-13, wherein generating the CPM comprises:
generating the CPM to include the LCM container when a difference between a current costmap grid area and a previous costmap grid area exceeds a threshold distance, wherein the difference between the current costmap grid area and the previous costmap grid area is based on:
a distance between a current node centerpoint of the current costmap grid area and a node centerpoint of the previous costmap grid area reported in a previously generated CPM;
a difference between a current semi-range lengthof the current costmap grid area and a previous semi-range length of the previous costmap grid area reported in a previously generated CPM, the semi-range length being a radius, half length, or half width of the current and previous costmap grid area; or
a difference between a current semi-range orientationof the current costmap grid area and the semi-range orientation of the previous costmap grid area reported in a previously generated CPM, the semi-range orientation being an orientation of the semi-range length in a coordinate system.

15. One or more computer-readable storage media comprising instructions, wherein execution of the instructions by one or more processors of an Intelligent Transport System Station (ITS-S) is to cause the ITS-S to perform the method of claims 1-14.

## Patentansprüche

1. Verfahren zum Betreiben einer Station eines intelligenten Verkehrssystems (Intelligent Transport System Station, ITS-S), um kollektive Wahrnehmungsdienste (Collective Perception Services, CPS) bereitzustellen, wobei das Verfahren umfasst:
Erzeugen, durch eine CPS-Einrichtung in einer Einrichtungsschicht der ITS-S, einer kollektiven Wahrnehmungsnachricht (Collective Perception Message, CPM), die einen Container einer geschichteten Kostenzuordnung (Layered Costmap container, LCM-Container) beinhalten, wobei der LCM-Container eine Datenstruktur ist, die LCM-Daten beinhaltet, wobei der LCM-Container Kostenwerte von entsprechenden Zellen in einer geschichteten Kostenzuordnung anzeigt, wobei die Kostenwerte Wahrscheinlichkeiten sind, dass wahrgenommene Objekte in den entsprechenden Zellen vorhanden sind;
Einfügen einer oder mehrerer Schichten einer LCM in den LCM-Container, wobei die eine oder mehreren Schichten der LCM eine statische Kostenzuordnungsschicht, eine Kostenzuordnungsschicht eines wahrgenommenen Hindernisses, eine Inflationskostenzuordnungsschicht, eine kollektive Wahrnehmungsschicht beinhalten; und
Übertragen oder Verbreiten, durch die CPS-Einrichtung, der CPM zu einer oder mehreren nahen ITS-Ss, die innerhalb einer vordefinierten Distanz von der ITS-S liegen.

2. Verfahren nach Anspruch 1, das ferner umfasst:
Erzeugen der LCM, wobei das Erzeugen der LCM umfasst:
Verfolgen, auf jeder Schicht der LCM, von Daten, die sich auf eine entsprechende Funktionalität oder einen entsprechenden Sensortyp beziehen; und
Sammeln der verfolgten Daten aus der statischen Kostenzuordnungsschicht, der Kostenzuordnungsschicht eines wahrgenommenen Hindernisses, der Inflationskostenzuordnungsschicht und der kollektiven Wahrnehmungsschicht in einer Master-Kostenzuordnungsschicht, wobei die Master-Kostenzuordnungsschicht eine Schicht der einen oder mehreren Schichten ist.

3. Verfahren nach Anspruch 2, wobei das Verfolgen von Daten in der statischen Kostenzuordnungsschicht eines oder mehrere umfasst von:
Erzeugen oder Aktualisieren eines Belegungsgitters mit den Kostenwerten für ein oder mehrere wahrgenommene Objekte, die unbewegliche Strukturen repräsentieren;
Erzeugen oder Aktualisieren eines Belegungsgitters mit den Kostenwerten für ein oder mehrere wahrgenommene Objekte, die bewegliche und unbewegliche Objekte repräsentieren;
Erzeugen oder Aktualisieren eines Belegungsgitters mit Kostenwerten für Pufferzonen um ein oder mehrere wahrgenommene Objekte; und
Erzeugen oder Aktualisieren eines Belegungsgitters mit Kostenwerten, die von dem einen oder den mehreren nahen ITS-Ss empfangen werden.

4. Verfahren nach Anspruch 3, wobei die eine oder mehreren Schichten ferner eine Kostenzuordnungsschicht für eine Diskrepanzbehandlung umfasst und wobei das Verfolgen von Daten in der Kostenzuordnungsschicht für eine Diskrepanzbehandlung umfasst:
Identifizieren von Diskrepanzen zwischen Kostenwerten in Belegungsgittern von einer oder mehreren Schichten der LCM und entsprechenden Kostenwerten, die von dem einen oder den mehreren nahen ITS-Ss empfangen werden; und
Einfügen der Kostenzuordnungsschicht für eine Diskrepanzbehandlung in den LCM-Container, wenn die identifizierten Diskrepanzen einer vorbestimmten Anzahl von Kostenzuordnungswerten bei oder über dem Schwellenwert des Diskrepanzwertes liegen.

5. Verfahren nach Anspruch 4, wobei die Auflösung der Diskrepanzen auf einer Mehrheitsentscheidung unter der ITS-S und der einen oder den mehrere nahen ITS-Ss beruht.

6. Verfahren nach einem der Ansprüche 3 bis 5, wobei die eine oder mehreren Schichten ferner eine Kostenzuordnungsschicht für eine Kollaborationsanfrage umfassen und wobei das Verfolgen von Daten in der Kostenzuordnungsschicht für eine Kollaborationsanfrage umfasst:
Erzeugen oder Aktualisieren eines Belegungsgitters mit Vertrauensgraden für jedes des einen oder der mehreren wahrgenommenen Objekte; und
Einfügen der Kostenzuordnungsschicht für eine Kollaborationsanfrage in den LCM-Container, wenn eine vorbestimmte Anzahl von Zellen in dem Belegungsgitter einen Vertrauensgrad aufweisen, der niedriger als ein Schwellenwert des Vertrauensgrads ist.

7. Verfahren nach einem der Ansprüche 1 bis 6, das ferner umfasst:
Erkennen eines oder mehrerer Objekte seit einem vorherigen CPM-Erzeugungsereignis, was zu einer Veränderung der Kostenzuordnungsschicht eines wahrgenommenen Hindernisses und der Master-Kostenzuordnungsschicht führt; und
Einfügen nur der Master-Kostenzuordnungsschicht in den LCM-Container.

8. Verfahren nach einem der Ansprüche 1 bis 6, das ferner umfasst:
Erkennen eines oder mehrerer Objekte seit einem vorherigen CPM-Erzeugungsereignis, was zu einer Veränderung der Kostenkartenschicht eines wahrgenommenen Hindernisses und der Master-Kostenkartenschicht führt; und
Einfügen der Kostenzuordnungsschicht eines wahrgenommenen Hindernisses und der Master-Kostenzuordnungsschicht in den LCM-Container.

9. Verfahren nach einem der Ansprüche 1 bis 6, das ferner umfasst:
Erkennen eines oder mehrerer Objekte seit einem vorherigen CPM-Erzeugungsereignis, was eine Pufferzone um das eine oder die mehreren erkannten Objekte erfordert und was zu einer Veränderung der Inflationskostenzuordnungsschicht und der Master-Kostenzuordnungsschicht führt; und
Einfügen der Inflationskostenzuordnungsschicht und der Master-Kostenzuordnungsschicht in den LCM-Container.

10. Verfahren nach einem der Ansprüche 1 bis 6, das ferner umfasst:
Einfügen der Kostenzuordnungsschicht eines wahrgenommenen Hindernisses in den LCM-Container nach dem Ablaufen eines Zeitgebers der Kostenzuordnungsschicht eines wahrgenommenen Hindernisses, wobei der Zeitgeber der Kostenzuordnungsschicht eines wahrgenommenen Hindernisses gestartet wurde, als die Kostenzuordnungsschicht eines wahrgenommenen Hindernisses in eine vorherige CPM eingefügt wurde.

11. Verfahren nach einem der Ansprüche 1 bis 10, das ferner umfasst:
Einfügen der Inflationskostenzuordnungsschicht in den LCM-Container nach dem Ablaufen eines Zeitgebers der Inflationskostenzuordnungsschicht, wobei der Zeitgeber der Inflationskostenzuordnungsschicht gestartet wurde, als die Inflationskostenzuordnungsschicht in eine vorherige CPM eingefügt wurde, wobei das Einfügen der Kostenzuordnungsschicht eines wahrgenommenen Hindernisses und der Inflationskostenzuordnungsschicht umfasst:
Einfügen der Kostenzuordnungsschicht eines wahrgenommenen Hindernisses oder der Inflationskostenzuordnungsschicht direkt in den LCM-Container; oder
indirektes Einfügen der Kostenzuordnungsschicht eines wahrgenommenen Hindernisses oder der Inflationskostenzuordnungsschicht durch ein Aktualisieren der Master-Kostenzuordnungsschicht in den LCM-Container.

12. Verfahren nach einem der Ansprüche 1 bis 11, wobei das Erzeugen der LCM ferner umfasst:
Erzeugen jeweiliger Kostenzuordnungen für jede Schicht, wobei die jeweiligen Kostenzuordnungen eine Form beinhalten, die Dimensionen aufweist, die einem Sichtfeld (Field of View, FoV) von mindestens einem Sensor entsprechen;
Teilen der jeweiligen Kostenzuordnungen in eine Vielzahl von Zellen; und
Erzeugen der CPM, damit sie einen Datenfeldbereich (DF) als Teil des LCM-Containers beinhaltet und wobei die Dimensionen von jeder Zelle aus der Vielzahl von Zellen in entsprechenden Gittergrößendatenelementen (Gittergrößen-DEs) enthalten sind.

13. Verfahren nach Anspruch 12, wobei das Einfügen der einen oder mehreren Schichten in den LCM-Container umfasst:
Einfügen eines Kostenwerts von jeder Zelle von jeder Schicht in die jeweiligen DEs eines DF eines Kostenzuordnungsgitterwerts des LCM-Containers.

14. Verfahren nach einem der Ansprüche 1 bis 13, wobei das Erzeugen der CPM umfasst:
Erzeugen der CPM, damit sie den LCM-Container beinhaltet, wenn eine Differenz zwischen einem Bereich eines aktuellen Kostenzuordnungsgitters eine Schwellenwertdistanz überschreitet, wobei die Differenz zwischen dem Bereich des aktuellen Kostenzuordnungsgitters und dem Bereich des vorherigen Kostenzuordnungsgitters basiert auf:
einer Distanz zwischen einem aktuellen Knotenmittelpunkt des Bereichs des aktuellen Kostenzuordnungsgitters und einem Knotenmittelpunkt des Bereichs des vorherigen Kostenzuordnungsgitters, der in einer früher erzeugten CPM berichtet wurde;
eine Differenz zwischen einer aktuellen Halbbereichslänge des Bereichs des aktuellen Kostenzuordnungsgitters und einer vorherigen Halbbereichslänge des Bereichs des vorherigen Kostenzuordnungsgitters, der in einer früher erzeugten CPM berichtet wurde, wobei die Halbbereichslänge ein Radius, eine halbe Länge oder eine halbe Breite der Bereiche des aktuellen und des vorherigen Kostenzuordnungsgitters ist; oder
eine Differenz zwischen einer aktuellen Halbbereichsorientierung des Bereichs des aktuellen Kostenzuordnungsgitters und einer vorherigen Halbbereichsorientierung des Bereichs des vorherigen Kostenzuordnungsgitters, der in einer früher erzeugten CPM berichtet wurde, wobei die Halbbereichsorientierung eine Orientierung der Halbbereichslänge in einem Koordinatensystem ist.

15. Ein oder mehrere computerlesbare Speichermedien, die Anweisungen umfassen, wobei die Ausführung der Anweisungen durch einen oder mehrere Prozessoren einer Station eines intelligenten Verkehrssystems (ITS-S) veranlasst, dass die ITS-S das Verfahren nach einem der Ansprüche 1 bis 14 durchführt.

## Revendications

1. Procédé d'exploitation d'une Station de Système de Transport Intelligent (ITS-S) pour fournir des Service de Perception Collective (CPS), le procédé comprenant :
la génération, par une installation CPS dans une couche d'installations de l'ITS-S, d'un Message de Perception Collective (CPM) incluant un conteneur de Cartographie de Coûts à Couches (LCM), le conteneur de LCM étant une structure de données incluant des données de LCM, les données de LCM indiquant des valeurs de coûts de cellules correspondantes dans une cartographie de coûts à couches, les valeurs de coûts étant des probabilités que des objets perçus soient présents dans les cellules correspondantes ;
l'insertion d'une ou plusieurs couches d'une LCM dans le conteneur de LCM, la ou les couches de LCM incluant une couche de cartographie de coûts statique, une couche de cartographie de coûts d'obstacle perçu, une couche de cartographie de coûts d'inflation, une couche de perception collective ; et
la transmission ou la diffusion, par l'installation CPS, du CPM à une ou plusieurs ITS-S qui se trouvent à une distance prédéfinie de l'ITS-S.

2. Procédé selon la revendication 1, comprenant en outre :
la génération de la LCM, laquelle génération de la LCM comprenant :
le suivi, au niveau de chaque couche de la LCM, de données relatives à une fonctionnalité respective ou un type de capteur respectif ; et
l'accumulation des données suivies à partir de la couche de cartographie de coûts statique, de la couche de cartographie de coûts d'obstacle perçu, de la couche de cartographie de coûts d'inflation et de la couche de perception collective dans une couche de cartographie de coûts maîtresse, la couche de cartographie de coûts maîtresse étant une couche de la ou les couches.

3. Procédé selon la revendication 2, dans lequel le suivi des données de suivi au niveau de la couche de cartographie de coûts statique comprend une ou plusieurs des opérations suivantes :
génération ou mise à jour d'une grille d'occupation ayant des valeurs de coûts pour un ou plusieurs objets perçus représentant des structures non mobiles ;
génération ou mise à jour d'une grille d'occupation ayant des valeurs de coûts pour un ou plusieurs objets perçus représentant des structures mobiles et non mobiles ;
génération ou mise à jour d'une grille d'occupation ayant des valeurs de coûts pour des zones tampons autour d'un ou plusieurs objets perçus ; et
génération ou mise à jour d'une grille d'occupation ayant des valeurs de coûts reçues de la ou des ITS-S à proximité.

4. Procédé selon la revendication 3, dans lequel la ou les couches comprennent en outre une couche de cartographie des coûts de traitement des divergences, et le suivi des données au niveau de la couche de cartographie des coûts de traitement des divergences comprend :
l'identification de divergences entre les valeurs de coûts dans des grilles d'occupation d'une ou plusieurs couches de la LCM et des valeurs de coûts correspondantes reçues de la ou les ITS-S à proximité ; et
l'insertion de la couche de cartographie de coûts de traitement des divergences dans le conteneur de LCM lorsque les divergences identifiées d'un nombre prédéterminé de valeurs de cartographie de coûts est au niveau ou au-dessus d'une valeur de divergence seuil.

5. Procédé selon la revendication 4, dans lequel la résolution des divergences est basée sur un vote majoritaire entre l'ITS-S et la ou les ITS-S à proximité.

6. Procédé selon les revendications 3 à 5, dans lequel la ou les couches comprennent en outre une couche de cartographie des coûts de demande de collaboration, et le suivi des données au niveau de la couche de cartographie des coûts de demande de collaboration comprend :
la génération ou la mise à jour d'une grille d'occupation avec des niveaux de confiance pour chacun du ou des objets perçus ; et
l'insertion de la couche de cartographie des coûts de demande de collaboration dans le conteneur de LCM lorsqu'un nombre prédéterminé de cellules dans la grille d'occupation a un niveau de confiance inférieur à un niveau de confiance seuil.

7. Procédé selon les revendications 1 à 6, comprenant en outre :
la détection d'un ou plusieurs objets depuis un événement de génération de CPM précédent entraînant une modification de la couche de cartographie des coûts d'obstacle perçu et de la couche de cartographie des coûts maîtresse ; et
l'insertion d'uniquement la carte de cartographie de coûts maîtresse dans le conteneur de LCM.

8. Procédé selon les revendications 1 à 6, comprenant en outre :
la détection d'un ou plusieurs objets depuis un événement de génération de CPM précédent entraînant une modification de la couche de cartographie des coûts d'obstacle perçu et de la couche de cartographie des coûts maîtresse ; et
l'insertion de la couche de cartographie de coûts d'obstacle perçu et de la couche de cartographie de coûts maîtresse dans le conteneur de LCM.

9. Procédé selon les revendications 1 à 6, comprenant en outre :
la détection d'un ou plusieurs objets depuis un événement de génération de CPM précédent nécessitant une zone tampon autour du ou des objets détectés et entraînant une modification de la couche de cartographie des coûts d'inflation et de la couche de cartographie des coûts maîtresse ; et
l'insertion de la couche de cartographie de coûts d'inflation et de la couche de cartographie de coûts maîtresse dans le conteneur de LCM.

10. Procédé selon les revendications 1 à 6, comprenant en outre :
l'insertion de la couche de cartographie de coûts d'obstacle perçu dans le conteneur de LCM à l'expiration d'un minuteur de couche de cartographie de coûts d'obstacle perçu, le minuteur de couche de cartographie de coûts d'obstacle perçu ayant démarré au moment de l'insertion de la couche de cartographie de coûts d'obstacle perçu dans un CPM précédent.

11. Procédé selon les revendications 1 à 10, comprenant en outre :
l'insertion de la couche de cartographie de coûts d'inflation dans le conteneur de LCM à l'expiration d'un minuteur de couche de cartographie de coûts d'inflation, le minuteur de couche de cartographie de coûts d'inflation ayant démarré au moment de l'insertion de la couche de cartographie de coûts d'inflation dans un CPM précédent, l'insertion de la couche de cartographie de coûts d'obstacle perçu et de la couche de cartographie de coûts d'inflation comprenant :
l'insertion de la couche de cartographie de coûts d'obstacle perçu ou de la couche de cartographie de coûts d'inflation directement dans le conteneur de LCM ; ou
l'insertion de la couche de cartographie de coûts d'obstacle perçu ou de la couche de cartographie de coûts d'inflation indirectement dans le conteneur de LCM, via une mise à jour de la couche de carte de coûts maîtresse.

12. Procédé selon l'une quelconque des revendications 1 à 11, dans lequel la génération de la LCM comprend en outre :
la génération de cartographies de coûts respectives pour chaque couche, les cartographies de coûts respectives incluant une forme ayant des dimensions correspondant à un champ de vision (FoV) d'au moins un capteur ;
la subdivision des cartographies de coûts respectives en une pluralité de cellules ; et
la génération du CPM en y incluant un champ de données de zone (DF) en tant que partie du conteneur de LCM, les dimensions de chaque cellule de la pluralité de cellules étant incluses dans les éléments de données (DE) de taille de grille respectifs.

13. Procédé selon la revendication 12, dans lequel l'insertion de la ou des couches dans le conteneur de LCM comprend :
l'insertion d'une valeur de coût de chaque cellule de chaque couche dans des DE respectifs d'un DF de valeur de grille de cartographie de coûts du conteneur de LCM.

14. Procédé selon les revendications 1 à 13, dans lequel la génération du CPM comprend :
la génération du CPM en y incluant le conteneur de LCM lorsqu'une différence entre une zone de grille de cartographie de coûts en cours et une zone de grille de cartographie de coûts précédente excède une distance seuil, la différence entre la zone de grille de cartographie de coûts en cours et la zone de grille de cartographie de coûts précédente étant basée sur :
une distance entre un point central de noeud en cours de la zone de grille de cartographie de coûts en cours et un point central de noeud de la zone de grille de cartographie de coûts précédente dans un CPM précédemment généré ;
une différence entre une longueur à mi-portée en cours de la zone de grille de cartographie de coûts en cours et une longueur à mi-portée de la grille de cartographie de coûts précédente indiquée dans un CPM précédemment généré, la longueur à mi-portée étant un rayon, une demilongueur ou une demi-largeur de la grille de cartographie de coûts en cours et précédente ; ou
une différence entre une orientation à mi-portée en cours de la zone de grille de cartographie de coûts en cours et l'orientation à mi-portée de la grille de cartographie de coûts précédente indiquée dans un CPM précédemment généré, l'orientation à mi-portée étant une orientation de la longueur à mi-portée dans le système de coordonnées.

15. Un ou plusieurs supports de stockage lisibles par ordinateur comprenant des instructions qui, lorsqu'elles sont exécutées par un ou plusieurs processeurs d'une Station de Système de Transport Intelligent (ITS-S) amènent l'ITS-S à exécuter le procédé selon les revendications 1 à 14.
